# EUROPEAN PATENT APPLICATION

(11) **EP 4 354 835 A1**
(43) Date of publication of application: **17.04.2024**
(21) Application number: 22845270.2
(22) Date of filing: 18.07.2022
(51) Int. Cl.: H04M 1/02

(54) **FOLDING MECHANISM AND ELECTRONIC DEVICE**

(30) Priority: 21.07.2021 CN 202110826550
(71) Applicant: Huawei Technologies Co., Ltd., Shenzhen, Guangdong 518129 (CN)
(72) Inventor: XU, Zhengyi, Shenzhen, Guangdong 518129 (CN); NIU, Linhui, Shenzhen, Guangdong 518129 (CN); GUAN, Chenghao, Shenzhen, Guangdong 518129 (CN); GONG, Zekun, Shenzhen, Guangdong 518129 (CN)
(74) Representative: Epping - Hermann - Fischer
(86) International application number: PCT/CN2022/106262
(87) International publication number: WO 2023/001105

(57) **Abstract**

This application discloses a folding mechanism and an electronic device. The folding mechanism includes a main shaft assembly, a first connecting arm, a first pin shaft, a first gear, a first fitting part, a second fitting part, a third fitting part, and a first elastic part. In a process of unfolding or folding the electronic device, the first elastic part may deform, and the first elastic part may squeeze the first fitting part. The first fitting part may apply action force to the first gear. In this way, friction force between the first gear and the first fitting part may be increased to a large extent. A speed at which the first gear rotates relative to the main shaft assembly becomes lower, a speed at which the first connecting arm rotates relative to the main shaft assembly becomes lower, and a speed at which the first housing rotates relative to the main shaft assembly becomes lower. Therefore, the folding mechanism can reduce a rotation speed of the first housing, to protect a flexible display of the electronic device and improve reliability thereof.

## Description

This application claims priority to Chinese Patent Application No. 202110826550.9, filed with the China National Intellectual Property Administration on July 21, 2021 and entitled "FOLDING MECHANISM AND ELECTRONIC DEVICE", which is incorporated herein by reference in its entirety.

### TECHNICAL FIELD

This application relates to the field of foldable electronic product technologies, and in particular, to a folding mechanism and an electronic device.

### BACKGROUND

Foldable mobile phones are becoming more popular among users for their large display areas in an unfolded state and miniaturization in a folded state. A conventional foldable mobile phone includes a flexible display, a first housing, a second housing, and a folding mechanism. The first housing and the second housing are used to carry the flexible display. The folding mechanism is connected between the first housing and the second housing. The folding mechanism is configured to unfold or fold the first housing and the second housing relative to each other, so that the flexible display is unfolded or folded. However, in a conventional folding mechanism, a flexible display is prone to damage due to user misoperations of unfolding or folding a first housing and a second housing quickly in a folding or unfolding process.

### SUMMARY

This application provides a folding mechanism and an electronic device. The folding mechanism may be applied to a folding apparatus of an electronic device. The electronic device may further include a flexible display mounted on the folding apparatus. In a process of unfolding or folding the folding mechanism, a speed of folding or unfolding a first housing and a second housing can be reduced, to protect the flexible display and improve reliability thereof, so that the flexible display and the electronic device have long service lives.

According to a first aspect, this application provides an electronic device. The electronic device includes a folding mechanism, a first housing, and a second housing. The folding mechanism is connected between the first housing and the second housing. The folding mechanism includes a main shaft assembly, a first connecting arm, a first pin shaft, a first gear, a first fitting part, a second fitting part, a third fitting part, and a first elastic part. The first connecting arm includes a sliding end and a rotation end. The sliding end of the first connecting arm is slidably connected to the first housing. The rotation end of the first connecting arm is rotatably connected to the main shaft assembly.

The first pin shaft is rotatably connected to the main shaft assembly. The first gear and the third fitting part are fixedly connected to the first pin shaft, and are spaced from each other. The first gear is engaged with the rotation end of the first connecting arm. The first fitting part and the second fitting part are located between the first gear and the third fitting part, and are both slidably connected to the first pin shaft. The first fitting part and the first gear form a cam structure. The second fitting part and the third fitting part form a cam structure. One end of the first elastic part abuts against the first fitting part, and the other end of the first elastic part abuts against the second fitting part. The first elastic part is in a compressed state.

In a folding or unfolding process of the electronic device, the first fitting part and the second fitting part slide relative to the first pin shaft, and a sliding direction of the first fitting part is opposite to a sliding direction of the second fitting part.

It may be understood that in the process of unfolding or folding the electronic device, the first elastic part may deform, and the first elastic part may squeeze the first fitting part. The first fitting part may apply action force to the first gear. In this way, friction force between the first gear and the first fitting part may be increased to a large extent. A speed at which the first gear rotates relative to the main shaft assembly becomes lower, a speed at which the first connecting arm rotates relative to the main shaft assembly becomes lower, and a speed at which the first housing rotates relative to the main shaft assembly becomes lower. Therefore, in a process in which the electronic device is unfolded to enter an open state and in a process in which the electronic device is folded to release the open state, specific resistance is provided, so that a user can experience a better sense of operation of the mechanism.

In addition, in the process of unfolding or folding the electronic device, the first elastic part may generate a first deformation amount a under fitting of the first gear and the first fitting part, and may generate a second deformation amount under fitting of the third fitting part and the second fitting part. In this way, in the process of unfolding or folding the electronic device, the first elastic part may generate two superimposed deformation amounts at a time, that is, a total deformation amount is a+b, and the first elastic part may generate a large deformation amount at a time.

In addition, no cam structure needs to be formed between two end parts of the rotation end of the first connecting arm and another component, to implement that the first elastic part generates the total deformation amount a+b at a time. In this way, a bump group does not need to be disposed at the two end parts of the rotation end of the first connecting arm, so that a length of the rotation end of the first connecting arm may be miniaturized. When the rotation end of the first connecting arm is rotatably connected to the main shaft assembly, a size of the main shaft assembly in a Y-axis direction may also be miniaturized. Especially, for a folding mechanism with a complex structure, large space is occupied. In this case, if structures of some parts of the folding mechanism can be miniaturized, arrangement of the folding mechanism in limited space is facilitated, and a miniaturization design of the electronic device is also facilitated.

In addition, in the unfolding or folding process of the electronic device, the first gear is fixedly connected to the first pin shaft. A position of the first gear relative to the first pin shaft is fixed. In this way, compared with a solution in which the first gear slides relative to the first pin shaft, this implementation achieves better stability of the first gear, and helps improve stability of the folding mechanism.

In an implementation, the second fitting part includes a second bump. The third fitting part includes a third bump. That the second fitting part and the third fitting part form a cam structure includes: The second fitting part and the third fitting part form the cam structure by using the second bump and the third bump.

It may be understood that the second fitting part and the third fitting part form a cam structure by using the second bump and the third bump. In this way, structures of the second fitting part and the third fitting part are simple, thereby simplifying a structure of the folding mechanism.

In an implementation, in the process of folding or unfolding the electronic device, the rotation end of the first connecting arm, the first gear, the third fitting part, and the first pin shaft all rotate relative to the main shaft assembly.

In an implementation, the third fitting part is provided with a third pin shaft hole. The third pin shaft hole includes a first wall and a second wall that are disposed opposite to each other, and a third wall and a fourth wall that are disposed opposite to each other. The third wall and the fourth wall are connected between the first wall and the second wall. Both the first wall and the second wall are planes. Both the third wall and the fourth wall are arc surfaces. The first pin shaft is inserted into the third pin shaft hole. A part of a surface of the first pin shaft fits the first wall, the second wall, the third wall, and the fourth wall of the third pin shaft hole.

It may be understood that a part of a surface of the first pin shaft fits the first wall, the second wall, the third wall, and the fourth wall of the third pin shaft hole, so that the third fitting part is fixedly connected to the first pin shaft. In this way, a connection relationship between the third fitting part and the first pin shaft is simple, thereby simplifying a structure of the folding mechanism.

In an implementation, the first gear has a first pin shaft hole. The first pin shaft hole includes a first wall and a second wall that are disposed opposite to each other, and a third wall and a fourth wall that are disposed opposite to each other. The third wall and the fourth wall are connected between the first wall and the second wall. Both the first wall and the second wall are planes. Both the third wall and the fourth wall are arc surfaces. The first pin shaft is inserted into the first pin shaft hole. A part of a surface of the first pin shaft fits the first wall, the second wall, the third wall, and the fourth wall of the first pin shaft hole.

It may be understood that a part of a surface of the first pin shaft fits the first wall, the second wall, the third wall, and the fourth wall of the first pin shaft hole, so that the first gear is fixedly connected to the first pin shaft. In this way, a connection relationship between the first gear and the first pin shaft is simple, thereby simplifying a structure of the folding mechanism.

In an implementation, the folding mechanism further includes a second connecting arm, a second pin shaft, a second gear, a fourth fitting part, and a second elastic part. The second connecting arm includes a sliding end and a rotation end. The sliding end of the second connecting arm is slidably connected to the second housing. The rotation end of the second connecting arm is rotatably connected to the main shaft assembly. The second pin shaft is rotatably connected to the main shaft assembly, and is located between the first pin shaft and the rotation end of the second connecting arm. The first fitting part and the second fitting part are further slidably connected to the second pin shaft. The second gear and the fourth fitting part are fixedly connected to the second pin shaft, and are spaced from each other. The second gear is engaged with both the first gear and the rotation end of the second connecting arm. The second gear is located on a side that is of the first fitting part and that is away from the second fitting part. The second gear and the first fitting part form a cam structure. The fourth fitting part is located on a side that is of the second fitting part and that is away from the first fitting part. The fourth fitting part and the second fitting part form a cam structure. One end of the second elastic part abuts against the first fitting part, the other end of the second elastic part abuts against the second fitting part, and the second elastic part is in a compressed state.

It may be understood that, in the process of unfolding or folding the electronic device, the second elastic part may fit the first elastic part to jointly deform, and the second elastic part and the first elastic part may jointly squeeze the first fitting part, so that the first fitting part applies action force on the first gear and the second gear. In this way, friction force between the first gear, the second gear, and the first fitting part may be increased to a large extent. A speed at which the first gear and the second gear rotate relative to the main shaft assembly becomes lower, a speed at which the first connecting arm and the second connecting arm rotate relative to the main shaft assembly becomes lower, and a speed at which the first housing and the second housing rotate relative to the main shaft assembly becomes lower. Therefore, in a process in which the electronic device is unfolded to enter an open state and in a process in which the electronic device is folded to release the open state, specific resistance is provided, so that a user can experience a better sense of operation of the mechanism.

In addition, in the process of unfolding or folding the electronic device, the second elastic part and the first elastic part may generate a first deformation amount a under fitting of the first gear, the second gear, and the first fitting part, and may generate a second deformation amount b under fitting of the third fitting part, the fourth fitting part, and the second fitting part. In this way, in the process of unfolding or folding the electronic device, the second elastic part and the first elastic part may generate two superimposed deformation amounts at a time, that is, a total deformation amount is a+b, and the second elastic part and the first elastic part may generate a large deformation amount at a time.

In addition, no cam structure needs to be formed between two end parts of the rotation end of the second connecting arm and another component, to implement that the second elastic part and the first elastic part generate the total deformation amount a+b at a time. In this way, a bump group does not need to be disposed at the two end parts of the rotation end of the second connecting arm, so that a length of the rotation end of the second connecting arm may be miniaturized. When the rotation end of the second connecting arm is rotatably connected to the main shaft assembly, a size of the main shaft assembly in a Y-axis direction may also be miniaturized.

It may be understood that, in the process of unfolding or folding the electronic device, the second gear is fixedly connected to the second pin shaft, and a position of the second gear relative to the second pin shaft is fixed. In this way, compared with a solution in which the second gear slides relative to the second pin shaft, this implementation achieves better stability of the second gear 364, and helps improve stability of the folding mechanism.

In an implementation, the main shaft assembly includes a base and a first outer housing. The base is provided with a first hinge groove and a second hinge groove that are disposed opposite to each other. One end of the first pin shaft is rotatably connected to the first hinge groove, and the other end of the first pin shaft is rotatably connected to the second hinge groove. Accommodating space is enclosed by the first outer housing and the base. The rotation end of the first connecting arm, the first pin shaft, the first gear, the first fitting part, the second fitting part, the third fitting part, and the first elastic part are disposed in the accommodating space. In this way, the rotation end of the first connecting arm, the first pin shaft, the first gear, the first fitting part, the second fitting part, the third fitting part, and the first elastic part are unlikely to detach from the main shaft assembly, that is, stability of the folding mechanism is good.

In a possible implementation, the first pin shaft includes a first limiting flange. The first gear abuts against the first limiting flange. The first limiting flange abuts against a first wall surface of the base. The first wall surface is connected to a groove wall of the first hinge groove. The third fitting part abuts against a second wall surface of the base. The second wall surface is connected to a groove wall of the second hinge groove. In this way, the first wall surface and the second wall surface may limit sliding of the first pin shaft, so that stability of the first gear, the first fitting part, the second fitting part, the third fitting part, and the first elastic part is good.

In an implementation, one end of the first pin shaft abuts against the groove wall of the first hinge groove, and the other end of the first pin shaft abuts against the groove wall of the second hinge groove. In this way, the groove wall of the first hinge groove and the second hinge groove can limit sliding of the first pin shaft.

In an implementation, the folding mechanism further includes a fastener. The fastener is fixedly connected between the base and the first outer housing. The fastener is provided with a first limiting hole. At least a part of the first pin shaft is inserted into the first limiting hole, and rotates relative to the first limiting hole.

It may be understood that the fastener is disposed between the first outer housing and the base, so that the first pin shaft is limited through the first limiting hole. In this way, the first gear, the first fitting part, the second fitting part, the third fitting part, and the first elastic part that are disposed on the first pin shaft are unlikely to shake, that is, more stable. In addition, in the process of folding or unfolding the electronic device, the first pin shaft, the first gear, the first fitting part, the second fitting part, the third fitting part, and the first elastic part are unlikely to squeeze the first outer housing, to detach the first outer housing from the base.

In an implementation, the fastener is further provided with a second limiting hole. The second limiting hole and the first limiting hole are disposed at an interval. At least a part of the second pin shaft is inserted into the second limiting hole, and rotates relative to the second limiting hole. It may be understood that the second limiting hole may limit the second pin shaft. In this way, the second gear, the first fitting part, the second fitting part, the fourth fitting part, and the second elastic part that are disposed on the second pin shaft are unlikely to shake, that is, more stable. In addition, in the process of folding or unfolding the electronic device, the second pin shaft, the second gear, the first fitting part, the second fitting part, the fourth fitting part, and the second elastic part are unlikely to squeeze the first outer housing, to detach the first outer housing from the base.

In an implementation, the folding mechanism further includes a first fixing bracket, a second fixing bracket, a first transmission arm, a first connecting rod, a second transmission arm, and a second connecting rod. The first fixing bracket is fastened to the first housing. The second fixing bracket is fastened to the second housing.

The first transmission arm is rotatably and slidably connected to the main shaft assembly. The first transmission arm is connected to the rotation end of the first connecting arm through a spiral pair structure. One end of the first connecting rod is rotatably connected to the first transmission arm, and the other end of the first connecting rod is rotatably connected to the first fixing bracket. The second transmission arm is rotatably and slidably connected to the main shaft assembly, and the second transmission arm is connected to the rotation end of the second connecting arm through a spiral pair structure. One end of the second connecting rod is rotatably connected to the second transmission arm, and the other end of the second connecting rod is rotatably connected to the second fixing bracket.

In an implementation, the folding mechanism further includes a sliding member, a first spiral rod, and a second spiral rod. The sliding member is slidably connected to the main shaft assembly. The first transmission arm is rotatably connected to the sliding member. The sliding member has a first convex part and a second convex part that are disposed back to back.

The first spiral rod is rotatably connected to the main shaft assembly. One end of the first spiral rod is fastened to the rotation end of the first connecting arm. The first spiral rod is provided with a first spiral groove. The first spiral groove spirally extends in an extension direction of the main shaft assembly. At least a part of the first convex part is slidably mounted in the first spiral groove. The second spiral rod is rotatably connected to the main shaft assembly. One end of the second spiral rod is fastened to the rotation end of the second connecting arm. The second spiral rod is provided with a second spiral groove. The second spiral groove spirally extends in an extension direction of the main shaft assembly. At least a part of the second convex part is slidably connected in the second spiral groove.

In an implementation, the folding mechanism further includes a first swing arm and a second swing arm. The first swing arm includes a rotation end and a sliding end. The rotation end of the first swing arm is rotatably connected to the main shaft assembly. The sliding end of the first swing arm is slidably connected to the first fixing bracket. The second swing arm includes a rotation end and a sliding end. The rotation end of the second swing arm is rotatably connected to the main shaft assembly. The sliding end of the second swing arm is slidably connected to the second fixing bracket.

In an implementation, the folding mechanism further includes a first support plate and a second support plate. The first support plate is slidably and rotatably connected to the sliding end of the first swing arm. The first support plate is rotatably connected to the first fixing bracket. The second support plate is slidably and rotatably connected to the sliding end of the second swing arm. The second support plate is rotatably connected to the second fixing bracket.

When the electronic device is in an unfolded state, the first support plate and the second support plate are located on two sides of the main shaft assembly. When the electronic device is in a closed state, the first support plate and the second support plate are disposed opposite to each other.

In an implementation, the folding mechanism further includes a third fixing bracket, a fourth fixing bracket, a third swing arm, a fourth swing arm, a second blocker, a plurality of elastic parts, and a fixing plate. The third fixing bracket is fastened to the first housing. The fourth fixing bracket is fastened to the second housing. A sliding end of the third swing arm is slidably connected to the third fixing bracket. A rotation end of the third swing arm is rotatably connected to the main shaft assembly. A sliding end of the fourth swing arm is slidably connected to the fourth fixing bracket. A rotation end of the fourth swing arm is rotatably connected to the main shaft assembly.

The second blocker is located on a side of the rotation end of the third swing arm and a side of the rotation end of the fourth swing arm. The second blocker is slidably connected to the main shaft assembly, and forms a cam structure with each of the rotation end of the third swing arm and the rotation end of the fourth swing arm. The fixing plate is located on a side that is of the second blocker and that is away from the rotation end of the third swing arm and the rotation end of the fourth swing arm. The fixing plate is slidably connected to the main shaft assembly.

One end of each of the plurality of elastic parts abuts against the second blocker, and the other end of each of the plurality of elastic parts abuts against the fixing plate. The first elastic part is in a compressed state.

In an implementation, the folding mechanism further includes a first blocker, a first rotatable connecting shaft, and a second rotatable connecting shaft. The rotation end of the third swing arm and the rotation end of the fourth swing arm are located between the first blocker and the second blocker. The first blocker forms a cam structure with each of the rotation end of the third swing arm and the rotation end of the fourth swing arm.

The first blocker, the first rotatable connecting shaft, and the second rotatable connecting shaft are all slidably connected to the main shaft assembly. The first rotatable connecting shaft sequentially passes through the first blocker, the rotation end of the third swing arm, the second blocker, one elastic part, and the fixing plate. The first blocker and the fixing plate are fastened to the first rotatable connecting shaft, and the rotation end of the third swing arm and the second blocker are slidably connected to the first rotatable connecting shaft.

The second rotatable connecting shaft sequentially passes through the first blocker, the rotation end of the fourth swing arm, the second blocker, one elastic part, and the fixing plate. The first blocker and the fixing plate are further fastened to the second rotatable connecting shaft. The rotation end of the fourth swing arm and the second blocker are slidably connected to the second rotatable connecting shaft.

According to a second aspect, this application provides a folding mechanism. The folding mechanism includes a main shaft assembly, a first connecting arm, a first pin shaft, a first gear, a first fitting part, a second fitting part, a third fitting part, and a first elastic part. A rotation end of the first connecting arm is rotatably connected to the main shaft assembly. The first pin shaft is rotatably connected to the main shaft assembly. The first gear and the third fitting part are fixedly connected to the first pin shaft, and are spaced from each other. The first gear is engaged with the rotation end of the first connecting arm. The first fitting part and the second fitting part are located between the first gear and the third fitting part, and are both slidably connected to the first pin shaft. The first fitting part and the first gear form a cam structure. The second fitting part and the third fitting part form a cam structure. One end of the first elastic part abuts against the first fitting part, and the other end of the first elastic part abuts against the second fitting part. The first elastic part is in a compressed state.

In a folding or unfolding process of the folding mechanism, the first fitting part and the second fitting part slide relative to the first pin shaft, and a sliding direction of the first fitting part is opposite to a sliding direction of the second fitting part.

It may be understood that in the process of unfolding or folding the folding mechanism, the first elastic part may deform, and the first elastic part may squeeze the first fitting part. The first fitting part may apply action force to the first gear. In this way, friction force between the first gear and the first fitting part may be increased to a large extent. A speed at which the first gear rotates relative to the main shaft assembly becomes lower, and a speed at which the first connecting arm rotates relative to the main shaft assembly becomes lower. When the folding mechanism is applied to an electronic device, a speed at which the first housing rotates relative to the main shaft assembly also becomes lower. Therefore, in a process in which the electronic device is unfolded to enter an open state and in a process in which the electronic device is folded to release the open state, specific resistance is provided, so that a user can experience a better sense of operation of the mechanism. In addition, in the process of unfolding or folding the folding mechanism, the first elastic part may generate a first deformation amount a under fitting of the first gear and the first fitting part, and may generate a second deformation amount under fitting of the third fitting part and the second fitting part. In this way, in the process of unfolding or folding the folding mechanism, the first elastic part may generate two superimposed deformation amounts at a time, that is, a total deformation amount is a+b, and the first elastic part may generate a large deformation amount at a time.

In addition, no cam structure needs to be formed between two end parts of the rotation end of the first connecting arm and another component, to implement that the first elastic part generates the total deformation amount a+b at a time. In this way, a bump group does not need to be disposed at the two end parts of the rotation end of the first connecting arm, so that a length of the rotation end of the first connecting arm may be miniaturized. When the rotation end of the first connecting arm is rotatably connected to the main shaft assembly, a size of the main shaft assembly in a Y-axis direction may also be miniaturized.

In addition, in the unfolding or folding process of the folding mechanism, the first gear is fixedly connected to the first pin shaft. A position of the first gear relative to the first pin shaft is fixed. In this way, compared with a solution in which the first gear slides relative to the first pin shaft, this implementation achieves better stability of the first gear, and helps improve stability of the folding mechanism.

In an implementation, the second fitting part includes a second bump. The third fitting part includes a third bump. That the second fitting part and the third fitting part form a cam structure includes: The second fitting part and the third fitting part form the cam structure by using the second bump and the third bump.

In an implementation, in the process of folding or unfolding the electronic device, the rotation end of the first connecting arm, the first gear, the third fitting part, and the first pin shaft rotate relative to the main shaft assembly.

In an implementation, the third fitting part is provided with a third pin shaft hole. The third pin shaft hole includes a first wall and a second wall that are disposed opposite to each other, and a third wall and a fourth wall that are disposed opposite to each other. The third wall and the fourth wall are connected between the first wall and the second wall. Both the first wall and the second wall are planes. Both the third wall and the fourth wall are arc surfaces.

The first pin shaft is inserted into the third pin shaft hole. A part of a surface of the first pin shaft fits the first wall, the second wall, the third wall, and the fourth wall of the third pin shaft hole. In an implementation, the folding mechanism further includes a second connecting arm, a second pin shaft, a second gear, a fourth fitting part, and a second elastic part. The rotation end of the second connecting arm is rotatably connected to the main shaft assembly.

The second pin shaft is rotatably connected to the main shaft assembly, and is located between the first pin shaft and the rotation end of the second connecting arm. The first fitting part and the second fitting part are further slidably connected to the second pin shaft. The second gear and the fourth fitting part are fixedly connected to the second pin shaft, and are spaced from each other. The second gear is engaged with both the first gear and the rotation end of the second connecting arm. The second gear is located on a side that is of the first fitting part and that is away from the second fitting part. The second gear and the first fitting part form a cam structure. The fourth fitting part is located on a side that is of the second fitting part and that is away from the first fitting part. The fourth fitting part and the second fitting part form a cam structure. One end of the second elastic part abuts against the first fitting part, and the other end of the second elastic part abuts against the second fitting part. The second elastic part is in a compressed state.

It may be understood that, in the process of unfolding or folding the folding mechanism, the second elastic part may fit the first elastic part to jointly deform, and the second elastic part and the first elastic part may jointly squeeze the first fitting part, so that the first fitting part applies action force on the first gear and the second gear. In this way, friction force between the first gear, the second gear, and the first fitting part may be increased to a large extent. A speed at which the first gear and the second gear rotate relative to the main shaft assembly becomes lower, and a speed at which the first connecting arm and the second connecting arm rotate relative to the main shaft assembly becomes lower. When the folding mechanism is applied to an electronic device, a speed at which the first housing and the second housing rotate relative to the main shaft assembly becomes lower. Therefore, in a process in which the electronic device is unfolded to enter an open state and in a process in which the electronic device is folded to release the open state, specific resistance is provided, so that a user can experience a better sense of operation of the mechanism.

In addition, in the process of unfolding or folding the folding mechanism, the second elastic part and the first elastic part may generate a first deformation amount a under fitting of the first gear, the second gear, and the first fitting part, and may generate a second deformation amount b under fitting of the third fitting part, the fourth fitting part, and the second fitting part. In this way, in the process of unfolding or folding the electronic device, the second elastic part and the first elastic part may generate two superimposed deformation amounts at a time, that is, a total deformation amount is a+b, and the second elastic part and the first elastic part may generate a large deformation amount at a time.

In addition, no cam structure needs to be formed between two end parts of the rotation end of the second connecting arm and another component, to implement that the second elastic part and the first elastic part generate the total deformation amount a+b at a time. In this way, a bump group does not need to be disposed at the two end parts of the rotation end of the second connecting arm, so that a length of the rotation end of the second connecting arm may be miniaturized. When the rotation end of the second connecting arm is rotatably connected to the main shaft assembly, a size of the main shaft assembly in a Y-axis direction may also be miniaturized.

It may be understood that, in the process of unfolding or folding the folding mechanism, the second gear is fixedly connected to the second pin shaft, and a position of the second gear relative to the second pin shaft is fixed. In this way, compared with a solution in which the second gear slides relative to the second pin shaft, this implementation achieves better stability of the second gear 364, and helps improve stability of the folding mechanism.

In an implementation, the main shaft assembly includes a base and a first outer housing. The base is provided with a first hinge groove and a second hinge groove that are disposed opposite to each other. One end of the first pin shaft is rotatably connected to the first hinge groove, and the other end of the first pin shaft is rotatably connected to the second hinge groove. Accommodating space is enclosed by the first outer housing and the base. The rotation end of the first connecting arm, the first pin shaft, the first gear, the first fitting part, the second fitting part, the third fitting part, and the first elastic part are disposed in the accommodating space. In this way, the rotation end of the first connecting arm, the first pin shaft, the first gear, the first fitting part, the second fitting part, the third fitting part, and the first elastic part are unlikely to detach from the main shaft assembly, that is, stability of the folding mechanism is good.

In a possible implementation, the first pin shaft includes a first limiting flange. The first gear abuts against the first limiting flange. The first limiting flange abuts against a first wall surface of the base. The first wall surface is connected to a groove wall of the first hinge groove. The third fitting part abuts against a second wall surface of the base. The second wall surface is connected to a groove wall of the second hinge groove. In this way, the first wall surface and the second wall surface may limit sliding of the first pin shaft, so that stability of the first gear, the first fitting part, the second fitting part, the third fitting part, and the first elastic part is good.

In an implementation, one end of the first pin shaft abuts against the groove wall of the first hinge groove, and the other end of the first pin shaft abuts against the groove wall of the second hinge groove.

In an implementation, the folding mechanism further includes a fastener. The fastener is fixedly connected between the base and the first outer housing. The fastener is provided with a first limiting hole. At least a part of the first pin shaft is inserted into the first limiting hole, and rotates relative to the first limiting hole.

It may be understood that the fastener is disposed between the first outer housing and the base, so that the first pin shaft is limited through the first limiting hole. In this way, the first gear, the first fitting part, the second fitting part, the third fitting part, and the first elastic part that are disposed on the first pin shaft are unlikely to shake, that is, more stable. In addition, in the process of folding or unfolding the folding mechanism, the first pin shaft, the first gear, the first fitting part, the second fitting part, the third fitting part, and the first elastic part are unlikely to squeeze the first outer housing, to detach the first outer housing from the base.

In an implementation, the fastener is further provided with a second limiting hole. The second limiting hole and the first limiting hole are disposed at an interval. At least a part of the second pin shaft is inserted into the second limiting hole, and rotates relative to the second limiting hole. It may be understood that the second limiting hole may limit the second pin shaft. In this way, the second gear, the first fitting part, the second fitting part, the fourth fitting part, and the second elastic part that are disposed on the second pin shaft are unlikely to shake, that is, more stable. In addition, in the process of folding or unfolding the folding mechanism, the second pin shaft, the second gear, the first fitting part, the second fitting part, the fourth fitting part, and the second elastic part are unlikely to squeeze the first outer housing, to detach the first outer housing from the base.

### BRIEF DESCRIPTION OF DRAWINGS

FIG. 1 is a schematic diagram of a structure of an electronic device in an unfolded state according to an implementation of this application;
FIG. 2 is a schematic exploded view of a part of the electronic device shown in FIG. 1;
FIG. 3 is a schematic diagram of a structure of the electronic device shown in FIG. 1 in a closed state;
FIG. 4 is an A1-A1 schematic sectional view of a part of the electronic device shown in FIG. 3;
FIG. 5 is a schematic exploded view of a part of a folding apparatus shown in FIG. 2;
FIG. 6 is a schematic exploded view of a part of a folding mechanism shown in FIG. 5;
FIG. 7 is a schematic exploded view of a part of a main shaft assembly shown in FIG. 6 according to an implementation;
FIG. 8 is a schematic diagram of a structure of a base shown in FIG. 7 from another angle;
FIG. 9 is a schematic diagram of a structure of a first end part of the base shown in FIG. 7;
FIG. 10a is a schematic diagram of a structure of the first end part shown in FIG. 9 from another angle;
FIG. 10b is an enlarged schematic diagram of the first end part shown in FIG. 10a at M1;
FIG. 10c is an enlarged schematic diagram of the first end part shown in FIG. 9 at M2;
FIG. 10d is a schematic diagram of a partial structure of a main shaft assembly shown in FIG. 6;
FIG. 11 is a schematic diagram of structures of a first fixing bracket and a second fixing bracket shown in FIG. 6;
FIG. 12 is a schematic diagram of structures of the first fixing bracket and the second fixing bracket shown in FIG. 11 from another angle;
FIG. 13 is a schematic diagram of a partial structure of a folding apparatus shown in FIG. 2;
FIG. 14 is a schematic diagram of structures of a first connecting arm and a second connecting arm shown in FIG. 6;
FIG. 15 is a schematic diagram of a partial structure of a folding mechanism shown in FIG. 5;
FIG. 16 is an A2-A2 schematic sectional view of a part of the folding mechanism shown in FIG. 15;
FIG. 17 is a schematic exploded view of a damping part shown in FIG. 6;
FIG. 18 is a schematic diagram of structures of a first pin shaft and a second pin shaft shown in FIG. 17 from another angle;
FIG. 19 is a schematic diagram of structures of a first gear and a second gear shown in FIG. 17 at different angles;
FIG. 20 is a schematic diagram of a partial structure of a damping part shown in FIG. 6;
FIG. 21 is a schematic diagram of a structure of a first fitting part shown in FIG. 17 at different angles;
FIG. 22a is a schematic diagram of a partial structure of a damping part shown in FIG. 6;
FIG. 22b is a C1-C1 schematic sectional view of a part of the damping part shown in FIG. 22a;
FIG. 23 is a schematic diagram of a structure of a second fitting part shown in FIG. 17 at different angles;
FIG. 24a is a schematic diagram of a partial structure of a damping part shown in FIG. 6;
FIG. 24b is a C2-C2 schematic sectional view of a part of the damping part shown in FIG. 24a;
FIG. 25 is a schematic diagram of structures of a third fitting part and a fourth fitting part shown in FIG. 17 at different angles;
FIG. 26 is an enlarged schematic diagram of a damping part shown in FIG. 6;
FIG. 27 is a schematic diagram of a partial structure of a folding mechanism shown in FIG. 5;
FIG. 28 is a schematic sectional view of a part of a folding mechanism shown in FIG. 5;
FIG. 29 is a schematic diagram of a structure of a part of the folding mechanism shown in FIG. 27 in a closed state;
FIG. 30a is a schematic sectional view of a part of a folding mechanism shown in FIG. 5 in another implementation;
FIG. 30b is a schematic diagram of a structure of a fastener of the folding mechanism shown in FIG. 30a;
FIG. 30c is a schematic sectional view of a part of a folding mechanism shown in FIG. 5 in still another implementation;
FIG. 31 is a schematic exploded view of a first sub-assembly shown in FIG. 6;
FIG. 32 is a schematic diagram of structures of a first spiral rod and a second spiral rod of the first sub-assembly shown in FIG. 31;
FIG. 33 is a schematic diagram of a partial structure of a folding mechanism shown in FIG. 5;
FIG. 34 is a schematic diagram of a structure of a sliding member of the first sub-assembly shown in FIG. 31;
FIG. 35 is a schematic diagram of a partial structure of a folding mechanism shown in FIG. 5;
FIG. 36 is a schematic diagram of a structure of a first transmission arm of the first sub-assembly shown in FIG. 31;
FIG. 37 is a schematic diagram of a partial structure of a folding mechanism shown in FIG. 5;
FIG. 38 is a schematic diagram of a partial structure of a folding mechanism shown in FIG. 5;
FIG. 39 is a schematic diagram of a structure of a part of the folding mechanism shown in FIG. 38 in a closed state;
FIG. 40 is a schematic exploded view of a second sub-assembly shown in FIG. 6;
FIG. 41 is a schematic diagram of a partial structure of a folding mechanism shown in FIG. 5;
FIG. 42 is a schematic diagram of structures of a first swing arm and a second swing arm shown in FIG. 6;
FIG. 43 is a schematic diagram of structures of a first support plate and a second support plate shown in FIG. 6;
FIG. 44 is an enlarged schematic diagram of the first support plate shown in FIG. 43 at B;
FIG. 45 is a schematic diagram of a partial structure of a folding mechanism shown in FIG. 5;
FIG. 46 is a schematic diagram of structures of a third swing arm and a fourth swing arm shown in FIG. 45;
FIG. 47 is a schematic diagram of a partial structure of a folding mechanism shown in FIG. 5; and
FIG. 48 is a schematic exploded view of an auxiliary damping part shown in FIG. 45.

### DESCRIPTION OF EMBODIMENTS

The following describes embodiments of this application with reference to the accompanying drawings in embodiments of this application.

In the descriptions of embodiments of this application, it should be noted that, unless otherwise specified and limited, a term "connection" should be understood in a broad sense. For example, the "connection" may be a detachable connection or an undetachable connection, or may be a direct connection or an indirect connection through an intermediate medium. A "fixed connection" may mean a connection with each other and that a relative position relationship after the connection remains unchanged. A "rotatable connection" may mean a connection with each other and that relative rotation can be implemented after the connection. A "slidable connection" may mean a connection with each other and that slidable rotation can be implemented after the connection. "Rolling" may be a composite motion of rotation and displacement. Orientation terms mentioned in embodiments of this application, for example, "top", "bottom", "inside", and "outside" are merely directions based on the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application. "A plurality of" means at least two.

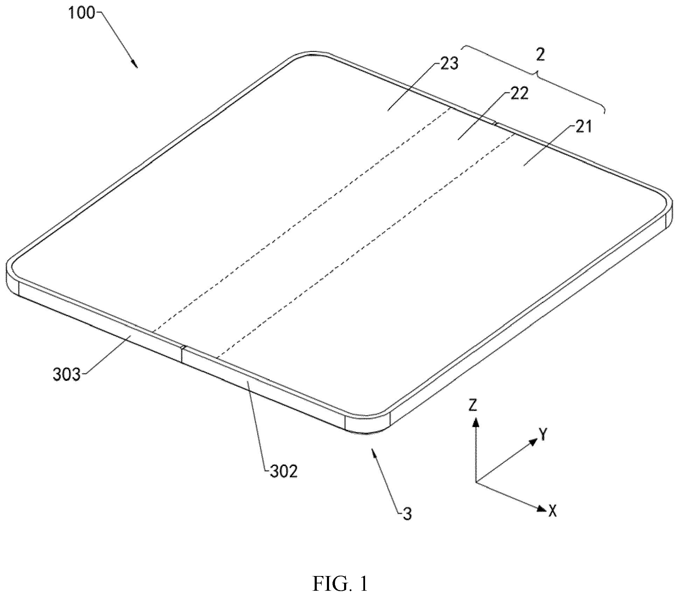

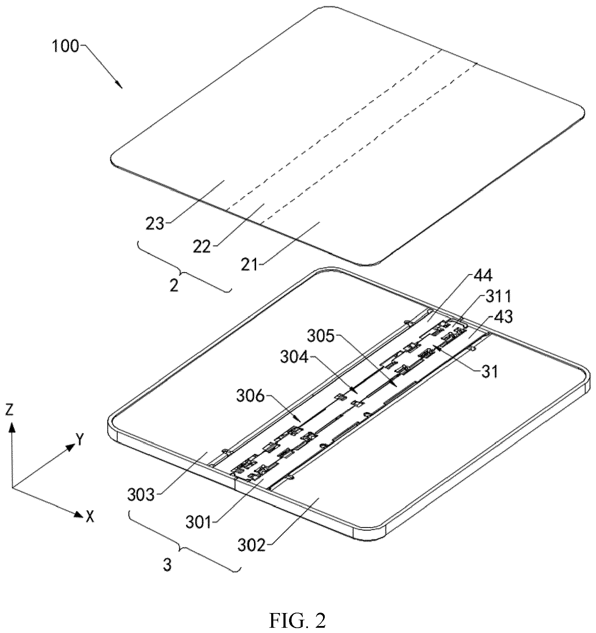

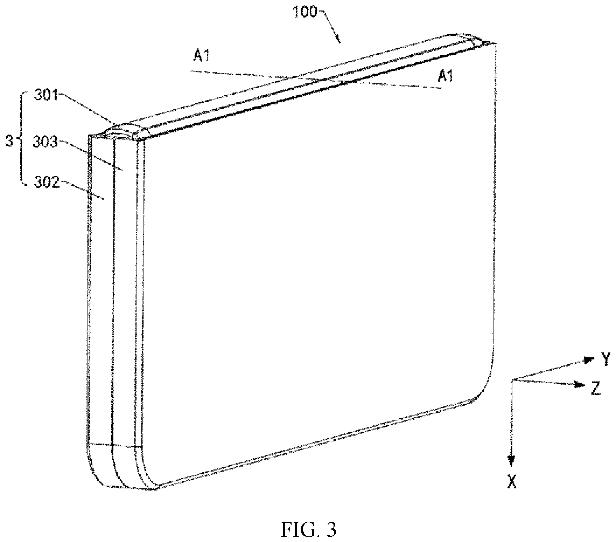

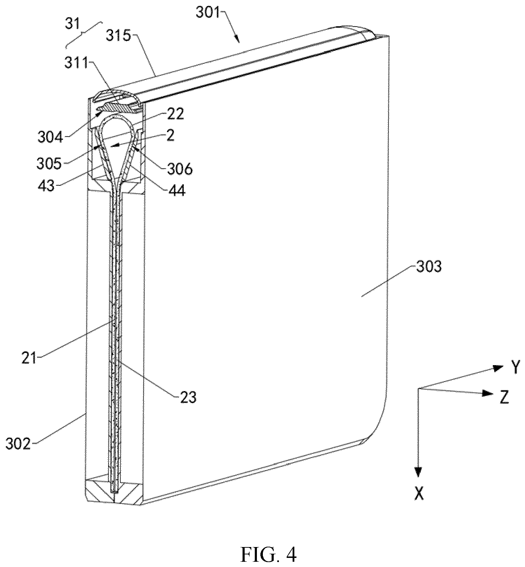

FIG. 1 is a schematic diagram of a structure of an electronic device 100 in an unfolded state according to an implementation of this application. FIG. 2 is a schematic exploded view of a part of the electronic device 100 shown in FIG. 1. FIG. 3 is a schematic diagram of a structure of the electronic device 100 shown in FIG. 1 in a closed state. FIG. 4 is an A1-A1 schematic sectional view of a part of the electronic device 100 shown in FIG. 3.

The electronic device 100 includes a flexible display 2 and a folding apparatus 3. The flexible display 2 is configured to display an image. The flexible display 2 is fixedly connected to the folding apparatus 3. The folding apparatus 3 can enable the flexible display 2 to be unfolded or folded, so that the electronic device 100 can be switched between an unfolded state and a closed state. It should be understood that, when the electronic device 100 is in the unfolded state, correspondingly, the folding apparatus 3 is also in an unfolded state. When the electronic device 100 is in the closed state, correspondingly, the folding apparatus 3 is also in a closed state. In this way, when the electronic device 100 is in the unfolded state, the electronic device 100 has a large display area, so that viewing experience of a user is good. When the electronic device 100 is in the closed state, a planar size of the electronic device 100 is small, so that it is convenient for the user to carry the electronic device 100. The electronic device 100 may be a foldable electronic product like a mobile phone, a tablet computer, a personal computer, or a notebook computer. In the implementations shown in FIG. 1 to FIG. 4, descriptions are provided by using an example in which the electronic device 100 is a mobile phone.

For ease of description, for example, a thickness direction of the electronic device 100 is defined as a Z-axis direction, and an extension direction of a rotation axis of the electronic device 100 is defined as a Y-axis direction, that is, a width direction of the electronic device 100 is defined as a Y-axis direction. A direction perpendicular to the Y-axis direction and the Z-axis direction is an X-axis direction, that is, a length direction of the electronic device 100 is the X-axis direction. It may be understood that a coordinate system of the electronic device 100 may also be flexibly set based on a specific requirement. In this implementation, when a direction of the rotation axis of the electronic device 100 is the Y-axis direction, the folding apparatus 3 can enable the flexible display 2 to be unfolded or folded relative to each other in the Y-axis direction. In this way, when the electronic device 100 is in the closed state, a size of the electronic device 100 in the X-axis direction is decreased.

With reference to FIG. 1 to FIG. 4, FIG. 5 is a schematic exploded view of a part of the folding apparatus 3 shown in FIG. 2. The folding apparatus 3 includes a folding mechanism 301, a first housing 302, and a second housing 303. The folding mechanism 301 is connected between the first housing 302 and the second housing 303. The folding mechanism 301 is configured to unfold or fold the first housing 302 and the second housing 303 relative to each other.

As shown in FIG. 1 and FIG. 2, when the first housing 302 and the second housing 303 are unfolded relative to each other to an unfolded state, the electronic device 100 is in an unfolded state, and the first housing 302 and the second housing 303 may be at 180°. In another embodiment, an angle between the first housing 302 and the second housing 303 may alternatively have a slight deviation from 180°, for example, 165°, 177°, or 185°.

As shown in FIG. 3 and FIG. 4, when the first housing 302 and the second housing 303 are folded relative to each other to a closed state, the electronic device 100 is in a closed state, the first housing 302 and the second housing 303 may be closed to each other, and there is no large gap between the first housing 302 and the second housing 303. In this way, the electronic device 100 has better appearance experience, and has better waterproof, dustproof, and foreign matter prevention performance. A case in which the first housing 302 and the second housing 303 are closed includes a case in which the first housing 302 and the second housing 303 abut against each other, or may include a case in which there is a small gap between the first housing 302 and the second housing 303. When there is a small gap between the first housing 302 and the second housing 303, some foreign matter outside the electronic device 100 does not enter space between the first housing 302 and the second housing 303 through the gap.

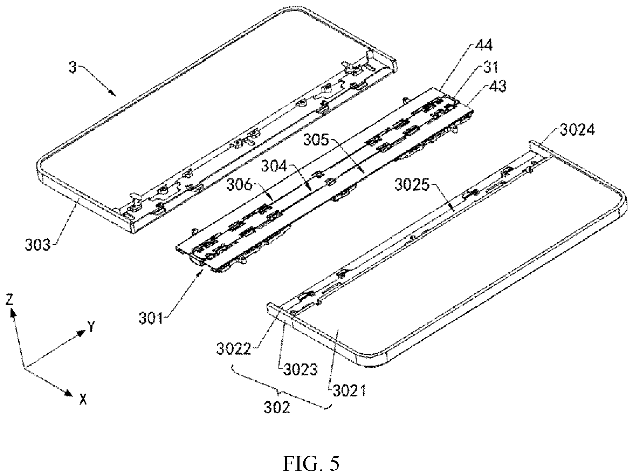

The first housing 302 and the second housing 303 may alternatively be unfolded or folded relative to each other to an intermediate state, so that the electronic device 100 is in an intermediate state, and the intermediate state may be any state between the unfolded state and the closed state. Refer to FIG. 5 again. The first housing 302 includes a first part 3021, a second part 3022, a third part 3023, and a fourth part 3024. The second part 3022 is connected to the first part 3021. A height of the first part 3021 in a Z-axis direction is greater than a height of the second part 3022 in the Z-axis direction. In this case, the first part 3021 and the second part 3022 approximately form a step shape in the Z-axis direction. In addition, one side of the third part 3023 is connected to the first part 3021, and the other side of the third part 3023 is connected to the second part 3022. The fourth part 3024 and the third part 3023 are disposed opposite to each other. One side of the fourth part 3024 is connected to the first part 3021, and the other side of the fourth part 3024 is connected to the second part 3022. The first housing 302 is provided with a fixing groove 3025. The fixing groove 3025 is enclosed by a side surface of the first part 3021, a surface of the second part 3022, a side surface of the third part 3023, and a side surface of the fourth part 3024. In this implementation, for a manner of disposing the second housing 303, refer to a manner of disposing the first housing 302. Details are not described herein again.

Refer to FIG. 1, FIG. 2, and FIG. 4 again. The flexible display 2 includes a first non-bending part 21, a bending part 22, and a second non-bending part 23. The bending part 22 is connected between the first non-bending part 21 and the second non-bending part 23. In FIG. 1 and FIG. 2, the first non-bending part 21, the bending part 22, and the second non-bending part 23 are simply and schematically distinguished by using dashed lines. The first non-bending part 21 of the flexible display 2 is fixedly connected to the first housing 302. The second non-bending part 23 is fixedly connected to the second housing 303. In a process in which the first housing 302 and the second housing 303 are unfolded or folded relative to each other, the first housing 302 may drive the first non-bending part 21 to move, the second housing 303 may drive the second non-bending part 23 to move, the first non-bending part 21 and the second non-bending part 23 are unfolded or folded relative to each other, and the bending part 22 can deform.

It may be understood that, because the first non-bending part 21 is fixedly connected to the first housing 302, and the second non-bending part 23 is fixedly connected to the second housing 303, when the first housing 302 and the second housing 303 are unfolded or folded relative to each other, relative unfolding and folding actions between the first non-bending part 21 and the second non-bending part 23 can be accurately controlled, so that a folding process and a motion form of the flexible display 2 are controllable, and reliability is high.

As shown in FIG. 1 and FIG. 2, when the first housing 302 and the second housing 303 are unfolded relative to each other to the unfolded state (that is, the electronic device 100 is in the unfolded state), the first non-bending part 21, the bending part 22, and the second non-bending part 23 of the flexible display 2 may be at 180°. In another embodiment, the first non-bending part 21, the bending part 22, and the second non-bending part 23 may alternatively have a slight deviation from 180°, for example, 165°, 177°, or 185°.

As shown in FIG. 3 and FIG. 4, when the first housing 302 and the second housing 303 are in the closed state (that is, the electronic device is in the closed state), the first non-bending part 21 and the second non-bending part 23 are approximately parallel and close to each other, and the bending part 22 is in a bent shape. In this case, the flexible display 2 is approximately in a "water drop" shape. In addition, the flexible display 2 is located between the first housing 302 and the second housing 303.

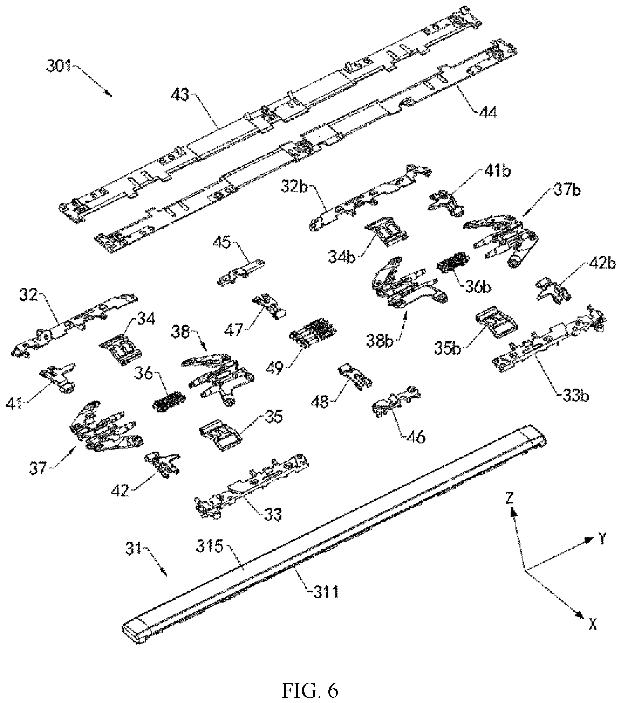

FIG. 6 is a schematic exploded view of a part of the folding mechanism 301 shown in FIG. 5. The folding mechanism 301 includes a main shaft assembly 31, a first fixing bracket 32, a second fixing bracket 33, a first connecting arm 34, a second connecting arm 35, a damping part 36, a first sub-assembly 37, a second sub-assembly 38, a first swing arm 41, a second swing arm 42, a first support plate 43, and a second support plate 44. For example, an extension direction of a length of the main shaft assembly 31 is a Y-axis direction.

The first fixing bracket 32, the second fixing bracket 33, the first connecting arm 34, the second connecting arm 35, the damping part 36, the first sub-assembly 37, the second sub-assembly 38, the first swing arm 43, and the second swing arm 44 may jointly form a first connecting assembly. For example, the first connecting assembly may be used as a bottom connecting assembly of the folding mechanism 301. The folding mechanism 301 may further include a second connecting assembly. The second connecting assembly may be used as a top connecting assembly of the folding mechanism 301. Both the first connecting assembly and the second connecting assembly are connected to the main shaft assembly 31, the first support plate 43, and the second support plate 44.

For example, the second connecting assembly and the first connecting assembly may be of a same or similar structure, a symmetric or partially symmetric structure, or different structures. In some embodiments, the second connecting assembly and the first connecting assembly are of a symmetric structure. For a basic design of a component structure of the second connecting assembly, a design of a connection relationship between components, and a design of a connection relationship between a component and another structure other than the component, refer to a related solution of the first connecting assembly. In addition, the second connecting assembly and the first connecting assembly are allowed to be slightly different in detailed structures or position arrangements of components.

For example, the second connecting assembly may include a first fixing bracket 32b, a second fixing bracket 33b, a first connecting arm 34b, a second connecting arm 35b, a damping part 36b, a first sub-assembly 37b, a second sub-assembly 38b, a first swing arm 41b, and a second swing arm 42b. For a structure of each component of the second connecting assembly and a connection relationship between each component and the main shaft assembly 31, the first support plate 43, and the second support plate 44, refer to the related description of the first connecting assembly. Details are not described again in this embodiment of this application.

Refer to FIG. 6 again. The folding mechanism 301 may further include a third fixing bracket 45, a fourth fixing bracket 46, a third swing arm 47, a fourth swing arm 48, and an auxiliary damping part 49. The third fixing bracket 45, the fourth fixing bracket 46, the third swing arm 47, the fourth swing arm 48, and the auxiliary damping part 49 may jointly form a third connecting assembly. The third connecting assembly may be used as a middle connecting assembly of the folding mechanism 301. In this case, the third connecting assembly is located between the first connecting assembly and the second connecting assembly. Both the third connecting assembly and the second connecting assembly are connected to the main shaft assembly 31, the first support plate 43, and the second support plate 44. Specifically, the following describes in detail with reference to related accompanying drawings. Details are not described herein again.

It should be understood that the first fixing bracket 32 of the first connecting assembly, the first fixing bracket 32b of the second connecting assembly, and the third fixing bracket 45 of the third connecting assembly may be mechanical parts independent of each other, or may be a plurality of portions of an integrated mechanical part. The second fixing bracket 33 of the first connecting assembly, the second fixing bracket 33b of the second connecting assembly, and the fourth fixing bracket 46 of the third connecting assembly may be mechanical parts independent of each other, or may be a plurality of portions of an integrated mechanical part.

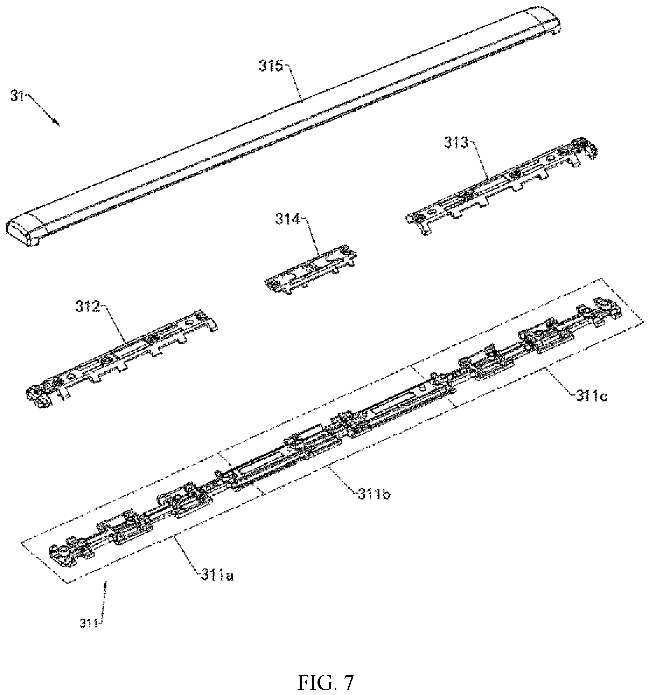

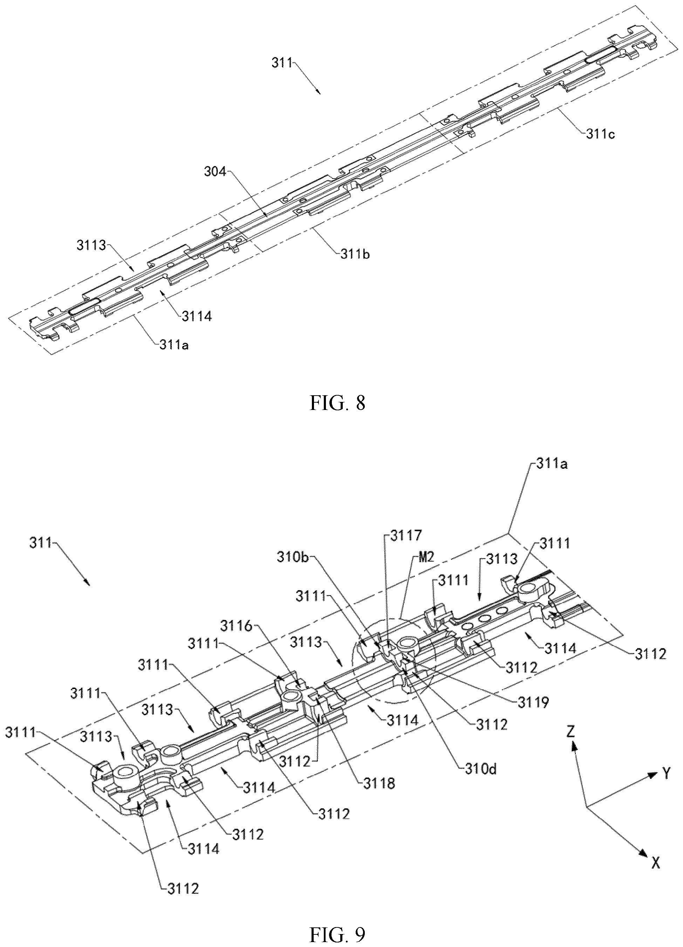

FIG. 7 is a schematic exploded view of a part of the main shaft assembly 31 shown in FIG. 6 according to an implementation. The main shaft assembly 31 includes a base 311, a first outer housing 312, a second outer housing 313, a third outer housing 314, and a main outer housing 315. With reference to FIG. 7, FIG. 8 is a schematic diagram of a structure of the base 311 shown in FIG. 7 from another angle. The base 311 may be an integrated mechanical part, or may form an integrated structure through assembling. The base 311 includes a first end part 311a, a middle part 311b, and a second end part 311c that are sequentially connected. It should be noted that, to clearly and conveniently describe a specific structure of the base 311, the first end part 311a, the middle part 311b, and the second end part 311c are schematically distinguished by using dashed lines in FIG. 7 and FIG. 8, where the dashed lines do not limit a position relationship or a structural connection relationship between the first end part 311a, the middle part 311b, and the second end part 311c. The first end part 311a, the middle part 311b, and the second end part 311c may be different areas of a same mechanical part of the base 311, or may be three independent discrete structures.

For example, the first end part 311a of the base 311 and the second end part 311c of the base 311 may be of a same or similar structure, a symmetric or partially symmetric structure, or different structures. In some embodiments, the first end part 311a of the base 311 and the second end part 311c of the base 311 are of a symmetric structure. In this way, an overall structure of the base 311 is simple, and processing costs are low. In addition, this helps improve symmetry of the base 311. Refer to FIG. 7 again. A plurality of groove structures and bump structures are formed on one side of the base 311. The structures enable the base 311 to form a plurality of fitting surfaces. Refer to FIG. 8 again. A surface on the other side of the base 311 may be a plane, that is, the base 311 has a first support surface 304.

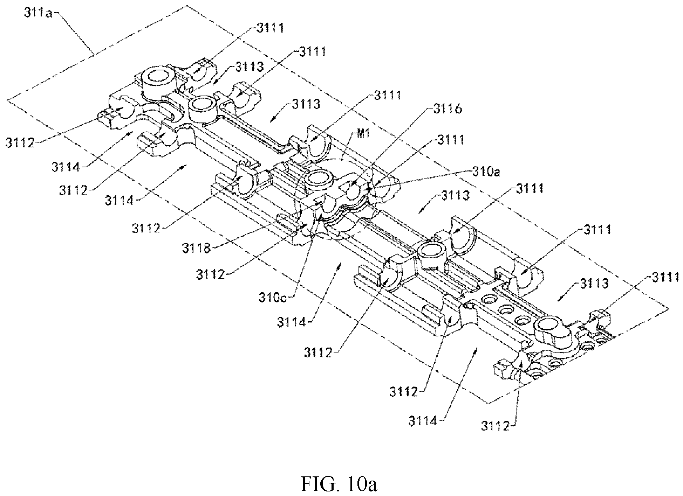

FIG. 9 is a schematic diagram of a structure of the first end part 311a of the base 311 shown in FIG. 7. FIG. 10a is a schematic diagram of a structure of the first end part 311a shown in FIG. 9 from another angle. The first end part 311a of the base 311 is provided with a plurality of first limiting grooves 3111, a plurality of second limiting grooves 3112, a plurality of first avoidance spaces 3113, a plurality of second avoidance spaces 3114, a first hinge groove 3116, a second hinge groove 3117, a third hinge groove 3118, and a fourth hinge groove 3119.

The plurality of first limiting grooves 3111 are located on one side part of the base 311. The plurality of first limiting grooves 3111 are spaced from each other in a length direction (namely, a Y-axis direction) of the main shaft assembly 311, and are disposed opposite to each other. For example, there are seven first limiting grooves 3111. Shapes and sizes of the seven first limiting grooves 3111 may be flexibly set.

The plurality of first avoidance spaces 3113 are also located on one side of the base 311. The plurality of first avoidance spaces 3113 are arranged at intervals in the length direction of the main shaft assembly 311. One first avoidance space 3113 is located between two first limiting grooves 3111, and communicates with the two first limiting grooves 3111. For example, there are four first avoidance spaces 3113. Shapes and sizes of the four first avoidance spaces 3113 may also be flexibly set.

The plurality of second limiting grooves 3112 are located on the other side part of the base 311. The plurality of second limiting grooves 3112 are spaced from each other in the Y-axis direction, and are disposed opposite to each other. For example, there are seven second limiting grooves 3112. Shapes and sizes of the seven second limiting grooves 3112 may also be flexibly set.

The plurality of second avoidance spaces 3114 are also located on the other side part of the base 311. The plurality of second avoidance spaces 3114 are arranged at intervals in the Y-axis direction. One second avoidance space 3114 is located between two second limiting grooves 3112, and communicates with the two second limiting grooves 3112. For example, there are four second avoidance spaces 3114. Shapes and sizes of the four second avoidance spaces 3114 may also be flexibly set.

The first hinge groove 3116 and the second hinge groove 3117 are disposed opposite to each other. The third hinge groove 3118 and the fourth hinge groove 3119 are disposed opposite to each other. The third hinge groove 3118 is disposed close to the first hinge groove 3116. The second hinge groove 3117 is disposed close to the fourth hinge groove 3119.

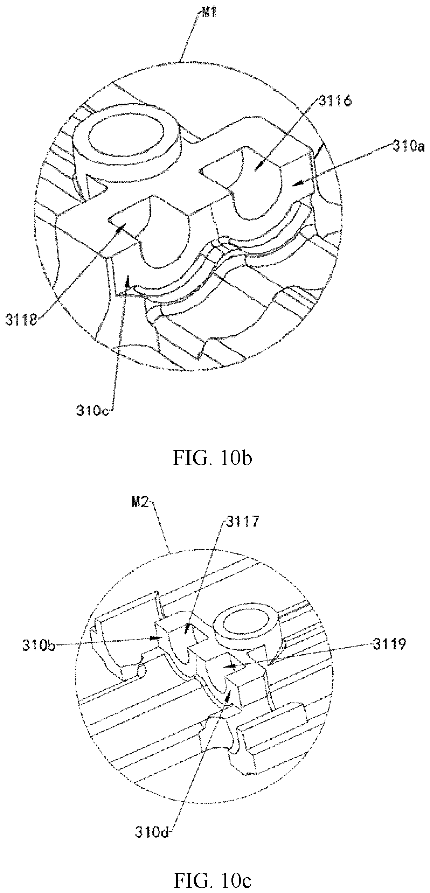

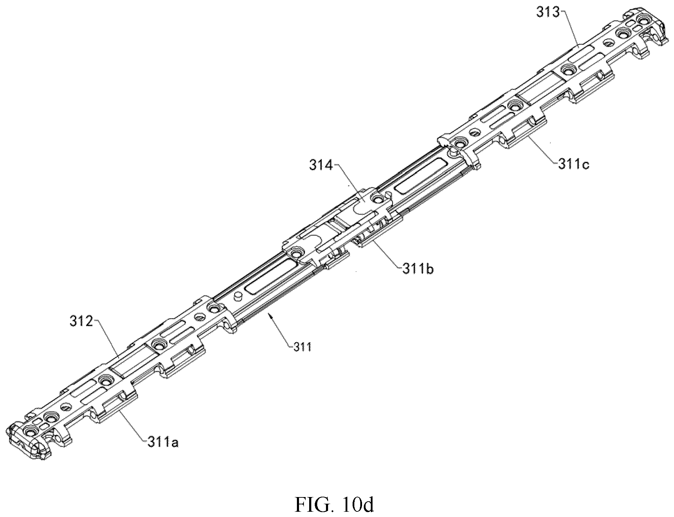

Refer to FIG. 9, FIG. 10a, FIG. 10b, and FIG. 10c. FIG. 10b is an enlarged schematic diagram of the first end part 311a shown in FIG. 10a at M1. FIG. 10c is an enlarged schematic diagram of the first end part 311a shown in FIG. 9 at M2. The base 311 further includes a first wall surface 310a, a second wall surface 31 0b, a third wall surface 310c, and a fourth wall surface 310d. The first wall surface 310a is connected to a groove wall of the first hinge groove 3116, that is, the first wall surface 310a is provided with the first hinge groove 3116. The second wall surface 310b is connected to a groove wall of the second hinge groove 3117, that is, the second wall surface 310b is provided with the second hinge groove 3117. The third wall surface 310c is connected to a groove wall of the third hinge groove 3118, and is connected to the first wall surface 310a, that is, the third wall surface 310c is provided with the third hinge groove 3118. The fourth wall surface 3 10d is connected to a groove wall of the fourth hinge groove 3119, and is connected to the second wall surface 310b, that is, the fourth wall surface 310d is provided with the fourth hinge groove 3119. It should be noted that the first wall surface 310a and the third wall surface 310c are schematically distinguished by using dashed lines in FIG. 10b. The second wall surface 310b and the fourth wall surface 310d are schematically distinguished by using dashed lines in FIG. 10c. FIG. 10d is a schematic diagram of a partial structure of the main shaft assembly 31 shown in FIG. 6. The first outer housing 312 is fixedly connected to the first end part 311a of the base 311. For example, a fastener (a bolt, a pin, or a screw) passes through the first outer housing 312 and the first end part 311a of the base 311, so that the first outer housing 312 is fixedly connected to the first end part 311a of the base 311. In another embodiment, the first outer housing 312 and the first end part 311a of the base 311 may alternatively be fixedly connected to each other through bonding, welding, or the like.

It should be understood that the first outer housing 312 may also be provided with a groove and a bump structure. When the first outer housing 312 is fastened to the first end part 311a of the base 311, the groove and the bump structure of the first outer housing 312 may fit the bump and the groove structure of the base 311, to connect to the first connecting assembly in a fitting manner. In this implementation, for a connection relationship between the second outer housing 313 and the second end part 311c of the base 311, and a connection relationship between the third outer housing 314 and the middle part 311b of the base 311 of the base 311, refer to a connection relationship between the first outer housing 312 and the first end part 311a of the base 311. It should be understood that the second end part 311c of the base 311 and the second outer housing 313 are configured to be connected to the second connecting assembly in a fitting manner. The middle part 311b of the base 311 and the third outer housing 314 are configured to be connected to the third connecting assembly in a fitting manner.

For example, the second outer housing 313 and the first outer housing 312 may be of a same or similar structure, a symmetric or partially symmetric structure, or different structures. In some embodiments, the second outer housing 313 and the first outer housing 312 may be of a symmetric structure. In this way, an overall structure of the main shaft assembly 31 is simple, and processing costs are low. In addition, this helps improve symmetry of the main shaft assembly 31.

Refer to FIG. 6 again. With reference to FIG. 7, the main outer housing 315 is fixedly connected to the base 311, and covers the first outer housing 312, the second outer housing 313, and the third outer housing 314. In this case, the first outer housing 312, the second outer housing 313, and the third outer housing 314 are located between the base 311 and the main outer housing 315. In this way, overall strength of the main shaft assembly 31 is good. For example, the main outer housing 315 may be fixedly connected to the base 311 in a snap-fit manner.

With reference to FIG. 2, when the electronic device 100 is in the unfolded state, the main shaft assembly 31 is located between the first housing 302 and the second housing 303. The base 311 of the main shaft assembly 31 faces the flexible display 2, and the first support surface 304 of the base 311 may be configured to support the bending part 22 of the flexible display 2.

With reference to FIG. 4, when the electronic device 100 is in the closed state, the main shaft assembly 31 is connected between the first housing 302 and the second housing 303. The main outer housing 315 is located on a side that is of the base 311 and that is away from the bending part 22 of the flexible display 2. A part of the main outer housing 315 is exposed outside the electronic device 100. For example, an outer surface of the main outer housing 315 is disposed to be smooth and have small roughness, so that external consistency of the electronic device 100 is improved, and user experience of the electronic device 100 is further improved.

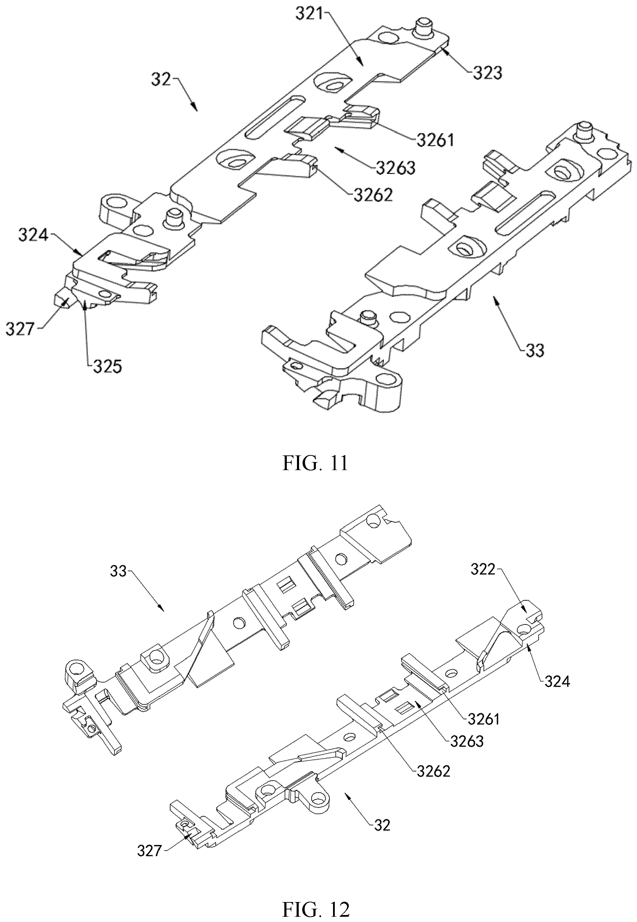

FIG. 11 is a schematic diagram of structures of the first fixing bracket 32 and the second fixing bracket 33 shown in FIG. 6. FIG. 12 is a schematic diagram of structures of the first fixing bracket 32 and the second fixing bracket 33 shown in FIG. 11 from another angle. The first fixing bracket 32 includes a top surface 321, a bottom surface 322, a first side surface 323, a second side surface 324, and a third side surface 325. The top surface 321 and the bottom surface 322 are disposed back to back. The first side surface 323 and the second side surface 324 are disposed back to back. The first side surface 323 and the second side surface 324 are connected between the top surface 321 and the bottom surface 322. The third side surface 325 is connected between the top surface 321 and the bottom surface 322, and is connected between the first side surface 323 and the second side surface 324.

The first fixing bracket 32 may further be provided with a first sliding slot 3261 and a second sliding slot 3262 that are disposed opposite to each other. Each of the first sliding slot 3261 and the second sliding slot 3262 forms an opening on the first side surface 323. The first fixing bracket 32 is further provided with a first movable notch 3263. The first movable notch 3263 forms an opening on each of the top surface 321, the bottom surface 322, and the first side surface 323. The first movable notch 3263 communicates with the first sliding slot 3261 and the second sliding slot 3262.

The first fixing bracket 32 is further provided with an arc groove 327. The arc groove 327 forms an opening on the bottom surface 322, and forms an opening on each of the second side surface 324 and the third side surface 325. There may be one or more arc grooves 327.

In this embodiment, the second fixing bracket 33 and the first fixing bracket 32 may be of a same structure, a symmetric structure, a partially symmetric structure, or different structures. This is not strictly limited in this application. In this embodiment, the second fixing bracket 33 and the first fixing bracket 32 are of a partially symmetric structure. For a basic design of a component structure of the second fixing bracket 33, a design of a connection relationship between components, and a design of a connection relationship between a component and another structure other than the component, refer to a related solution of the first fixing bracket 32. In addition, the second fixing bracket 33 and the first fixing bracket 32 are allowed to be slightly different in detailed structures or position arrangements of components.

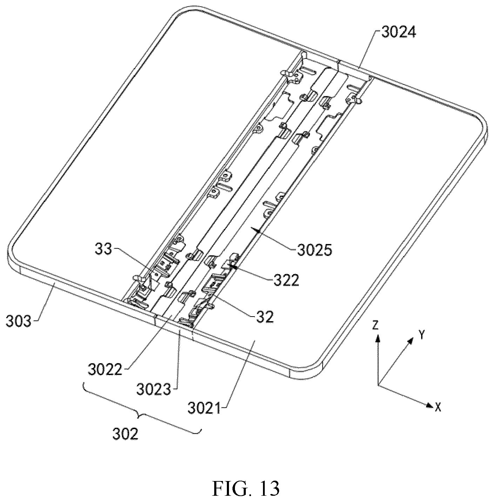

FIG. 13 is a schematic diagram of a partial structure of the folding apparatus 3 shown in FIG. 2. The first fixing bracket 32 is fixedly connected to the fixing groove 3025 of the first housing 302. For example, the first fixing bracket 32 is provided with a fastening hole, and the first housing 302 is provided with a fastening hole. A fastener (a bolt, a pin, or a screw) passes through the fastening hole of the first fixing bracket 32 and the fastening hole of the first housing 302, so that the first fixing bracket 32 is fixedly connected to the first housing 302. The bottom surface 322 of the first fixing bracket 32 backs on the second part 3022 of the first housing 302.

In another embodiment, the first fixing bracket 32 may alternatively be mounted in the fixing groove 3025 through welding, bonding, snap-fitting, or the like.

In another embodiment, a fitting structure between a positioning post and a positioning hole may be disposed between the first fixing bracket 32 and the first housing 302, to improve connection stability between the first fixing bracket 32 and the first housing 302.

In this implementation, for a connection relationship between the second fixing bracket 33 and the second housing 303, refer to a connection relationship between the first fixing bracket 32 and the first housing 302. Details are not described herein again.

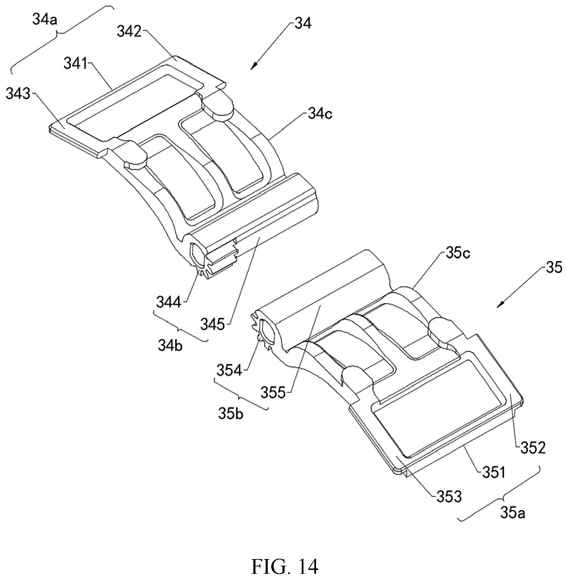

FIG. 14 is a schematic diagram of structures of the first connecting arm 34 and the second connecting arm 35 shown in FIG. 6. The first connecting arm 34 includes a sliding end 34a, a rotation end 34b, and a connecting segment 34c connected between the sliding end 34a and the rotation end 34b. The connecting segment 34c may be bent relative to the sliding end 34a, so that the first connecting arm 34 has more diversified shapes. The first connecting arm 34 may be an integrally formed mechanical part, to have high structural strength.

In this embodiment, the sliding end 34a of the first connecting arm 34 includes a first sliding body 341, a first strip-shaped bump 342, and a second strip-shaped bump 343. The first sliding body 341 may be approximately in a flat plate shape. The first strip-shaped bump 342 and the second strip-shaped bump 343 are respectively located on two sides of the first sliding body 341.

In addition, the rotation end 34b of the first connecting arm 34 includes a first gear part 344 and a first strengthening part 345. It should be understood that the first gear part 344 has a tooth-shaped structure. The first strengthening part 345 has no tooth-shaped structure, and surface flatness of the first strengthening part 345 is higher than surface flatness of the first gear part 344. The first strengthening part 345 may improve overall strength of the first connecting arm 34. In this implementation, there is one first strengthening part 345. The first strengthening part 345 is connected to a side of the first gear part 344. In another implementation, there are two first strengthening parts 345. The two first strengthening parts 345 are connected to two sides of the first gear part 344.

In another implementation, the rotation end 34b of the first connecting arm 34 may include no first strengthening part 345.

Refer to FIG. 14 again. The second connecting arm 35 includes a sliding end 35a, a rotation end 35b, and a connecting segment 35c connected between the sliding end 35a and the rotation end 35b. The connecting segment 35c may be bent relative to the sliding end 35a, so that the second connecting arm 35 has more diversified shapes. The second connecting arm 35 may be an integrally formed mechanical part, to have high structural strength.

In this embodiment, the sliding end 35a of the second connecting arm 35 includes a second sliding body 351, a third strip-shaped bump 352, and a fourth strip-shaped bump 353. The second sliding body 351 may be approximately in a flat plate shape. The third strip-shaped bump 352 and the fourth strip-shaped bump 353 are respectively located on two sides of the second sliding body 351. In addition, the rotation end 35b of the second connecting arm 35 includes a second gear part 354 and a second strengthening part 355. It should be understood that the second gear part 354 has a tooth-shaped structure. The second strengthening part 355 has no tooth-shaped structure. Surface flatness of the second strengthening part 355 is higher than surface flatness of the second gear part 354. The second strengthening part 355 may improve overall strength of the second connecting arm 35. In this implementation, there is one second strengthening part 355. The second strengthening part 355 is connected to a side of the second gear part 354. In another implementation, there are two second strengthening parts 355. The two second strengthening parts 355 are connected to two sides of the second gear part 354.

In another implementation, the rotation end 35b of the second connecting arm 35 may include no second strengthening part 355.

With reference FIG. 14 and FIG. 9, FIG. 15 is a schematic diagram of a partial structure of the folding mechanism 301 shown in FIG. 5. The sliding end 34a of the first connecting arm 34 is slidably connected to the first fixing bracket 32. The rotation end 34b of the first connecting arm 34 is rotatably connected to the main shaft assembly 31. In another embodiment, the sliding end 34a of the first connecting arm 34 may alternatively be fixedly connected to the first fixing bracket 32.

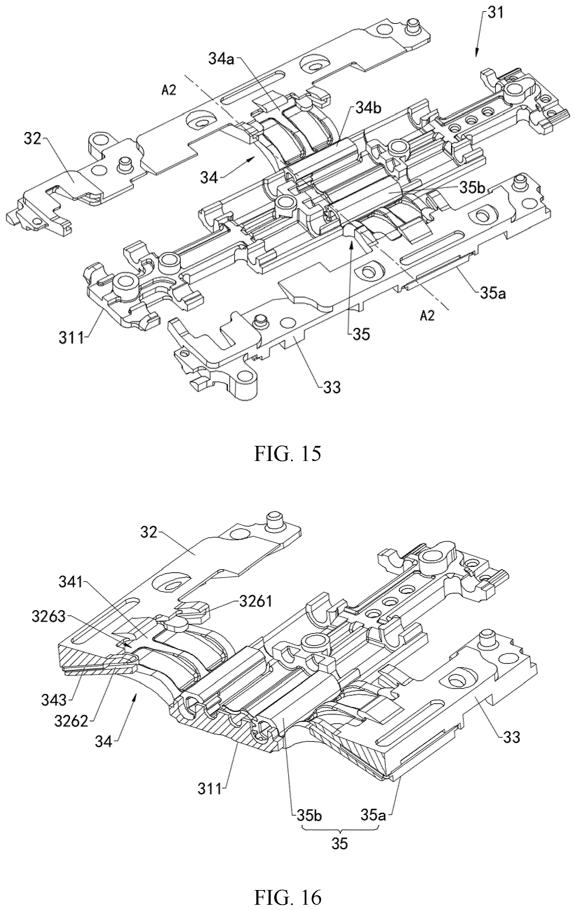

For example, the rotation end 34b of the first connecting arm 34 is located in the first avoidance space 3113 of the base 311. The rotation end 34b of the first connecting arm 34 may rotate relative to the base 311 in the first avoidance space 3113. A rotation axis of the rotation end 34b of the first connecting arm 34 may be parallel to a Y-axis extension direction. It should be noted that FIG. 15 shows only a position relationship between the rotation end 34b of the first connecting arm 34 and the base 311. The following specifically describes a connection relationship between the rotation end 34b of the first connecting arm 34 and the base 311 with reference to related accompanying drawings.

With reference to FIG. 14 and FIG. 9, FIG. 16 is an A2-A2 schematic sectional view of a part of the folding mechanism 301 shown in FIG. 15. The first sliding body 341 of the sliding end 34a of the first connecting arm 34 is disposed in the first movable notch 3263. The first strip-shaped bump 342 of the first connecting arm 34 is disposed in the first sliding slot 3261 of the first fixing bracket 32, and the first strip-shaped bump 342 is slidably connected to the first sliding slot 3261. The second strip-shaped bump 343 of the first connecting arm 34 is disposed in the second sliding slot 3262 of the first fixing bracket 32. The second strip-shaped bump 343 of the first connecting arm 34 may be slidably connected to the second sliding slot 3262 of the first fixing bracket 32.

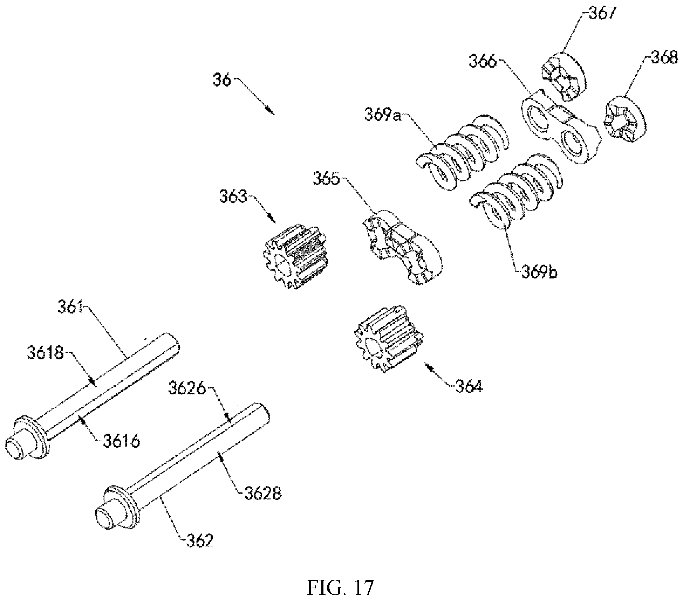

Refer to FIG. 15 and FIG. 16 again. With reference to FIG. 14 and FIG. 9 again, the sliding end 35a of the second connecting arm 35 is slidably connected to the second fixing bracket 33. The rotation end 35b of the second connecting arm 35 is rotatably connected to the main shaft assembly 31. Based on a same or similar inventive concept, for a connection relationship between the sliding end 35a of the second connecting arm 35 and the second fixing bracket 33, refer to a connection relationship between the sliding end 34a of the first connecting arm 34 and the first fixing bracket 32. For a connection relationship between the rotation end 35b of the second connecting arm 35 and the main shaft assembly 31, refer to a connection relationship between the rotation end 34b of the first connecting arm 34 and the main shaft assembly 31. Details are not described herein again. FIG. 17 is a schematic exploded view of the damping part 36 shown in FIG. 6. The damping part 36 includes a first pin shaft 361, a second pin shaft 362, a first gear 363, a second gear 364, a first fitting part 365, a second fitting part 366, a third fitting part 367, a fourth fitting part 368, a first elastic part 369a, and a second elastic part 369b.

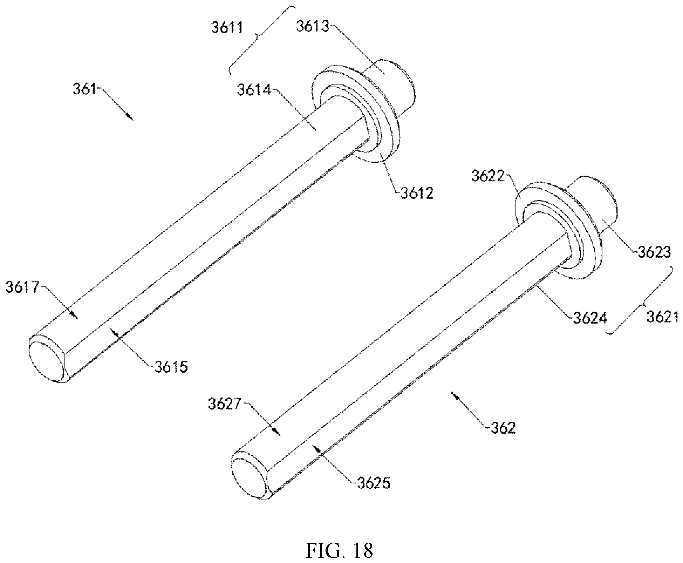

With reference to FIG. 17, FIG. 18 is a structural diagram of structures of the first pin shaft 361 and the second pin shaft 362 shown in FIG. 17 from another angle. The first pin shaft 361 includes a first shaft part 3611 and a first limiting flange 3612. The first shaft part 3611 may be rod-shaped. The first limiting flange 3612 may be ring-shaped. In addition, the first shaft part 3611 includes a first segment 3613 and a second segment 3614 connected to the first segment 3613. The first limiting flange 3612 is connected to a peripheral side surface of the first segment 3613.

The first segment 3613 may be at least partially cylindrical. A cross section of the second segment 3614 is not in a standard circle, and the second segment 3614 includes a first surface 3615 and a second surface 3616 (as shown in FIG. 17) that are disposed back to back, and a third surface 3617 and a fourth surface 3618 (as shown in FIG. 17) that are disposed back to back. The third surface 3617 and the fourth surface 3618 are connected between the first surface 3615 and the second surface 3616. The first surface 3615 may be a concave arc surface. The second surface 3616 may be a concave arc surface. The third surface 3617 may be a convex arc surface. The fourth surface 3618 may be a convex arc surface.

In another embodiment, the first surface 3615 may alternatively be a plane. The second surface 3616 may alternatively be a plane.

In another embodiment, the first surface 3615 may alternatively be a convex arc surface, but curvature of the first surface 3615 is less than curvature of the third surface 3617 and curvature of the fourth surface 3618. The second surface 3616 may alternatively be a convex arc surface, but curvature of the second surface 3616 is also less than curvature of the third surface 3617 and curvature of the fourth surface 3618.

In another embodiment, surface shapes of the first surface 3615, the second surface 3616, the third surface 3617, and the fourth surface 3618 are not specifically limited.

In another implementation, the first pin shaft 361 may alternatively use another structure.

Refer to FIG. 17 again. The second pin shaft 362 includes a second shaft part 3621 and a second limiting flange 3622. The second shaft part 3621 may be rod-shaped. The second limiting flange 3622 may be in a ring-shaped. In addition, the second shaft part 3621 includes a third segment 3623 and a fourth segment 3624 connected to the third segment 3623. The second limiting flange 3622 is connected to a peripheral side surface of the third segment 3623.

For example, the third segment 3623 may be cylindrical. A cross section of the fourth segment 3624 is not in a standard circle, and the fourth segment 3624 includes a first surface 3625 and a second surface 3626 that are disposed back to back, and a third surface 3627 and a fourth surface 3628 that are disposed back to back. The third surface 3627 and the fourth surface 3628 are connected between the first surface 3625 and the second surface 3626. The first surface 3625 may be a concave arc surface. The second surface 3626 may be a concave arc surface. The third surface 3627 may be a convex arc surface. The fourth surface 3628 may be a convex arc surface.

In another embodiment, the first surface 3625 may alternatively be a plane, and the second surface 3626 may alternatively be a plane.

In another embodiment, the first surface 3625 may alternatively be a convex arc surface, but curvature of the first surface 3625 is less than curvature of the third surface 3627 and curvature of the fourth surface 3628. The second surface 3626 may also be a convex arc surface, but curvature of the second surface 3626 is also less than curvature of the third surface 3627 and curvature of the fourth surface 3628.

In another embodiment, surface shapes of the first surface 3625, the second surface 3626, the third surface 3627, and the fourth surface 3628 are not specifically limited.

In another implementation, the second pin shaft 362 may alternatively use another structure.

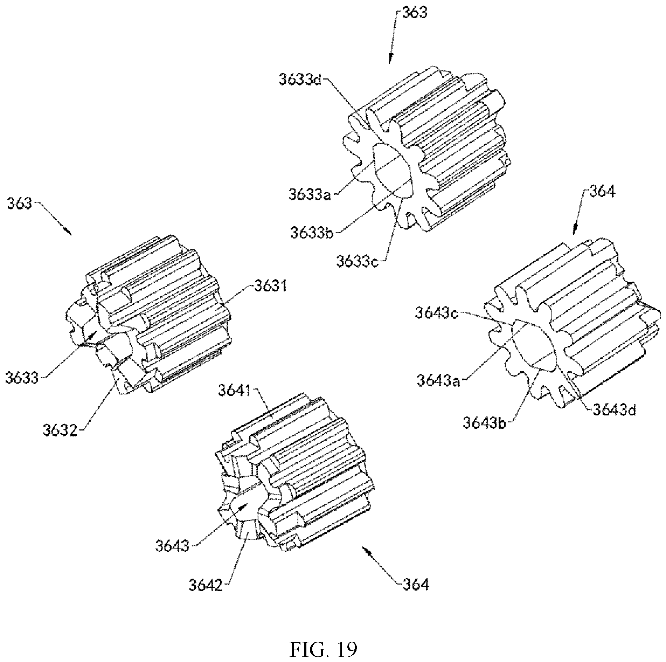

FIG. 19 is a schematic diagram of structures of the first gear 363 and the second gear 364 shown in FIG. 17 at different angles. The first gear 363 includes a first gear part 3631 and a plurality of first protrusions 3632. The first gear part 3631 may be provided with a first pin shaft hole 3633. The plurality of first protrusions 3632 are located at an end of the first gear part 3631, the plurality of first protrusions 3632 are arranged in a ring shape and are spaced from each other, and the plurality of first protrusions 3632 are disposed around the first pin shaft hole 3633 of the first gear part 3631. An end face that is of the first gear 363 and that is away from the first protrusion 3632 may be a plane. The first gear 363 may be an integrally formed mechanical part, to have high structural strength. It may be understood that, when there are a plurality of first protrusions 3632, structural symmetry of the first gear 363 may be improved, so that when the first gear 363 is used in the folding mechanism 301, overall stability of the folding mechanism 301 is good. In another implementation, there may alternatively be one first protrusion 3632.

The first pin shaft hole 3633 includes a first wall 3633a and a second wall 3633b that are disposed opposite to each other, and a third wall 3633c and a fourth wall 3633d that are disposed opposite to each other. The third wall 3633c and the fourth wall 3633d are connected between the first wall 3633a and the second wall 3633b. In this embodiment, both the first wall 3633a and the second wall 3633b are planes. Both the third wall 3633c and the fourth wall 3633d are convex arc surfaces. In another implementation, a shape of each wall surface of the first pin shaft hole 3633 is not specifically limited.

Refer to FIG. 19 again. With reference to FIG. 17, the second gear 364 includes a second gear part 3641 and a plurality of second protrusions 3642. The second gear part 3641 may be provided with a second pin shaft hole 3643. The plurality of second protrusions 3642 are located at an end of the second gear part 3641, the plurality of second protrusions 3642 are arranged in a ring shape and are spaced from each other, and the plurality of second protrusions 3642 are disposed around the second pin shaft hole 3643 of the second gear part 3641. An end face that is of the second gear 364 and that is away from the second protrusion 3642 may be a plane. The second gear 364 may be an integrally formed mechanical part, to have high structural strength. It may be understood that, when there are a plurality of second protrusions 3642, structural symmetry of the second gear 364 may be improved, so that when the second gear 364 is used in the folding mechanism 301, overall stability of the folding mechanism 301 is good. In another implementation, there may alternatively be one second protrusion 3642.

The second pin shaft hole 3643 includes a first wall 3643a and a second wall 3643b that are disposed opposite to each other, and a third wall 3643c and a fourth wall 3643d that are disposed opposite to each other. The third wall 3643c and the fourth wall 3643d are connected between the first wall 3643a and the second wall 3643b. In this embodiment, both the first wall 3643a and the second wall 3643b may be planes. Both the third wall 3643c and the fourth wall 3643d may be convex arc surfaces. In another implementation, a shape of a wall surface of the second pin shaft hole 3643 is not specifically limited.

With reference to FIG. 18 and FIG. 19, FIG. 20 is a schematic diagram of a partial structure of the damping part 36 shown in FIG. 6. The second segment 3614 of the first shaft part 3611 of the first pin shaft 361 is inserted into the first gear 363. The second segment 3614 of the first shaft part 3611 of the first pin shaft 361 passes through the first pin shaft hole 3633 of the first gear 363. The first gear 363 abuts against the first limiting flange 3612 of the first pin shaft 361. In this way, the first gear 363 no longer slides out of the first pin shaft 361 in a negative direction of a Y-axis. In addition, when the first pin shaft 361 is inserted into the first gear 363, the plurality of first protrusions 3632 of the first gear 363 back on the first limiting flange 3612.

It may be understood that, when the second segment 3614 of the first shaft part 3611 of the first pin shaft 361 is inserted into the first gear 363, the first wall 3633a, the second wall 3633b, the third wall 3633c, and the fourth wall 3633d of the first pin shaft hole 3633 fit the first surface 3615, the second surface 3616, the third surface 3617, and the fourth surface 3618 of the second segment 3614 of the first pin shaft 361. Therefore, when the first pin shaft 361 rotates, the first gear 363 may also rotate with the first pin shaft 361.

In another embodiment, the first gear 363 may be fastened to the first pin shaft 361 through welding, bonding, or the like. In this case, when the first pin shaft 361 rotates, the first gear 363 may also rotate relative to the first pin shaft 361.

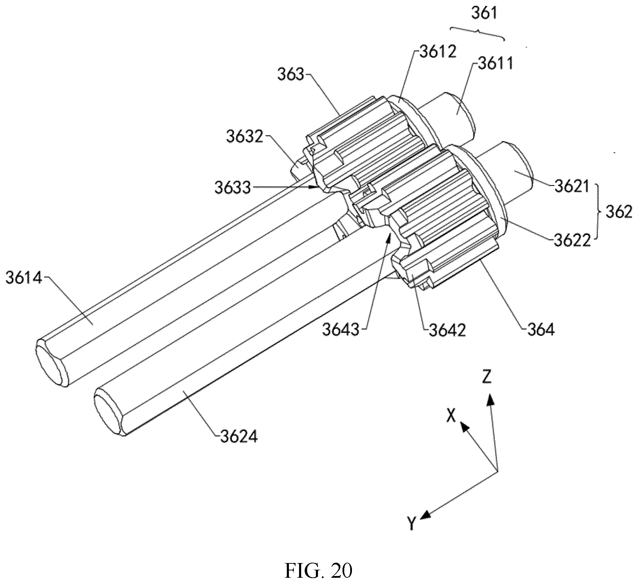

Refer to FIG. 20 again. With reference to FIG. 18 and FIG. 19, a fourth segment 3624 of the second shaft part 3621 of the second pin shaft 362 is inserted into the second gear 364. The fourth segment 3624 of the second shaft part 3621 of the second pin shaft 362 passes through the second pin shaft hole 3643 of the second gear 364. The second gear 364 abuts against the second limiting flange 3622 of the second pin shaft 362. In this way, the second gear 364 no longer slides out of the second pin shaft 362 in a negative direction of a Y-axis. In addition, when the second pin shaft 362 is inserted into the second gear 364, the plurality of second protrusions 3642 of the second gear 364 back on the second limiting flange 3622.

In this implementation, when the fourth segment 3624 of the second shaft part 3621 of the second pin shaft 362 is inserted into the second gear 364, the first wall 3643a, the second wall 3643b, the third wall 3643c, and the fourth wall 3643d of the second pin shaft hole 3643 fit the first surface 3625, the second surface 3626, the third surface 3627, and the fourth surface 3628 of the fourth segment 3624 of the second pin shaft 362. Therefore, when the second pin shaft 362 rotates, the second gear 364 may also rotate with the second pin shaft 362.

In another embodiment, the second gear 364 may be fastened to the second pin shaft 362 through welding or bonding. In this case, when the second pin shaft 362 rotates, the second gear 364 may also rotate relative to the second pin shaft 362.

For example, the second gear 364 is engaged with the first gear 363. In this way, the second gear 364 and the first gear 363 may be synchronous in motion.

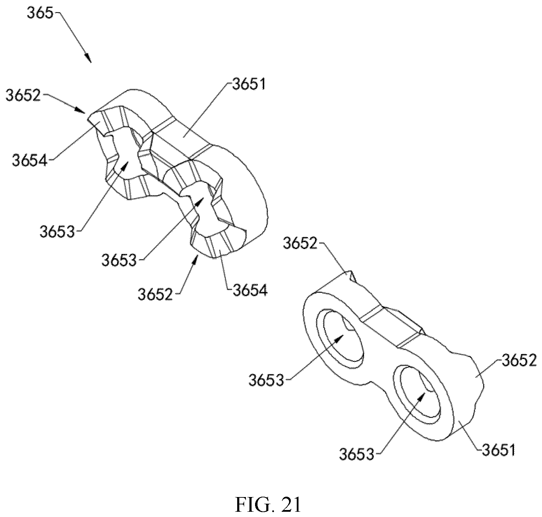

FIG. 21 is a schematic diagram of a structure of the first fitting part 365 shown in FIG. 17 at different angles. The first fitting part 365 includes a first limiting plate 3651 and a plurality of first bump groups 3652. The plurality of first bump groups 3652 are fastened to a same side surface of the first limiting plate 3651 at intervals. The first fitting part 365 may be an integrally formed mechanical part, to have high structural strength. For example, there are two first bump groups 3652. It may be understood that the first fitting part 365 may also include two separate fitting sub-parts. One fitting sub-part includes one part of the first limiting plate 3651 and one first bump group 3652. The other fitting sub-part includes the other part of the first limiting plate 3651 and the other first bump group 3652.

The first limiting plate 3651 is provided with a plurality of first through holes 3653. The plurality of first through holes 3653 are disposed at intervals. The plurality of first bump groups 3652 are disposed in a one-to-one correspondence with the plurality of first through holes 3653. Each first bump group 3652 may include a plurality of first bumps 3654. The plurality of first bumps 3654 are arranged in a ring shape and are spaced from each other. The plurality of first bumps 3654 are disposed around the first through hole 3653, and a groove is formed between two adjacent first bumps 3654. It may be understood that, when there are a plurality of first bumps 3654, structural symmetry of the first fitting part 365 may be improved, so that when the first fitting part 365 is used in the folding mechanism 301, overall stability of the folding mechanism 301 is good. In another implementation, there may alternatively be one first bump 3654.

For example, there are two first through holes 3653. The first through hole 3653 may be a round hole.

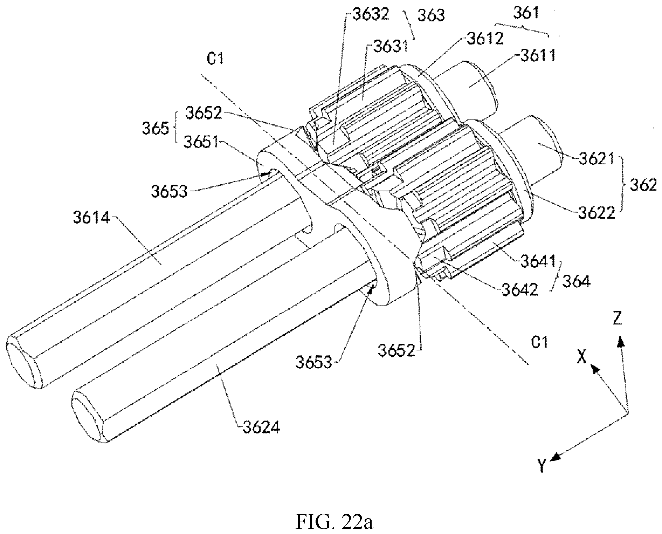

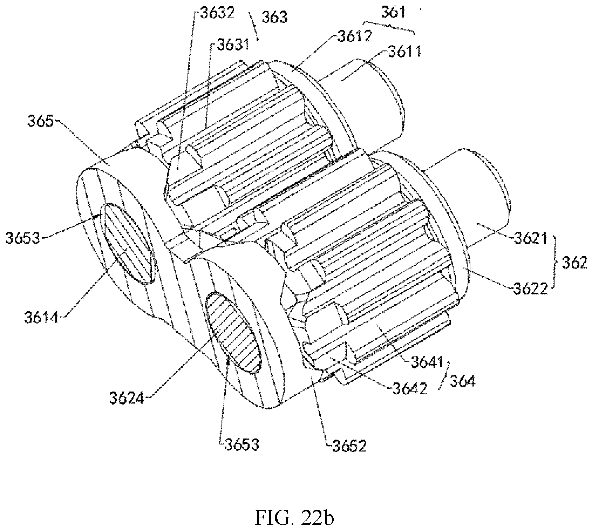

FIG. 22a is a schematic diagram of a partial structure of the damping part 36 shown in FIG. 6. FIG. 22b is a C1-C1 schematic sectional view of a part of the damping part 36 shown in FIG. 22a. The second segment 3614 of the first shaft part 3611 of the first pin shaft 361 is inserted into the first fitting part 365. The second segment 3614 of the first shaft part 3611 of the first pin shaft 361 passes through one first through hole 3653 of the first fitting part 365. The fourth segment 3624 of the second shaft part 3621 of the second pin shaft 362 is also inserted into the first fitting part 365. The fourth segment 3624 of the second shaft part 3621 of the second pin shaft 362 passes through the other first through hole 3653 of the first fitting part 365. In this way, when the first pin shaft 361 rotates by using the first pin shaft 361 as a rotation axis, the first fitting part 365 does not rotate with the first pin shaft 361. When the second pin shaft 362 rotates by using the second pin shaft 362 as a rotation axis, the first fitting part 365 does not rotate with the second pin shaft 362.

In addition, a 1^{st} first bump group 3652 of the first fitting part 365 and the first protrusion 3632 of the first gear 363 are disposed opposite to each other, and form a cam structure. A 2^{nd} first bump group 3652 of the first fitting part 365 and the second protrusion 3642 of the second gear 364 are disposed opposite to each other, and form a cam structure. In this case, when the first gear 363 rotates with the first pin shaft 361, and the second gear 364 rotates with the second pin shaft 362, the first fitting part 365 may be close to or away from the first gear 363 and the second gear 364 (that is, the first fitting part 365 is slidably connected to the first pin shaft 361 and the second pin shaft 362, and a sliding direction is a Y-axis direction).

In addition, when the second segment 3614 of the first shaft part 3611 of the first pin shaft 361 passes through one first through hole 3653 of the first fitting part 365, a part of a surface of the second segment 3614 is attached to a part of a surface of the first through hole 3653, and a part of a surface of the second segment 3614 is separated from a part of a surface of the first through hole 3653. In this way, a shape of the first through hole 3653 of the first fitting part 365 fits each surface of the second segment 3614 of the first pin shaft 361, to ensure that the first pin shaft 361 does not interfere with sliding of the first fitting part 365 in the Y-axis direction. Similarly, a shape of the first through hole 3653 of the first fitting part 365 fits each surface of the fourth segment 3624 of the second pin shaft 362, to ensure that the first pin shaft 361 and the second pin shaft 362 do not interfere with sliding of the first fitting part 365 in the Y-axis direction.

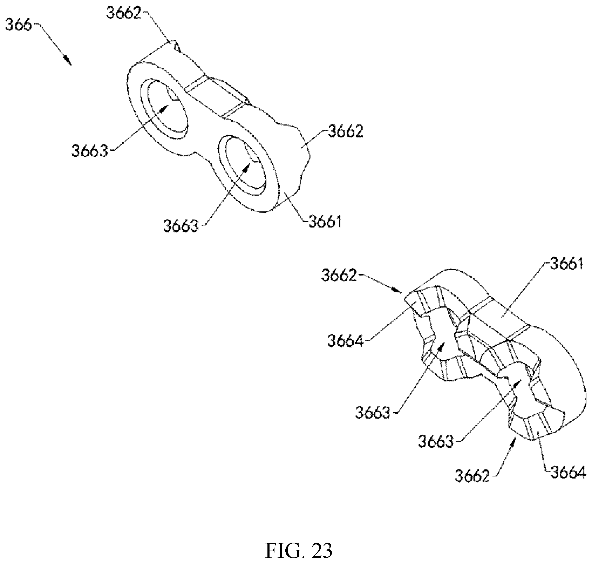

FIG. 23 is a schematic diagram of a structure of the second fitting part 366 shown in FIG. 17 at different angles. The second fitting part 366 includes a second limiting plate 3661 and a plurality of second bump groups 3662. The plurality of second bump groups 3662 are disposed on a same side surface of the second limiting plate 3661 at intervals. A surface that is of the second limiting plate 3661 and that is away from the second bump group 3662 may be a plane. The second fitting part 366 may be an integrally formed mechanical part, to have high structural strength. For example, there are two second bump groups 3662. It may be understood that the second fitting part 366 may also include two separate fitting sub-parts. One fitting sub-part includes one part of the second limiting plate 3661 and one second bump group 3662. The other fitting sub-part includes the other part of the second limiting plate 3661 and the other second bump group 3662.

The second limiting plate 3661 is provided with a plurality of second through holes 3663, and the plurality of second through holes 3663 are disposed at intervals. The plurality of second bump groups 3662 are disposed in a one-to-one correspondence with the plurality of second through holes 3663. Each second bump group 3662 may include a plurality of second bumps 3664. The plurality of second bumps 3664 are arranged in a ring shape and are spaced from each other. The plurality of second bumps 3664 are disposed around the second through hole 3663, and a groove is formed between two adjacent second bumps 3664. In another implementation, there may alternatively be one second bump 3664.

For example, there are two second through holes 3663. The second through hole 3663 may be a round hole.

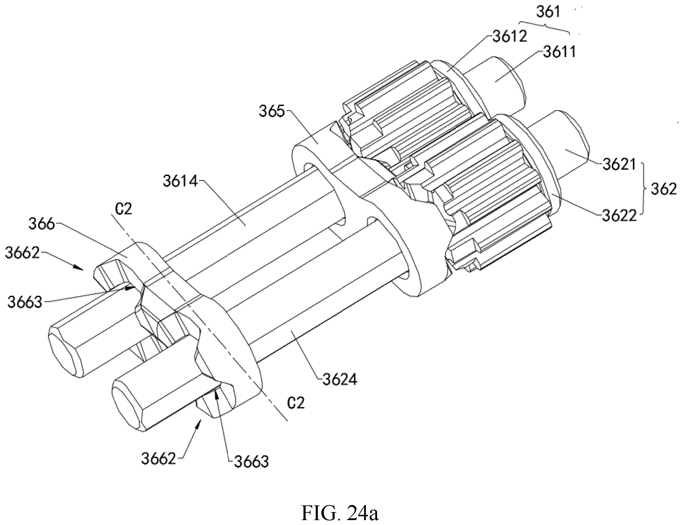

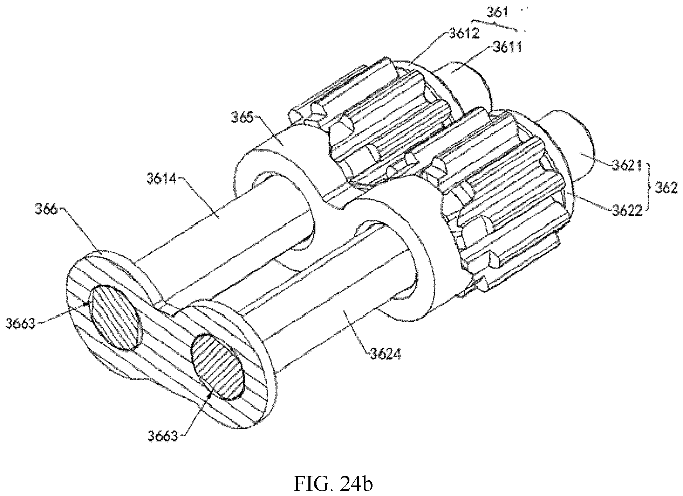

With reference to FIG. 23, FIG. 24a is a schematic diagram of a partial structure of the damping part 36 shown in FIG. 6; and FIG. 24b is a C2-C2 schematic sectional view of a part of the damping part 36 shown in FIG. 24a. The second segment 3614 of the first shaft part 3611 of the first pin shaft 361 is inserted into the second fitting part 366. The second segment 3614 of the first shaft part 3611 of the first pin shaft 361 passes through one second through hole 3663 of the second fitting part 366. The fourth segment 3624 of the second shaft part 3621 of the second pin shaft 362 is also inserted into the second fitting part 366. The fourth segment 3624 of the second shaft part 3621 of the second pin shaft 362 passes through the other second through hole 3663 of the second fitting part 366. In this way, when the first pin shaft 361 rotates by using the first pin shaft 361 as a rotation axis, the second fitting part 366 does not rotate with the first pin shaft 361. When the second pin shaft 362 rotates by using the second pin shaft 362 as a rotation axis, the second fitting part 366 does not rotate with the second pin shaft 362.

For example, the second fitting part 366 is located on a side that is of the first fitting part 365 and that is away from the first gear 363 and the second gear 364. In this case, the first gear 363 is located on a side that is of the first fitting part 365 and that is away from the second fitting part 366. The second gear 364 is located on a side that is of the first fitting part 365 and that is away from the second fitting part 366. The first fitting part 365 and the second fitting part 366 are disposed opposite to each other. In addition, the second bump group 3662 of the second fitting part 366 backs on the first fitting part 365.

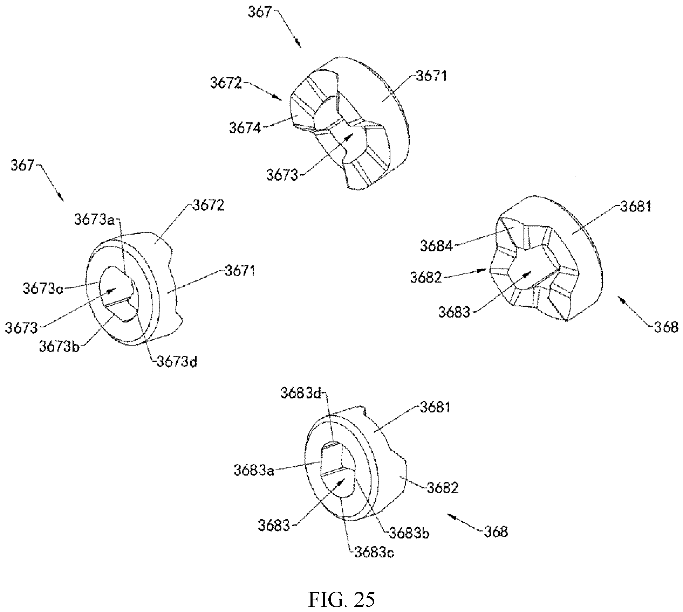

FIG. 25 is a schematic diagram of structures of the third fitting part 367 and the fourth fitting part 368 shown in FIG. 17 at different angles. The third fitting part 367 includes a third limiting plate 3671 and a third bump group 3672. The third bump group 3672 is fastened to one side surface of the third limiting plate 3671. A surface that is of the third limiting plate 3671 and that is away from the third bump group 3672 may be a plane. The third fitting part 367 may be an integrally formed mechanical part, to have high structural strength. For example, there is one third bump group 3672. The third limiting plate 3671 is provided with a third pin shaft hole 3673. The third bump group 3672 may include a plurality of third bumps 3674. The plurality of third bumps 3674 are arranged in a ring shape and are spaced from each other. The plurality of third bumps 3674 are disposed around the third pin shaft hole 3673, and a groove is formed between two adjacent third bumps 3674. In another implementation, there may alternatively be one third bump 3674.

For example, there is one third pin shaft hole 3673. The third pin shaft hole 3673 includes a first wall 3673a and a second wall 3673b that are disposed opposite to each other, and a third wall 3673c and a fourth wall 3673d that are disposed opposite to each other. The third wall 3673c and the fourth wall 3673d are connected between the first wall 3673a and the second wall 3673b. The first wall 3673a may be a plane. The second wall 3673b may be a plane. The third wall 3673c may be an arc surface. The fourth wall 3673d may be an arc surface. In another implementation, a shape of each wall surface of the third pin shaft hole 3673 is not specifically limited.

Refer to FIG. 25 again. The fourth fitting part 368 includes a fourth limiting plate 3681 and a fourth bump group 3682. The fourth bump group 3682 is fastened to one side surface of the fourth limiting plate 3681. A surface that is of the fourth limiting plate 3681 and that is away from the fourth bump group 3682 may be a plane. The fourth fitting part 368 may be an integrally formed mechanical part, to have high structural strength. For example, there is one fourth bump group 3682.

The fourth limiting plate 3681 is provided with a fourth pin shaft hole 3683. The fourth bump group 3682 may include a plurality of fourth bumps 3684. The plurality of fourth bumps 3684 are arranged in a ring shape and are spaced from each other. The plurality of fourth bumps 3684 are disposed around the fourth pin shaft hole 3683, and a groove is formed between two adjacent fourth bumps 3684. In another implementation, there may alternatively be one fourth bump 3684. For example, there is one fourth pin shaft hole 3683. The fourth pin shaft hole 3683 includes a first wall 3683a and a second wall 3683b that are disposed opposite to each other, and a third wall 3683c and a fourth wall 3683d that are disposed opposite to each other. The third wall 3683c and the fourth wall 3683d are connected between the first wall 3683a and the second wall 3683b. The first wall 3683a may be a plane. The second wall 3683b may be a plane. The third wall 3683c may be a convex arc surface. The fourth wall 3683d may be a convex arc surface. In another implementation, a shape of each wall surface of the fourth pin shaft hole 3683 is not specifically limited.

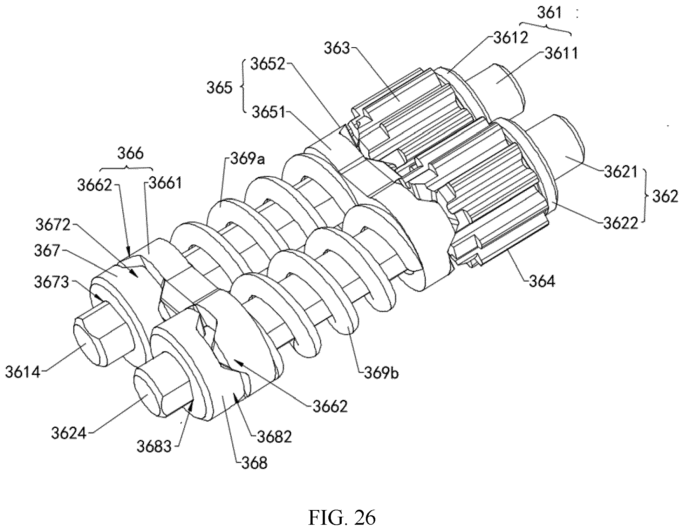

With reference to FIG. 25, FIG. 26 is an enlarged schematic diagram of a partial structure of the damping part 36 shown in FIG. 6. The second segment 3614 of the first shaft part 3611 of the first pin shaft 361 is inserted into the third fitting part 367. The second segment 3614 of the first shaft part 3611 of the first pin shaft 361 passes through the third pin shaft hole 3673 of the third fitting part 367. In this case, the first fitting part 365 and the second fitting part 366 are located between the first gear 363 and the third fitting part 367. The first gear 363, the second fitting part 366, and the third fitting part 367 are disposed at intervals.

It may be understood that, the first wall 3673a, the second wall 3673b, the third wall 3673c, and the fourth wall 3673d of the third pin shaft hole 3673 fit the surfaces of the second segment 3614 of the first pin shaft 361, so that when the first pin shaft 361 rotates by using the first pin shaft 361 as a rotation axis, the third fitting part 367 may also rotate with the first pin shaft 361.

In another embodiment, the third fitting part 367 may be fastened to the first pin shaft 361 through welding, bonding, or the like. In this case, when the first pin shaft 361 rotates by using the first pin shaft 361 as a rotation axis, the third fitting part 367 may also rotate with the first pin shaft 361. Refer to FIG. 26 again. With reference to FIG. 25, the fourth segment 3624 of the second shaft part 3621 of the second pin shaft 362 is inserted into the fourth fitting part 368. The fourth segment 3624 of the second shaft part 3621 of the second pin shaft 362 passes through the fourth pin shaft hole 3683 of the fourth fitting part 368. The fourth fitting part 368 is located on a side that is of the second fitting part 366 and that is away from the first fitting part 365. The fourth fitting part 368, the second gear 364, and the first fitting part 365 are disposed at intervals.

It may be understood that, the first wall 3683a, the second wall 3683b, the third wall 3683c, and the fourth wall 3683d of the fourth pin shaft hole 3683 fit the surfaces of the fourth segment 3624 of the second pin shaft 362, so that when the second pin shaft 362 rotates, the fourth fitting part 368 may also rotate with the second pin shaft 362.

In another embodiment, the fourth fitting part 368 may be fastened to the second pin shaft 362 through welding, bonding, or the like. In this case, when the second pin shaft 362 rotates, the fourth fitting part 368 may also rotate with the second pin shaft 362.

Refer to FIG. 26 again. With reference to FIG. 23 and FIG. 25, the third bump group 3672 of the third fitting part 367 and a 1^{st} second bump group 3662 of the second fitting part 366 are disposed opposite to each other, and form cam structures. The fourth bump group 3682 of the fourth fitting part 368 and a 2^{nd} second bump group 3662 of the second fitting part 366 are disposed opposite to each other, and form cam structures. In this way, when the third fitting part 367 rotates with the first pin shaft 361, and the fourth fitting part 368 rotates with the second pin shaft 362, the second fitting part 366 may be close to or away from the third fitting part 367 and the fourth fitting part 368 (that is, the second fitting part 366 is slidably connected to the first pin shaft 361 and the second pin shaft 362, and a sliding direction is a Y-axis direction).

Refer to FIG. 26 again. The first elastic part 369a is an elastic structure, and is prone to deformation under external force. The first elastic part 369a may be a spring, a dome, a flexible part (for example, an elastic rubber block) with elastic force, or the like. In this implementation, the first elastic part 369a is described by using a spring as an example.

In addition, the second elastic part 369b is also an elastic structure, and is prone to deformation under external force. The second elastic part 369b may be a spring, a dome, a flexible part (for example, an elastic rubber block) with elastic force, or the like. In this implementation, the second elastic part 369b is described by using a spring as an example.

The first elastic part 369a is sleeved on the second segment 3614 of the first shaft part 3611 of the first pin shaft 361. The first elastic part 369a is located between the first fitting part 365 and the second fitting part 366, one end of the first elastic part 369a abuts against the first limiting plate 3651 of the first fitting part 365, and the other end of the first elastic part 369a abuts against the second limiting plate 3661 of the second fitting part 366. In addition, the second elastic part 369b is sleeved on the second pin shaft 362. The second elastic part 369b is located between the first fitting part 365 and the second fitting part 366, one end of the second elastic part 369b abuts against the first limiting plate 3651 of the first fitting part 365, and the other end of the second elastic part 369b abuts against the second limiting plate 3661 of the second fitting part 366.

It may be understood that, when the first elastic part 369a is in a compressed state, and the second elastic part 369b is in a compressed state, elastic force generated by the first elastic part 369a and the second elastic part 369b may squeeze the first fitting part 365 to the first gear 363 and the second gear 364. In addition, the elastic force generated by the first elastic part 369a and the second elastic part 369b may also squeeze the second fitting part 366 to the third fitting part 367 and the fourth fitting part 368.

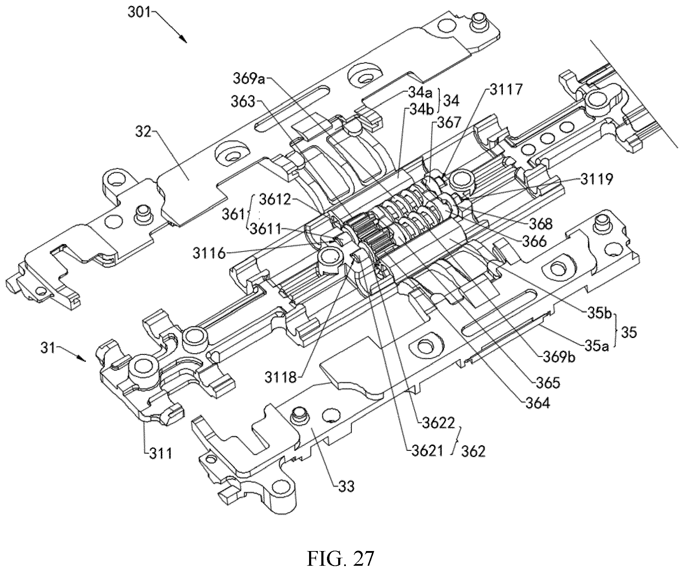

With reference to FIG. 26, FIG. 27 is a schematic diagram of a partial structure of the folding mechanism 301 shown in FIG. 5. The first pin shaft 361 and the second pin shaft 362 are rotatably connected to the base 311. The first gear 363 and the third fitting part 367 that are on the first pin shaft 361 may be rotatably connected to the base 311 by using the first pin shaft 361. The second gear 364 and the fourth fitting part 368 that are on the second pin shaft 362 may be rotatably connected to the base 311 by using the second pin shaft 362. The first fitting part 365 and the second fitting part 366 are rotatably connected to the base 311 by using the first pin shaft 361 and the second pin shaft 362.

For example, one end of the first shaft part 3611 of the first pin shaft 361 is disposed in the first hinge groove 3116, and may rotate relative to the first hinge groove 3116. The other end of the first shaft part 3611 of the first pin shaft 361 is disposed in the second hinge groove 3117, and may rotate relative to the second hinge groove 3117. It may be understood that the first hinge groove 3116 and the second hinge groove 3117 may limit the first pin shaft 361 to move in an X-axis direction. In addition, the first limiting flange 3612 of the first pin shaft 361 abuts against the first wall surface 310a of the base 311 (refer to FIG. 9). The third fitting part 367 abuts against the second wall surface 310b of the base 311 (refer to FIG. 9). It may be understood that the first wall surface 310a and the second wall surface 310b may limit the first pin shaft 361 to move in a Y-axis direction. In another embodiment, one end of the first shaft part 3611 of the first pin shaft 361 may abut against a groove wall of the first hinge groove 3116, and the other end of the first shaft part 3611 of the first pin shaft 361 may abut against a groove wall of the second hinge groove 3117. In this way, the groove wall of the first hinge groove 3116 and the groove wall of the second hinge groove 3117 may be configured to limit the first pin shaft 361 to move in the Y-axis direction. For example, the second pin shaft 362 is located between the first pin shaft 361 and the rotation end 35b of the second connecting arm 35. One end of the second shaft part 3621 of the second pin shaft 362 is disposed in the third hinge groove 3118, and may rotate relative to the third hinge groove 3118. The other end of the second shaft part 3621 of the second pin shaft 362 is disposed in the fourth hinge groove 3119, and may rotate relative to the fourth hinge groove 3119. It may be understood that the third hinge groove 3118 and the fourth hinge groove 3119 may limit the second pin shaft 362 to move in the X-axis direction. In addition, the second limiting flange 3622 of the second pin shaft 362 abuts against the third wall surface 310c of the base 311 (refer to FIG. 9). The fourth fitting part 368 abuts against the fourth wall surface 310d of the base 311 (refer to FIG. 9). It may be understood that the third wall surface 310c and the fourth wall surface 310d may limit the second pin shaft 362 to move in the Y-axis direction. In another embodiment, one end of the second shaft part 3621 of the second pin shaft 362 may abut against a groove wall of the third hinge groove 3118, and the other end of the second shaft part 3621 of the second pin shaft 362 may abut against a groove wall of the fourth hinge groove 3119. In this way, the groove wall of the third hinge groove 3118 and the groove wall of the fourth hinge groove 3119 may be configured to limit the second pin shaft 362 to move in the Y-axis direction.

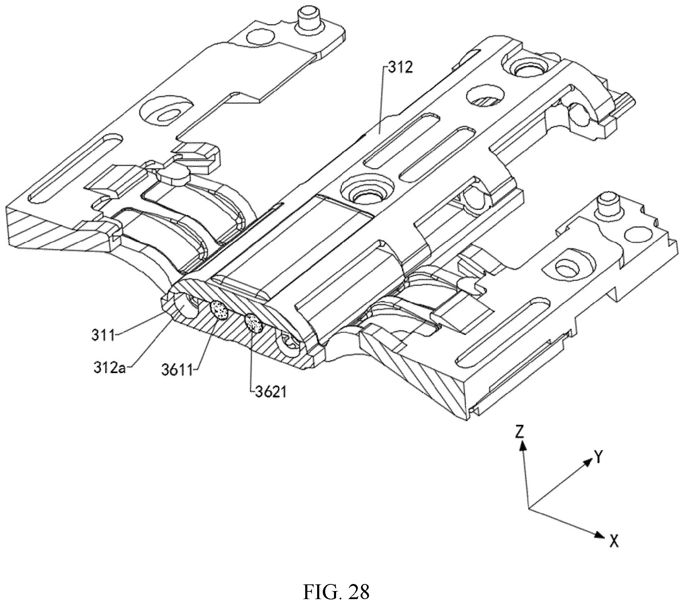

With reference to FIG. 27, FIG. 28 is a schematic sectional view of a part of the folding mechanism 301 shown in FIG. 5. When the first outer housing 312 is fastened to the base 311, accommodating space 312a is enclosed by the first outer housing 312 and the base 311, and the rotation end 34 of the first connecting arm 34, the rotation end 35b of the second connecting arm 35, the first pin shaft 361, the second pin shaft 362, the first gear 363, the second gear 364, the first fitting part 365, the second fitting part 366, the third fitting part 367, the fourth fitting part 368, the first elastic part 369a, and the second elastic part 369b are disposed in the accommodating space 312a. In this case, the first outer housing 312 covers the rotation end 34 of the first connecting arm 34, the rotation end 35b of the second connecting arm 35, the first pin shaft 361, the second pin shaft 362, the first gear 363, the second gear 364, the first fitting part 365, the second fitting part 366, the third fitting part 367, the fourth fitting part 368, the first elastic part 369a, and the second elastic part 369b. In this way, the first outer housing 312 may fit the base 311 to limit the rotation end 34 of the first connecting arm 34, the rotation end 35b of the second connecting arm 35, the first pin shaft 361, the second pin shaft 362, the first gear 363, the second gear 364, the first fitting part 365, the second fitting part 366, the third fitting part 367, the fourth fitting part 368, the first elastic part 369a, and the second elastic part 369b to move in a Z-axis direction, so as to improve stability of the folding mechanism 301.

In addition, FIG. 28 shows that the first outer housing 312 may fit the base 311 to limit the first shaft part 3611 of the first pin shaft 361 and the second shaft part 3621 of the second pin shaft 362 to move in the X-axis direction and a Z-axis direction.

Refer to FIG. 27 again. The rotation end 34b of the first connecting arm 34 is engaged with the rotation end 35b of the second connecting arm 35 by using the first gear 363 and the second gear 364. The first gear 363 and the second gear 364 are engaged with each other, and the first gear 363 is engaged with the first gear part 344 of the rotation end 34b of the first connecting arm 34 (refer to FIG. 14). The second gear 364 is engaged with the second gear part 354 of the rotation end 35b of the second connecting arm 35 (refer to FIG. 14). In this way, a rotation angle of the rotation end 34b of the first connecting arm 34 and a rotation angle of the rotation end 35b of the second connecting arm 35 may be the same in size and opposite in direction, so that rotation actions of the first connecting arm 34 and the second connecting arm 35 relative to the main shaft assembly 31 are synchronous.

In this embodiment, the first fixing bracket 32 is fastened to the first housing 302 (refer to FIG. 13), the rotation end 34b of the first connecting arm 34 is rotatably connected to the main shaft assembly 31, the sliding end 34a is slidably connected to the first fixing bracket 32, the second fixing bracket 33 is fastened to the second housing 303 (refer to FIG. 13), the rotation end 35b of the second connecting arm 35 is rotatably connected to the main shaft assembly 31, and the sliding end 35a is slidably connected to the second fixing bracket 33. In a process in which a folding mechanism 301 is switched from a folded state to an unfolded state, or is switched from an unfolded state to a folded state, the first housing 302 and the second housing 303 rotate relative to each other. The first housing 302 may drive, by using the first fixing bracket 32, the first connecting arm 34 to rotate relative to the main shaft assembly 31, and the second housing 303 may drive, by using the second fixing bracket 33, the second connecting arm 35 to rotate relative to the main shaft assembly 31. In addition, because the rotation end 34b of the first connecting arm 34 is engaged with the rotation end 35b of the second connecting arm 35 by using the first gear 363 and the second gear 364, when the first connecting arm 34 and the second connecting arm 35 rotate relative to the main shaft assembly 31, the first gear 363 rotates with the first connecting arm 34 relative to the main shaft assembly 31, and the first pin shaft 361 and the third fitting part 367 rotate relative to the main shaft assembly 31. The second gear 364 rotates with the second connecting arm 35 relative to the main shaft assembly 31, and the second pin shaft 362 and the fourth fitting part 368 rotate relative to the main shaft assembly 31. In addition, because both the first gear 363 and the second gear 364 form a cam structure with the first fitting part 365, the first fitting part 365 may slide relative to the first pin shaft 361 and the second pin shaft 362. In this way, the first fitting part 365 may slide in a direction approaching or away from the first gear 363 and the second gear 364. In addition, because both the third fitting part 367 and the fourth fitting part 368 form a cam structure with the second fitting part 366, the second fitting part 366 may slide in a direction approaching or away from the third fitting part 367 and the fourth fitting part 368.

In this implementation, in a process in which the first fitting part 365 slides relative to the first pin shaft 361 and the second pin shaft 362, and in a process in which the second fitting part 366 slides relative to the first pin shaft 361 and the second pin shaft 362, the first fitting part 365 and the second fitting part 366 are opposite in sliding direction. Specifically, when the first fitting part 365 slides in a direction away from the first gear 363 and the second gear 364, the second fitting part 366 slides in a direction away from the third fitting part 367 and the fourth fitting part 368. In this case, the first fitting part 365 squeezes the first elastic part 369a and the second elastic part 369b, so that the first elastic part 369a and the second elastic part 369b generate a first deformation amount a. The second fitting part 366 also squeezes the first elastic part 369a and the second elastic part 369b, so that the first elastic part 369a and the second elastic part 369b generate a second deformation amount b. Therefore, the first fitting part 365 and the second fitting part 366 may squeeze the first elastic part 369a and the second elastic part 369b, so that the first elastic part 369a and the second elastic part 369b may generate two superimposed deformation amounts at a time, that is, a total deformation amount is a+b. When the first fitting part 365 slides in a direction approaching the first gear 363 and the second gear 364, the second fitting part 366 slides in a direction approaching the third fitting part 367 and the fourth fitting part 368. In this case, the first elastic part 369a and the second elastic part 369b may release the two superposed deformation amounts at a time.

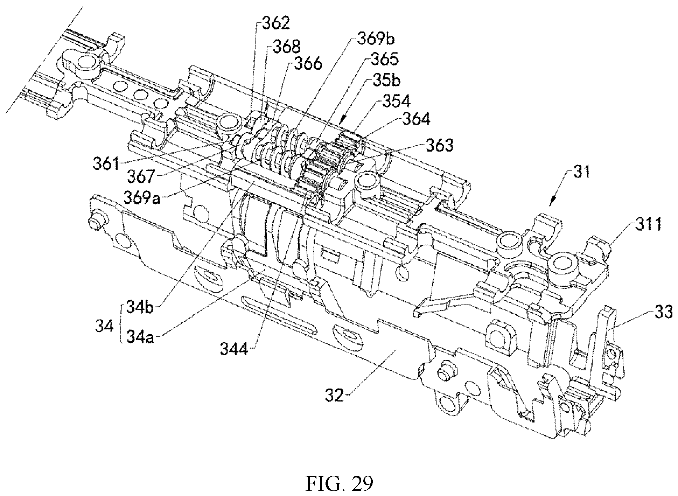

It may be understood that, the foregoing provides a description that when both the first gear 363 and the second gear 364 form a cam structure with the first fitting part 365, the first fitting part 365 may slide relative to the first pin shaft 361 and the second pin shaft 362. The following describes, with reference to related accompanying drawings, an implementable principle that the first fitting part 365 may slide relative to the first pin shaft 361 and the second pin shaft 362. In another embodiment, the first gear 363 and the second gear 364 may alternatively form another cam structure with the first fitting part 365. Specifically, this is not limited in this implementation. Refer to FIG. 27. When the folding mechanism 301 is in an unfolded state, the first gear 363, the second gear 364, and the first fitting part 365 form a first cam structure. FIG. 29 is a schematic diagram of a structure of a part of the folding mechanism 301 shown in FIG. 27 in a closed state. When the folding mechanism 301 is the closed state, the first gear 363, the second gear 364, and the first fitting part 365 form a second cam structure. In this embodiment, the first cam structure and the second cam structure can enable the first gear 363 and the second gear 364 to stay at some positions relative to the first fitting part 365, and even if the first connecting arm 34 and the second connecting arm 35 maintain a specific relative position relationship relative to the main shaft assembly 31, the first housing 302 (refer to FIG. 13) and the second housing 303 (refer to FIG. 13) can well maintain an open state or a closed state, thereby improving user experience. In addition, the first cam structure and the second cam structure may provide specific resistance in a process in which the electronic device 100 is unfolded to enter the open state and in a process in which the electronic device 100 is folded to release the open state, so that a user can experience a better sense of operation of the mechanism.

Refer to FIG. 22a again. With reference to FIG. 21, when the first gear 363, the second gear 364, and the first fitting part 365 are in the first cam structure or the second cam structure, the plurality of first protrusions 3632 of the first gear 363 and the 1^{st} first bump group 3652 on the first fitting part 365 form interleaved cam structures. The plurality of second protrusions 3642 of the second gear 364 and the 2^{nd} first bump group 3652 on the first fitting part 365 form interleaved cam structures. In other words, the plurality of first protrusions 3632 of the first gear 363 and the grooves (formed between every two adjacent first bumps 3654) on the first fitting part 365 form concave-convex fit cam structures. The plurality of second protrusions 3642 of the second gear 364 and the grooves on the first fitting part 365 form concave-convex fit cam structures. A difference between the first cam structure and the second cam structure lies in that the first gear 363 and the second gear 364 rotate relative to the first fitting part 365, one first protrusion 3632 of the first gear 363 fits different grooves on the first fitting part 365, and a same second protrusion 3642 of the second gear 364 fits different grooves on the first fitting part 365.

When the folding mechanism 301 is switched from the folded state to the unfolded state, or from the unfolded state to the folded state, that is, when the folding mechanism 301 is in a folding or unfolding process, the first gear 363 and the second gear 364 rotate relative to the first fitting part 365, and the first protrusion 3632 of the first gear 363 may slide out from one of the grooves on the first fitting part 365, and then move toward another groove, that is, a fitting structure of "the first protrusion 3632 and a groove" is changed to a transition structure of "the first protrusion 3632 and the first bump 3654", and then is changed to a fitting structure of "the first protrusion 3632 and another groove". The second protrusion 3642 of the second gear 364 may also slide out from one of the grooves on the first fitting part 365, and then move toward another groove, a fitting structure of "the second protrusion 3642 and a groove" is changed to a transition structure of "the second protrusion 3642 and the first bump 3654", and then is changed to a fitting structure of "the second protrusion 3642 and another groove". In this case, the first fitting part 365 is in a "close-far-close" position relationship with the first gear 363 and the second gear 364. In this way, the first fitting part 365 may slide relative to the first pin shaft 361 and the second pin shaft 362.

It should be noted that, when the folding mechanism 301 is in the folding or unfolding process, a fitting structure of the first gear 363 and the first fitting part 365 is not limited to changing from the fitting structure of "the first protrusion 3632 and a groove" to the transition structure of "the first protrusion 3632 and the first bump 3654", and then to the fitting structure of "the first protrusion 3632 and another groove". For example, when there are a plurality of first bumps 3654, the first protrusion 3632 forms a transition structure with the plurality of first bumps 3654, and forms a transition structure with the plurality of grooves. For example, when the folding mechanism 301 is in the folding or unfolding process, the fitting structure of the first gear 363 and the first fitting part 365 may be changed from the fitting structure of "the first protrusion 3632 and a groove" to a transition structure of "the first protrusion 3632 and the first bump 3654", to a transition structure of "the first protrusion 3632 and another groove", to a transition structure of "the first protrusion 3632 and another first bump 3654", and finally to a fitting structure of "the first protrusion 3632 and another groove". Similarly, when the folding mechanism 301 is in the folding or unfolding process, the fitting structure of the second gear 364 and the first fitting part 365 is not limited to changing from a fitting structure of "the second protrusion 3642 and a groove" to a transition structure of "the second protrusion 3642 and the first bump 3654", and then to a fitting structure of "the second protrusion 3642 and another groove".

It may be understood that, the foregoing provides a description that because both the third fitting part 367 and the fourth fitting part 368 form a cam structure with the second fitting part 366, the second fitting part 366 may slide in a direction approaching or away from the third fitting part 367 and the fourth fitting part 368. The following describes, with reference to related accompanying drawings, an implementable principle that the second fitting part 366 may slide relative to the first pin shaft 361 and the second pin shaft 362.

Refer to FIG. 27 again. When the folding mechanism 301 is in an unfolded state, the third fitting part 367, the fourth fitting part 368, and the second fitting part 366 form a third cam structure. Refer to FIG. 29 again. When the folding mechanism 301 is in a closed state, the third fitting part 367, the fourth fitting part 368, and the second fitting part 366 form a fourth cam structure. In this embodiment, the third cam structure and the fourth cam structure can enable the third fitting part 367 and the fourth fitting part 368 to stay at some positions relative to the second fitting part 366, and even if the first connecting arm 34 and the second connecting arm 35 maintain a specific relative position relationship relative to the main shaft assembly 31, the first housing 302 (refer to FIG. 13) and the second housing 303 (refer to FIG. 13) can well maintain an open state or a closed state, thereby improving user experience. In addition, the third cam structure and the fourth cam structure may provide specific resistance in a process in which the electronic device 100 is unfolded to enter the open state and in a process in which the electronic device 100 is folded to release the open state, so that a user can experience a better sense of operation of the mechanism. Refer to FIG. 26 again. With reference to FIG. 23 and FIG. 25, when the third fitting part 367, the fourth fitting part 368, and the second fitting part 366 are in the third cam structure or the fourth cam structure, the third bump group 3672 of the third fitting part 367 and the first second bump group 3662 of the second fitting part 366 form interleaved cam structures. The fourth bump group 3682 of the fourth fitting part 368 and the 2^{nd} second bump group 3662 of the second fitting part 366 form interleaved cam structures. In other words, the plurality of third bumps 3674 of the third fitting part 367 and the grooves (formed between every two adjacent second bumps 3664) on the second fitting part 366 form concave-convex fit cam structures. The plurality of fourth bumps 3684 of the fourth fitting part 368 and the grooves on the second fitting part 366 form concave-convex fit cam structures. A difference between the third cam structure and the fourth cam structure lies in that, the third fitting part 367 and the fourth fitting part 368 rotate relative to the second fitting part 366, one third bump 3674 of the third fitting part 367 fits different grooves on the second fitting part 366, and a same fourth bump 3684 of the fourth fitting part 368 fits different grooves on the second fitting part 366.

When the folding mechanism 301 is switched from a folded state to an unfolded state, or from an unfolded state to a folded state, that is, when the folding mechanism 301 is in a folding or unfolding process, the third fitting part 367 and the fourth fitting part 368 rotate relative to the second fitting part 366, and the third bump 3674 of the third fitting part 367 may slide out of one of the grooves on the second fitting part 366, and then move toward another groove, that is, a fitting structure of "the third bump 3674 and a groove" is changed to a transition structure of "the third bump 3674 and the second bump 3664", and then changed to a fitting structure of "the third bump 3674 and another groove". The fourth bump 3684 of the fourth fitting part 368 may also slide out from one of the grooves on the second fitting part 366, and then move toward another groove, that is, a fitting structure of "the fourth bump 3684 and a groove" is changed to a transition structure of "the second protrusion 3642 and the second bump 3664", and then is changed to a fitting structure of "the fourth bump 3684 and another groove". In this case, the second fitting part 366 is in a "close-far-close" position relationship with the third fitting part 367 and the fourth fitting part 368. In this way, the second fitting part 366 may slide relative to the first pin shaft 361 and the second pin shaft 362.

It should be noted that, when the folding mechanism 301 is in the folding or unfolding process, a fitting structure of the third fitting part 367 and the second fitting part 366 is not limited to changing from the fitting structure of "the third bump 3674 and a groove" to the transition structure of "the third bump 3674 and the second bump 3664", and then to the fitting structure of "the third bump 3674 and another groove". For example, when there are a plurality of second bumps 3664, the third bump 3674 forms a transition structure with the plurality of second bumps 3664, and forms a transition structure with the plurality of grooves. For example, when the folding mechanism 301 is in the folding or unfolding process, the fitting structure of the third fitting part 367 and the second fitting part 366 may be changed from the fitting structure of "the third bump 3674 and a groove" to a transition structure of "the third bump 3674 and the second bump 3664", to a transition structure of "the third bump 3674 and another groove", to a transition structure of "the third bump 3674 and another second bump 3664", and finally to a fitting structure of "the third bump 3674 and another groove". Similarly, when the folding mechanism 301 is in the folding or unfolding process, a fitting structure of the fourth fitting part 368 and the second fitting part 366 is not limited to changing from a fitting structure of "the fourth bump 3684 and a groove" to a transition structure of "the second protrusion 3642 and the second bump 3664", and then to a fitting structure of "the fourth bump 3684 and another groove".

Refer to FIG. 27 again. The damping part 36 (refer to FIG. 17) is disposed between the first connecting arm 34 and the second connecting arm 35, so that in a process of unfolding or folding the electronic device 100, the first elastic part 369a and the second elastic part 369b of the damping part 36 may deform, and the first elastic part 369a and the second elastic part 369b may squeeze the first fitting part 365. In this case, the first fitting part 365 may apply action force to the first gear 363 and the second gear 364. In this way, friction force between the first gear 363, the second gear 364, and the first fitting part 365 may be increased to a large extent. A speed at which the first gear 363 and the second gear 364 rotate relative to the main shaft assembly 31 becomes lower, a speed at which the first connecting arm 34 and the second connecting arm 35 rotate relative to the main shaft assembly 31 becomes lower, and a speed at which the first housing 302 and the second housing 303 rotate relative to the main shaft assembly 31 becomes lower. Therefore, in a process in which the electronic device 100 is unfolded to enter an open state and in a process in which the electronic device 100 is folded to release the open state, specific resistance is provided, so that a user can experience a better sense of operation of the mechanism.

In addition, in the process of unfolding or folding the electronic device 100, the first elastic part 369a and the second elastic part 369b may generate a first deformation amount a under fitting of the first gear 363, the second gear 364, and the first fitting part 365, and may generate a second deformation amount b under fitting of the third fitting part 367, the fourth fitting part 368, and the second fitting part 366. In this way, in the process of unfolding or folding the electronic device 100, the first elastic part 369a and the second elastic part 369b may generate two superimposed deformation amounts at a time, that is, a total deformation amount is a+b, and the first elastic part 369a and the second elastic part 369b may generate a large deformation amount at a time.

In this implementation, no cam structure needs to be formed between the two end parts of the rotation end 34b of the first connecting arm 34 and another component, to implement that the first elastic part 369a and the second elastic part 369b generate the total deformation amount a+b at a time. In this way, a bump group does not need to be disposed at the two end parts of the rotation end 34b of the first connecting arm 34, so that a length of the rotation end 34b of the first connecting arm 34 may be miniaturized. In addition, when the rotation end 34b of the first connecting arm 34 is rotatably connected to the main shaft assembly 31, a size of the first avoidance space 3113 (refer to FIG. 8 and FIG. 9) of the base 311 in a Y-axis direction may also be miniaturized, and the first support surface 304 (refer to FIG. 8) of the base 311 has higher flatness. It may be understood that, because the first support surface 304 of the base 311 may be configured to support the flexible display 2 (refer to FIG. 2), the first support surface 304 with high flatness is unlikely to damage the flexible display 2, so that reliability of the flexible display 2 is improved. Similarly, a length of the rotation end 35b of the second connecting arm 35 may also be miniaturized. In addition, a size of the second avoidance space 3114 (refer to FIG. 8 and FIG. 9) of the base 311 in the Y-axis direction may also be miniaturized, and flatness of the first support surface 304 of the base 311 may be further improved.

It may be understood that, in the process of unfolding or folding the electronic device 100, the first elastic part 369a may squeeze the first gear 363 to the first limiting flange 3612 of the first pin shaft 361 by using the first fitting part 365. A position of the first gear 363 relative to the first pin shaft 361 is fixed. In this way, compared with a solution in which the first gear 363 slides relative to the first pin shaft 361, this implementation achieves better stability of the first gear 363, and helps improve stability of the folding mechanism 301. Similarly, compared with a solution in which the second gear 364 slides relative to the second pin shaft 362, this implementation achieves better stability of the second gear 364, and helps improve stability of the folding mechanism 301. The foregoing specifically describes a structure of the damping part 36 and a position and a function of the damping part 36 in the folding mechanism 301 with reference to related accompanying drawings. With reference to related accompanying drawings, the following describes in detail an implementation of fitting between the damping part 36 and another component.

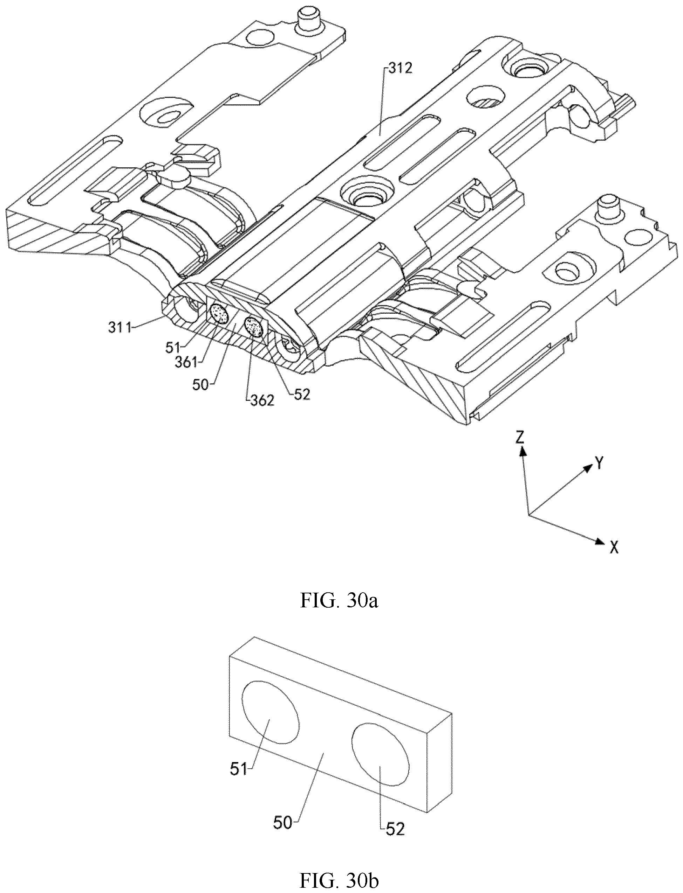

FIG. 30a is a schematic sectional view of a part of the folding mechanism 301 shown in FIG. 5 in another implementation. FIG. 30b is a schematic diagram of a structure of a fastener 50 of the folding mechanism 301 shown in FIG. 30a. The folding mechanism 301 further includes the fastener 50. The fastener 50 is provided with a first limiting hole 51 and a second limiting hole 52 that are disposed at an interval. The fastener 50 is fixedly connected to the base 311. For example, the fastener 50 may be fixedly connected to the base 311 through welding, bonding, fastening or snap-fitting by using a fastening part (a bolt, a screw, or the like). In addition, an end of the first pin shaft 361 is inserted into the first limiting hole 51. The first pin shaft 361 may rotate relative to the first limiting hole 51. An end of the second pin shaft 362 is inserted into the second limiting hole 52. The second pin shaft 362 may rotate relative to the second limiting hole 52. When the first outer housing 312 is fastened to the base 311, the first outer housing 312 is further fixedly connected to the fastener 50. For example, the fastener 50 may be fixedly connected to the first outer housing 312 through welding, bonding, fastening or snap-fitting by using a fastening part (a bolt, a screw, or the like).

It may be understood that the fastener 50 is disposed between the first outer housing 312 and the base 311, so that the first pin shaft 361 is limited through the first limiting hole 51, and the second pin shaft 362 is limited through the second limiting hole 52. In this way, with reference to FIG. 27, the first gear 363, the second gear 364, the first fitting part 365, the second fitting part 366, the third fitting part 367, the fourth fitting part 368, the first elastic part 369a, and the second elastic part 369b that are disposed on the first pin shaft 361 and the second pin shaft 362 are unlikely to shake, that is, more stable. In addition, in a process of folding or unfolding the electronic device 100, the first pin shaft 361, the second pin shaft 362, the first gear 363, the second gear 364, the first fitting part 365, the second fitting part 366, the third fitting part 367, the fourth fitting part 368, the first elastic part 369a, and the second elastic part 369b are unlikely to squeeze the first outer housing 312, to detach the first outer housing 312 from the base 311.

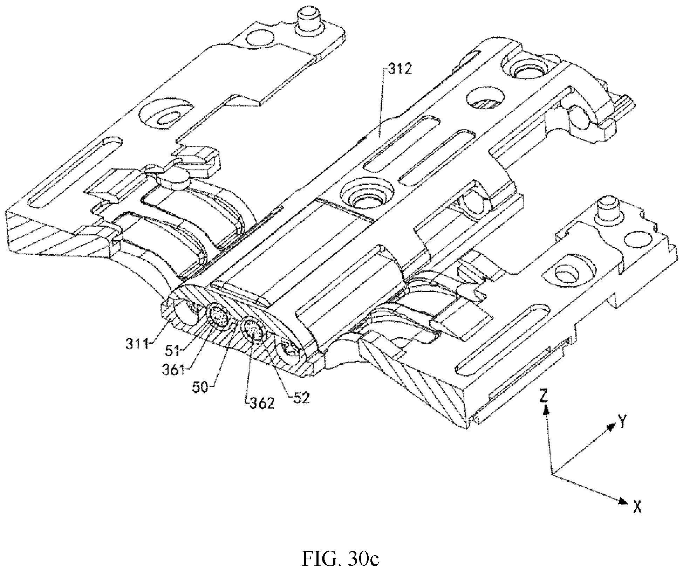

It should be noted that a quantity of fasteners 50 is not limited in this implementation. For example, there are a plurality of fasteners 50. The plurality of fasteners 50 are arranged in a length direction of the first pin shaft 361. In addition, a shape of the fastener 50 is not specifically limited in this implementation, that is, the shape of the fastener 50 is not limited to a rectangle shown in FIG. 30a. For example, FIG. 30c is a schematic sectional view of a part of the folding mechanism 301 shown in FIG. 5 in still another implementation. The fastener 50 is formed by connecting two annular structures through a strip-shaped structure. In this way, a size of the fastener 50 is small. With reference to related accompanying drawings, the foregoing describes in detail several implementations of fitting between the damping part 36 and another component. The following further describes other components of the folding mechanism 301 in detail with reference to related accompanying drawings.

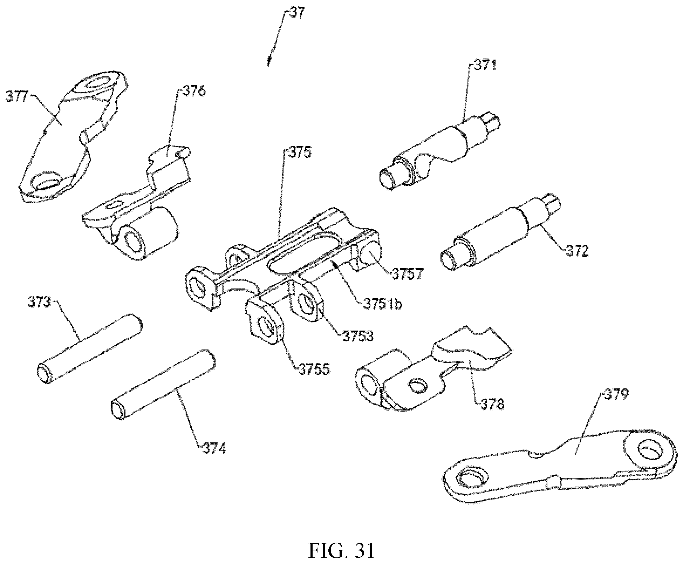

FIG. 31 is a schematic exploded view of the first sub-assembly 37 shown in FIG. 6. The first sub-assembly 37 includes a first spiral rod 371, a second spiral rod 372, a first hinge 373, a second hinge 374, a sliding member 375, a first transmission arm 376, a first connecting rod 377, a second transmission arm 378, and a second connecting rod 379.

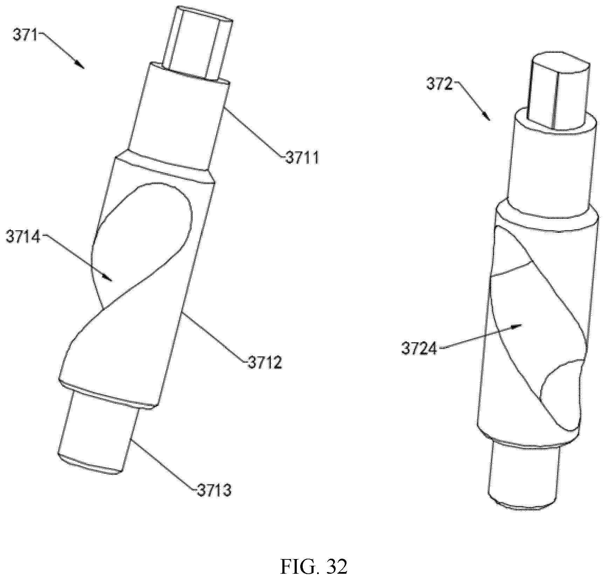

FIG. 32 is a schematic diagram of structures of the first spiral rod 371 and the second spiral rod 372 of the first sub-assembly 37 shown in FIG. 31. The first spiral rod 371 includes a first end part 3711, a middle part 3712, and a second end part 3713 that are sequentially connected. The middle part 3712 of the first spiral rod 371 is provided with a first spiral groove 3714. The first spiral groove 3714 spirally extends from one end of the middle part 3712 of the first spiral rod 371 to the other end of the middle part 3712 of the first spiral rod 371.

A radius of the middle part 3712 of the first spiral rod 371 may be greater than a radius of the first end part 3711 of the first spiral rod 371 and a radius of the second end part 3713 of the first spiral rod 371. In this way, it is not easy for the first spiral rod 371 to reduce overall strength because the middle part 3712 of the first spiral rod 371 is provided with the first spiral groove 3714.

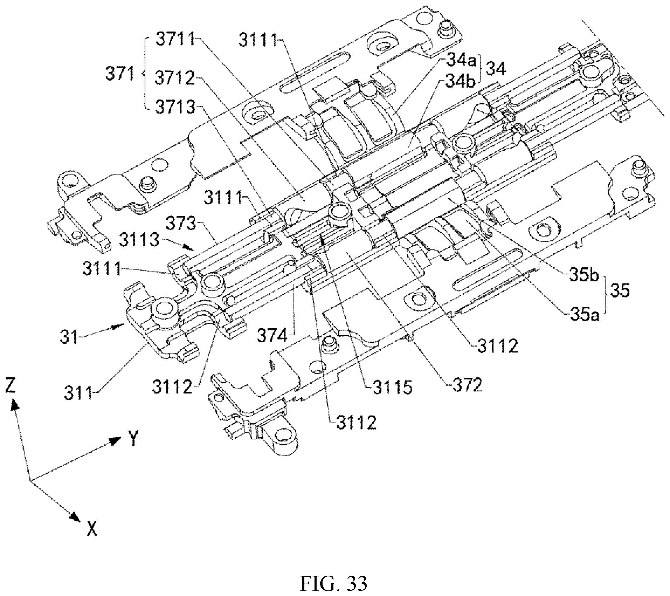

With reference to FIG. 32, FIG. 33 is a schematic diagram of a partial structure of the folding mechanism 301 shown in FIG. 5. A part of the first spiral rod 371 is disposed on the base 311, and two ends of the first spiral rod 371 are disposed in the two first limiting grooves 3111 of the base 311. The two ends of the first spiral rod 371 may rotate relative to the two first limiting grooves 3111. In addition, the first end part 3711 of the first spiral rod 371 is fixedly connected to the rotation end 34b of the first connecting arm 34. For example, the first end part 3711 of the first spiral rod 371 may be fixedly connected to the rotation end 34b of the first connecting arm 34. For a connection relationship between the first end part 3711 of the first spiral rod 371 and the rotation end 34b of the first connecting arm 34, refer to a connection relationship between the first gear 363 and the first pin shaft 361 (refer to FIG. 18 to FIG. 20). In another embodiment, the first end part 3711 of the first spiral rod 371 may alternatively be fixedly connected to the rotation end 34b of the first connecting arm 34 through welding, bonding, interference fit, or the like. In this way, an end of the rotation end 34b of the first connecting arm 34 may be rotatably connected to the base 311 by using the first spiral rod 371. In addition, the rotation end 34b of the first connecting arm 34 may be limited in a Y-axis direction by using the first spiral rod 371. In addition, two ends of the middle part 3712 of the first spiral rod 371 may abut against a wall surface of the base 311. In this way, by using the wall surface of the base 311, the first spiral rod 371 may be limited to move in the Y-axis direction.

In this implementation, the second spiral rod 372 and the first spiral rod 371 may be of a same or similar structure, a symmetric or partially symmetric structure, or different structures. In some embodiments, the second spiral rod 372 and the first spiral rod 371 are of a symmetric structure. For a basic design of a component structure of the second spiral rod 372 (for example, refer to FIG. 32 again. The second spiral rod 372 includes a second spiral groove 3724. The second spiral groove 3724 extends spirally in an extension direction of the main shaft assembly 31.), a design of a connection relationship between components, a design of a connection relationship between a component and another structure other than the component, refer to a related solution of the first spiral rod 371 (for example, a part of the second spiral rod 372 is disposed on the base 311, and two ends of the second spiral rod 372 are rotatably connected in the two second limiting grooves 3112). In addition, the second spiral rod 372 and the first spiral rod 371 are allowed to be slightly different in detail structures or position arrangements of components.

Refer to FIG. 31 again. A part of the first hinge 373 is disposed in the first avoidance space 3113, and two ends of the first hinge 373 are disposed in the two first limiting grooves 3111 of the base 311. The two ends of the first hinge 373 may rotate relative to the two first limiting grooves 3111. In addition, an end of the first hinge 373 may be fastened to the second end part 3713 of the first spiral rod 371. For a connection relationship between the first hinge 373 and the second end part 3713 of the first spiral rod 371, refer to a connection relationship between the first gear 363 and the first pin shaft 361. In another embodiment, the first hinge 373 may alternatively be fixedly connected to the second end part 3713 of the first spiral rod 371 through welding, bonding, interference fit, or the like.

In this implementation, the second hinge 374 and the first hinge 373 may be of a same or similar structure, a symmetric or partially symmetric structure, or different structures. In some embodiments, the second hinge 374 and the first hinge 373 are of a symmetric structure. For a basic design of a component structure of the second hinge 374, a design of a connection relationship between components, and a design of a connection relationship between a component and another structure other than the component, refer to a related solution of the first hinge 373 (for example, two ends of the second hinge 374 may rotate relative to two second limiting grooves 3112). In addition, the second hinge 374 and the first hinge 373 are allowed to be slightly different in detail structures or position arrangements of components.

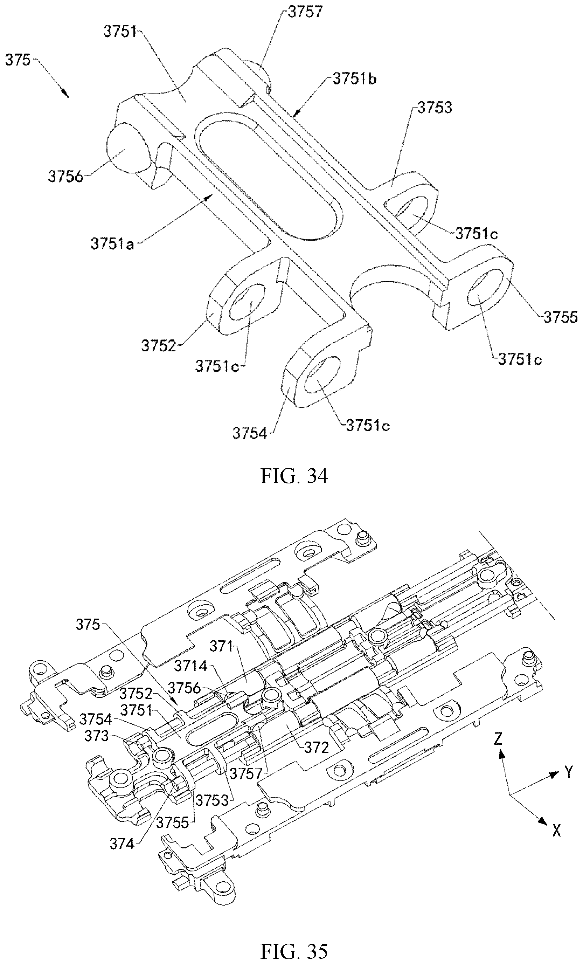

With reference to FIG. 31, FIG. 34 is a schematic diagram of a structure of the sliding member 375 of the first sub-assembly 37 shown in FIG. 31. The sliding member 375 includes a body part 3751, a first annular part 3752, a second annular part 3753, a third annular part 3754, a fourth annular part 3755, a first convex part 3756, and a second convex part 3757. The body part 3751 includes a first side surface 3751a and a second side surface 3751b that face opposite directions (FIG. 31 shows the second side surface 3751b from another angle). The first annular part 3752 and the third annular part 3754 are connected to the first side surface 3751a at an interval. The second annular part 3753 and the fourth annular part 3755 are connected to the second side surface 3751b at an interval. The first convex part 3756 is connected to the first side surface 3751a, and is located on a side that is of the first annular part 3752 and that is away from the third annular part 3754. The second convex part 3757 is connected to the second side surface 3751b, and is located on a side that is of the second annular part 3753 and that is away from the fourth annular part 3755. In this case, the sliding member 375 is approximately in a "frog" shape. In this implementation, the sliding member 375 is an integral structure.

In addition, each of the first annular part 3752, the second annular part 3753, the third annular part 3754, and the fourth annular part 3755 is provided with a through hole 3751c. The through hole 3751c of the first annular part 3752 is disposed opposite to the through hole 3751c of the third annular part 3754. The through hole 3751c of the second annular part 3753 is disposed opposite to the through hole 3751c of the fourth annular part 3755.

With reference to FIG. 33 and FIG. 34, FIG. 35 is a schematic diagram of a partial structure of the folding mechanism 301 shown in FIG. 5. The sliding member 375 is slidably connected to the base 311. A part of the body part 3751 is disposed on the base 311. The first annular part 3752 and the third annular part 3754 are located in one first avoidance space 3113, and the second annular part 3753 and the fourth annular part 3755 are located in one second avoidance space 3114.

In addition, at least a part of the first convex part 3756 of the sliding member 375 is slidably connected to the first spiral groove 3714 of the first spiral rod 371. At least a part of the second convex part 3757 of the sliding member 375 is slidably connected to the second spiral groove 3724 of the second spiral rod 372.

In addition, the first hinge 373 passes through the through hole 3751c of the first annular part 3752 and the through hole 3751c of the third annular part 3754. The first annular part 3752 and the third annular part 3754 can slide in a Y-axis direction relative to the first hinge 373.

In addition, the second hinge 374 passes through the through hole 3751c of the second annular part 3753 and the through hole 3751c of the fourth annular part 3755. The second annular part 3753 and the fourth annular part 3755 can slide in the Y-axis direction relative to the second hinge 374.

It may be understood that, when the first spiral rod 371 rotates, the first convex part 3756 of the sliding member 375 applies action force to a groove wall of the first spiral groove 3714 of the first spiral rod 371, and the first spiral rod 371 trends to slide in the Y-axis direction. Because the first spiral rod 371 is limited in the Y-axis direction, the first spiral rod 371 does not slide in the Y-axis direction under action force of the first convex part 3756 of the sliding member 375. In addition, the groove wall of the first spiral groove 3714 of the first spiral rod 371 also applies reaction force to the first convex part 3756 of the sliding member 375. In this case, the sliding member 375 is not limited in the Y-axis direction, and the sliding member 375 may slide in the Y-axis direction. Similarly, when the second spiral rod 372 rotates, the sliding member 375 may also slide in the Y-axis direction.

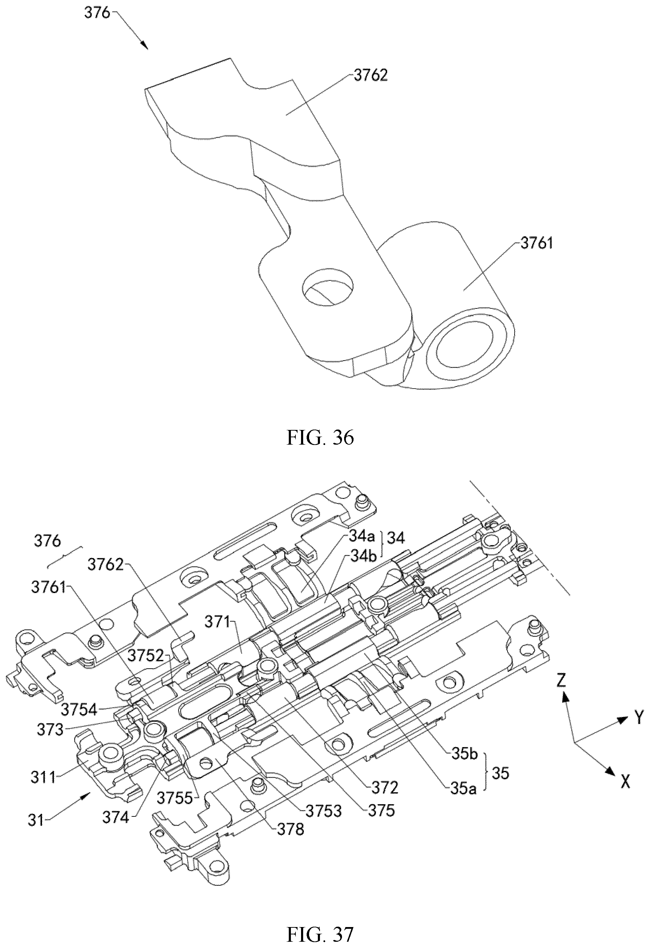

In this way, when the first spiral rod 371 and the second spiral rod 372 rotate, the sliding member 375 may slide in the Y-axis direction. In this case, the first annular part 3752 and the third annular part 3754 slide in the Y-axis direction relative to the first hinge 373. The second annular part 3753 and the fourth annular part 3755 slide in the Y-axis direction relative to the second hinge 374. With reference to FIG. 31, FIG. 36 is a schematic diagram of a structure of the first transmission arm 376 of the first sub-assembly 37 shown in FIG. 31. The first transmission arm 376 includes a first shaft sleeve part 3761 and a first connecting part 3762 connected to the first shaft sleeve part 3761.

With reference to FIG. 35 and FIG. 36, FIG. 37 is a schematic diagram of a partial structure of the folding mechanism 301 shown in FIG. 5. The first shaft sleeve part 3761 is sleeved on the first hinge 373, and is located between the first annular part 3752 and the third annular part 3754 of the sliding member 375. The first shaft sleeve part 3761 can slide relative to the first hinge 373, and can also rotate relative to the first hinge 373. In this way, when the first annular part 3752 and the third annular part 3754 of the sliding member 375 slide in a Y-axis direction relative to the first hinge 373, the first shaft sleeve part 3761 also slides in the Y-axis direction. In this case, the first connecting part 3762 can also move in the Y-axis direction.

In this implementation, the first spiral rod 371 and the sliding member 375 form a spiral pair structure. In this case, the first transmission arm 376 is connected to the rotation end 34b of the first connecting arm 34 by using a spiral pair structure, so that rotation of the rotation end 34b of the first connecting arm 34 relative to the base 311 may be changed to sliding of the first transmission arm 376 relative to the main shaft assembly 31 by using the spiral pair structure.

In another implementation, the first sub-assembly 37 may not include the first spiral rod 371 and the sliding member 375. In this case, a shape between the first transmission arm 376 and the rotation end 34b of the first connecting arm 34 is set, so that a spiral pair structure is formed between the first transmission arm 376 and the rotation end 34b of the first connecting arm 34. In another implementation, the first sub-assembly 37 may not include the first spiral rod 371 and the sliding member 375. In this case, another spiral pair structure (for example, a ball screw) is disposed between the first transmission arm 376 and the rotation end 34b of the first connecting arm 34 for connection.

In this implementation, the second transmission arm 378 and the first transmission arm 376 may be of a same or similar structure, a symmetric or partially symmetric structure, or different structures. In some embodiments, the second transmission arm 378 and the first transmission arm 376 are of a symmetric structure. For a basic design of a component structure of the second transmission arm 378, a design of a connection relationship between components, and a design of a connection relationship between a component and another structure other than the component, refer to a related solution of the first transmission arm 376 (for example, a connection relationship between the second transmission arm 378 and the second hinge 374 and the sliding member 375). In addition, the second transmission arm 378 and the first transmission arm 376 are allowed to be slightly different in detailed structures or position arrangements of components.

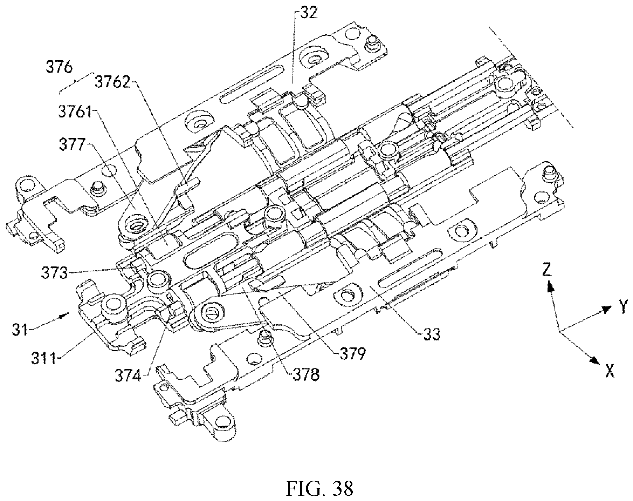

FIG. 38 is a schematic diagram of a partial structure of the folding mechanism 301 shown in FIG. 5. One end of the first connecting rod 377 is rotatably connected to the first connecting part 3762 of the first transmission arm 376, and the other end of the first connecting rod 377 is rotatably connected to the first fixing bracket 32. For example, a pin shaft sequentially passes through the first connecting rod 377 and the first connecting part 3762 of the first transmission arm 376. The pin shaft may rotate relative to the first connecting rod 377 and the first transmission arm 376.

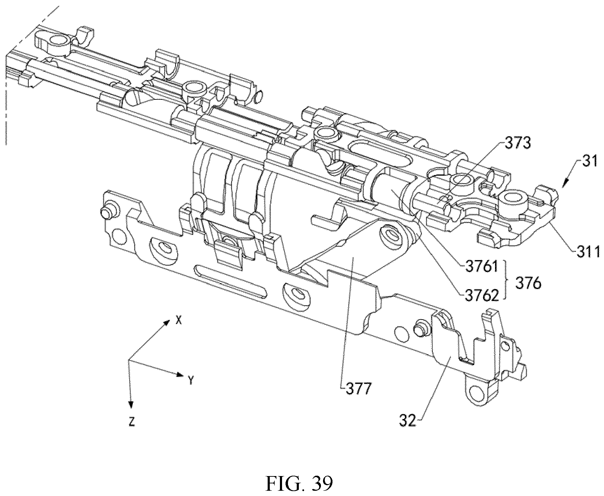

Refer to FIG. 38 and FIG. 39 together. FIG. 39 is a schematic diagram of a structure of a part of the folding mechanism 301 shown in FIG. 38 in a closed state. When the electronic device 100 is folded from an unfolded state to a closed state, the first shaft sleeve part 3761 slides in a negative direction of a Y-axis relative to the first hinge 373, and one end of the first connecting rod 377 moves in a negative direction of the Y-axis relative to the first hinge 373. In this case, the other end of the first connecting rod 377 may apply action force to the first fixing bracket 32. The first fixing bracket 32 may move in a negative direction of an X-axis, that is, the first fixing bracket 32 may move in a direction away from the base 311.

When the electronic device 100 is folded from a closed state to an unfolded state, the first shaft sleeve part 3761 slides in a positive direction of the Y-axis relative to the first hinge 373, and one end of the first connecting rod 377 moves in the positive direction of the Y-axis relative to the first hinge 373. In this case, the other end of the first connecting rod 377 may apply action force to the first fixing bracket 32. The first fixing bracket 32 may move in the positive direction of the X-axis, that is, the first fixing bracket 32 is close to the base 311.

In this implementation, the second connecting rod 379 and the first connecting rod 377 may be of a same or similar structure, a symmetric or partially symmetric structure, or different structures. In some embodiments, the second connecting rod 379 and the first connecting rod 377 are of a symmetric structure. For a basic design of a component structure of the second connecting rod 379, a design of a connection relationship between components, and a design of a connection relationship between a component and another structure other than the component, refer to a related solution of the first connecting rod 377 (for example, a connection relationship between the second connecting rod 379 and the second transmission arm 378 and the second fixing bracket 33). In addition, the second connecting rod 379 and the first connecting rod 377 are allowed to be slightly different in detail structures or position arrangements of components.

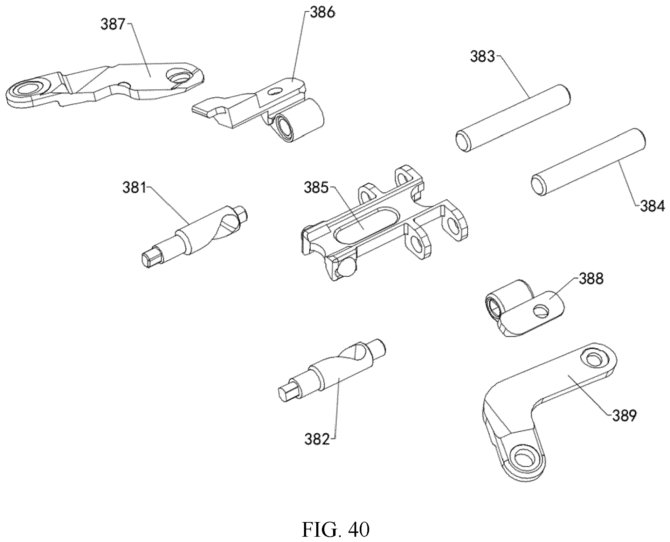

FIG. 40 is a schematic exploded view of the second sub-assembly 38 shown in FIG. 6. The second sub-assembly 38 includes a third spiral rod 381, a fourth spiral rod 382, a third hinge 383, a fourth hinge 384, a sliding member 385, a third transmission arm 386, a third connecting rod 387, a fourth transmission arm 388, and a fourth connecting rod 389. The second sub-assembly 38 and the first sub-assembly 37 may be of a same or similar structure, a symmetric or partially symmetric structure, or different structures. In some embodiments, the second sub-assembly 38 and the first sub-assembly 37 are of a symmetric structure. For a basic design of a component structure of the second sub-assembly 38, a design of a connection relationship between components, and a design of a connection relationship between a component and another structure other than the component, refer to a related solution of the first sub-assembly 37. In addition, the second sub-assembly 38 and the first sub-assembly 37 are allowed to be slightly different in detailed structures or position arrangements of components. Details are not described herein again.

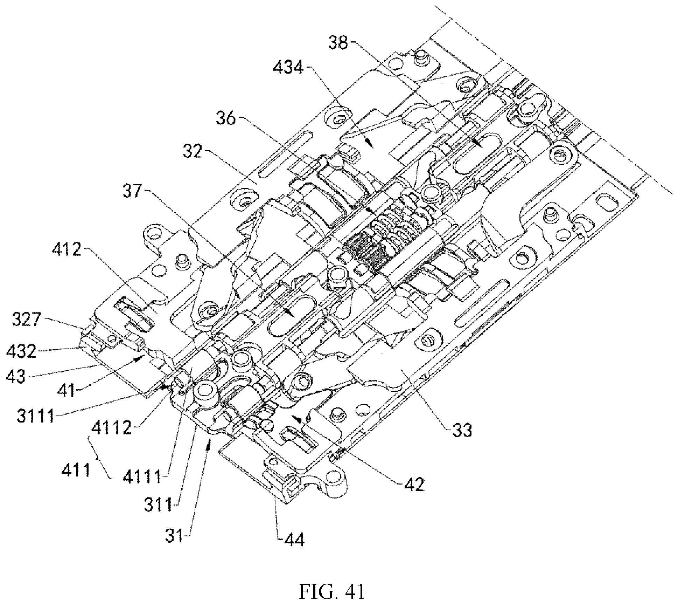

FIG. 41 is a schematic diagram of a partial structure of the folding mechanism 301 shown in FIG. 5. The second sub-assembly 38 is located on a side that is of the damping part 36 and that is away from the first sub-assembly 37. The second sub-assembly 38 and the first sub-assembly 37 are located on two sides of the damping part 36, thereby improving symmetry of the folding mechanism 301. In this way, an overall structure of the folding mechanism 301 is simple and processing costs are low. In addition, when the folding mechanism 301 is applied to the electronic device 100, it is not easy for the electronic device 100 to cause problems of tilting and torsion of the folding mechanism 301 due to poor symmetry of the folding mechanism 301.

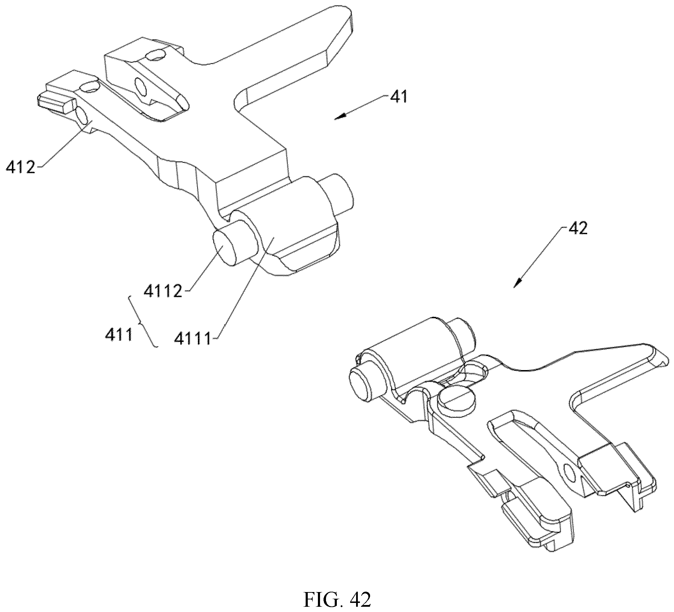

FIG. 42 is a schematic diagram of structures of the first swing arm 41 and the second swing arm 42 shown in FIG. 6. The first swing arm 41 includes a rotation end 411 and a sliding end 412. The first swing arm 41 may be an integrally formed mechanical part, to have high structural strength. The rotation end 411 of the first swing arm 41 includes a main part 4111 and a hinge part 4112. The hinge part 4112 may include two parts, which are convexly disposed at two ends of the main part 4111.

Refer to FIG. 41 and FIG. 42. The rotation end 411 of the first swing arm 41 is rotatably connected to the base 311. The main part 4111 of the rotation end 411 of the first swing arm 41 is disposed in the first avoidance space 3113 (refer to FIG. 9). The two hinge parts 4112 of the rotation end 411 of the first swing arm 41 are disposed in a one-to-one correspondence in the two first limiting grooves 3111 of the base 311. The two hinge parts 4112 of the first swing arm 41 may rotate relative to the two first limiting grooves 3111 of the base 311.

In addition, the sliding end 412 of the first swing arm 41 is slidably connected to the first fixing bracket 32. For example, the first swing arm 41 and the first fixing bracket 32 may be slidably connected through fitting between a sliding member and a sliding slot. Details are not described herein again.

As shown in FIG. 38 and FIG. 39, the rotation end 411 of the first swing arm 41 is rotatably connected to the base 311. The sliding end 412 of the first swing arm 41 is slidably connected to the first fixing bracket 32. In this way, the first fixing bracket 32 may be rotatably connected to the base 311 by using the first swing arm 41, and may move in a direction approaching or away from the base 311 by using the first swing arm 41.

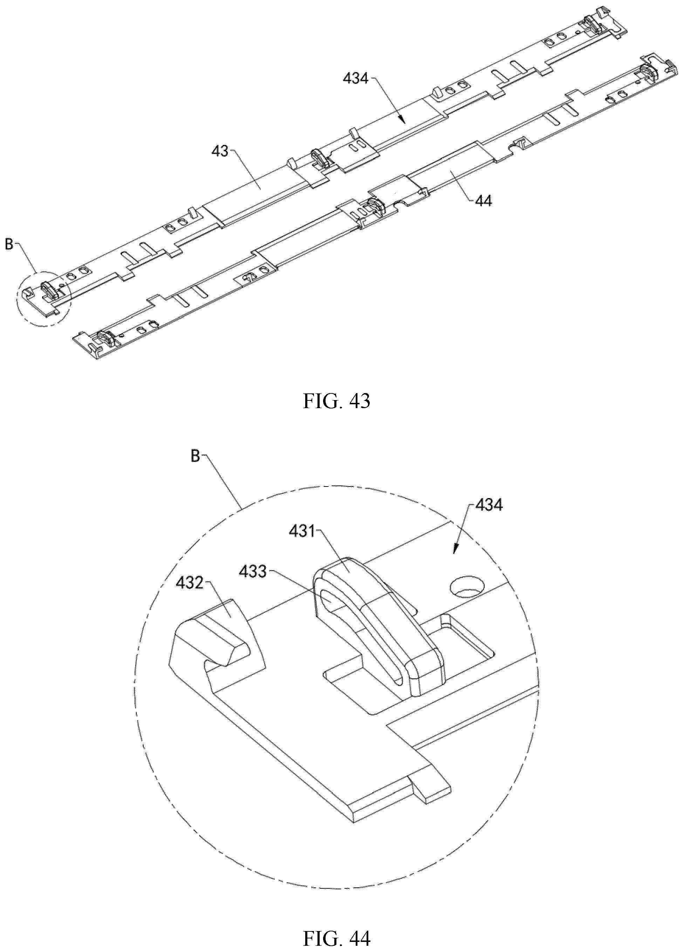

In this implementation, the second swing arm 42 and the first swing arm 41 may be of a same structure, a mirror symmetric structure, a partial mirror symmetric structure, a centrosymmetric structure, a partial centrosymmetric structure, or different structures. This is not strictly limited in this application. In some embodiments, the second swing arm 42 and the first swing arm 41 are of a symmetric structure. For a basic design of a component structure of the second swing arm 42, a design of a connection relationship between components, and a design of a connection relationship between a component and another structure other than the component, refer to a related solution of the first swing arm 41. In addition, the second swing arm 42 and the first swing arm 41 are allowed to be slightly different in detailed structures or position arrangements of components. FIG. 43 is a schematic diagram of structures of the first support plate 43 and the second support plate 44 shown in FIG. 6. FIG. 44 is an enlarged schematic diagram of the first support plate 43 shown in FIG. 43 at B. The first support plate 43 has a first fixing surface 434. The first support plate 43 includes a first movable block 431 and a first rotation arm 432. Both the first movable block 431 and the first rotation arm 432 are located on the first fixing surface 434. The first movable block 431 is provided with a first arc hole 433. The first movable block 431 and the first rotation arm 432 of the first support plate 43 jointly form a connecting structure. The first support plate 43 may include a plurality of connecting structures disposed at intervals.

Refer to FIG. 41 again. The first support plate 43 is disposed on a side of the first fixing bracket 32. The first fixing bracket 32 is located on the first fixing surface 434 of the first support plate 43. The first support plate 43 is further rotatably connected to the first fixing bracket 32. For example, the first rotation arm 432 of the first support plate 43 may be rotatably connected to the arc groove 327 of the first fixing bracket 32. In this case, the first support plate 43 and the first fixing bracket 32 are rotatably connected through an arc arm and a virtual axis of an arc groove. In this way, the first support plate 43 and the first fixing bracket 32 may be thinner, which facilitates thinning of the folding apparatus 3. In another embodiment, the first support plate 43 and the first fixing bracket 32 may alternatively be rotatably connected through a physical axis.

In addition, the sliding end 412 of the first swing arm 41 is slidably and rotatably connected to the first support plate 43. For example, a hinge passes through the sliding end 412 of the first swing arm 41 and the first arc hole 433 of the first movable block 431 of the first support plate 43. The hinge can slide and rotate in the first arc hole 433 of the first support plate 43. The hinge may be fastened relative to the sliding end 412 of the first swing arm 41.

In this implementation, the second support plate 44 and the first support plate 43 may be of a same structure, a mirror symmetric structure, a partial mirror symmetric structure, a centrosymmetric structure, a partial centrosymmetric structure, or different structures. This is not strictly limited in this application. In some embodiments, the second support plate 44 and the first support plate 43 are of a symmetric structure. For a basic design of a component structure of the second support plate 44, a design of a connection relationship between components, and a design of a connection relationship between a component and another structure other than the component, refer to a related solution of the first support plate 43. In addition, the second support plate 44 and the first support plate 43 are allowed to be slightly different in detailed structures or position arrangements of components.

Refer to FIG. 41 again. When the electronic device 100 is in an unfolded state, the first fixing bracket 32 and the second fixing bracket 33 are at open positions relative to the main shaft assembly 31, and the main shaft assembly 31 is located between the first fixing bracket 32 and the second fixing bracket 33. In this case, the first support plate 43 and the second support plate 44 are unfolded relative to each other, and are at open positions.

With reference to FIG. 2, the first support plate 43 has a second support surface 305. The second support surface 305 and the first fixing surface 434 are disposed back to back. The second support surface 305 may be a plane. The second support plate 44 has a third support surface 306. The third support surface 306 may be a plane.

When the electronic device 100 is in an unfolded state, the second support surface 305 of the first support plate 43, the first support surface 304 of the main shaft assembly 31, and the third support surface 306 of the second support plate 44 jointly support the bending part 22 of the flexible display 2. Therefore, when the bending part 22 is touched, the bending part 22 is unlikely to be damaged or have a pit due to an external force touch, thereby improving reliability of the flexible display 2. For example, when the electronic device 100 is in the unfolded state, the first support surface 304 of the main shaft assembly 31, the second support surface 305 of the first support plate 43, and the third support surface 306 of the second support plate 44 are flush. In this case, flatness of the bending part 22 of the flexible display 2 is good, and user experience is high.

With reference to FIG. 4, when the electronic device 100 is in a closed state, the first support plate 43 and the second support plate 44 are located between the first housing 302 and the second housing 303, and the second support surface 305 of the first support plate 43 and the third support surface 306 of the second support plate 44 are disposed face to face. The second support surface 305 of the first support plate 43 is disposed obliquely relative to the third support surface 306 of the second support plate 44. The first support plate 43 and the second support plate 44 are approximately in a V shape. The second support surface 305 of the first support plate 43 and the third support surface 306 of the second support plate 44 support the bending part 22, so that the bending part 22 is approximately in a "water drop" shape.

The foregoing specifically describes the first connecting assembly and the second connecting assembly with reference to related accompanying drawings. The following describes the third connecting assembly in detail with reference to related accompanying drawings.

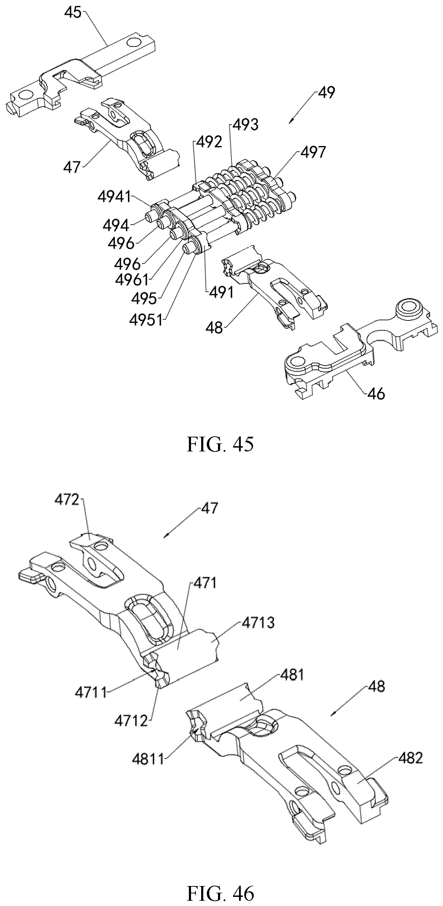

FIG. 45 is a schematic exploded view of a partial structure of the folding mechanism 301 shown in FIG. 5. The third connecting assembly includes a third fixing bracket 45, a fourth fixing bracket 46, a third swing arm 47, a fourth swing arm 48, and an auxiliary damping part 49.

In this implementation, for a basic design of a component structure of the third fixing bracket 45, a design of a connection relationship between components, and a design of a connection relationship between a component and another structure other than the component, refer to a related solution of the first fixing bracket 32. In addition, the fourth fixing bracket 46 and the third fixing bracket 45 may be of a same structure, a symmetric structure, a partially symmetric structure, or different structures. This is not strictly limited in this application. For a basic design of a component structure of the fourth fixing bracket 46, a design of a connection relationship between components, and a design of a connection relationship between a component and another structure other than the component, refer to a related solution of the second fixing bracket 33. In addition, the fourth fixing bracket 46 and the second fixing bracket 33 are allowed to be slightly different in detailed structures or position arrangements of components.

FIG. 46 is a schematic diagram of structures of the third swing arm 47 and the fourth swing arm 48 shown in FIG. 45. The third swing arm 47 includes a rotation end 471 and a sliding end 472. The third swing arm 47 may be an integrally formed mechanical part, to have high structural strength.

The rotation end 471 of the third swing arm 47 is provided with a first hole 4711. The first hole 4711 penetrates two side surfaces of the rotation end 471 of the third swing arm 47. The two side surfaces of the rotation end 471 of the third swing arm 47 are each provided with a plurality of third protrusions 4712 and a plurality of fourth protrusions 4713. The plurality of third protrusions 4712 surround the first hole 4711, and are spaced from each other. The plurality of fourth protrusions 4713 surround the first hole 4711, and are spaced from each other.

In this implementation, the fourth swing arm 48 and the third swing arm 47 may be of a same structure, a symmetric structure, a partially symmetric structure, or different structures. This is not strictly limited in this application. For a basic design of a component structure of the fourth swing arm 48 (for example, the fourth swing arm 48 includes a rotation end 481 and a sliding end 482, and the rotation end 481 of the fourth swing arm 48 is provided with a second hole 4811), a design of a connection relationship between components, and a design of a connection relationship between a component and another structure other than a component, refer to a related solution of the third swing arm 47. In addition, the fourth swing arm 48 and the third swing arm 47 are allowed to be slightly different in detail structures or position arrangements of components.

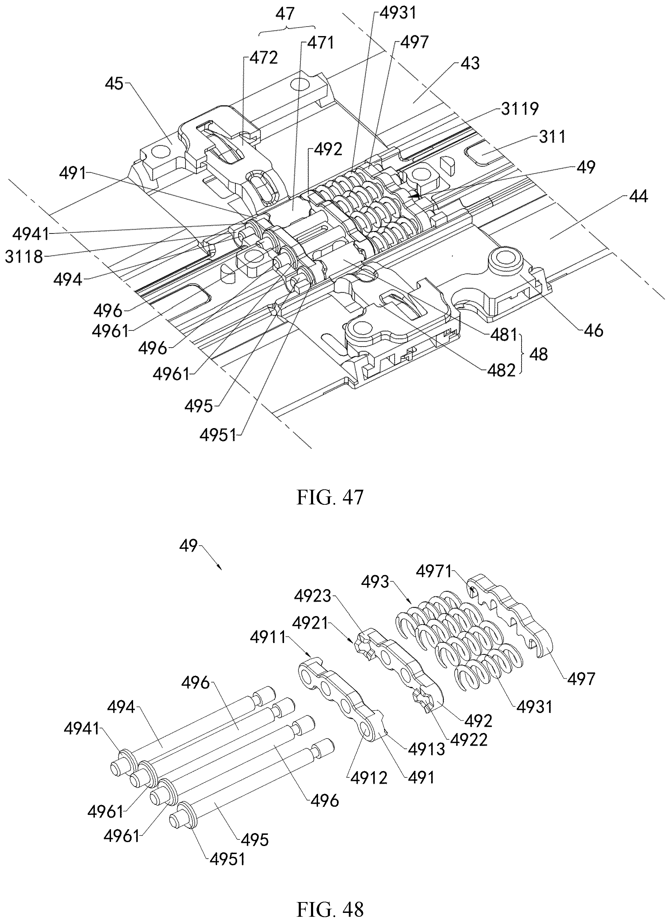

FIG. 47 is a schematic diagram of a partial structure of the folding mechanism 301 shown in FIG. 5. The sliding end 472 of the third swing arm 47 is slidably connected to the third fixing bracket 45, and is slidably and rotatably connected to the first support plate 43. It may be understood that, for a connection relationship between the third swing arm 47, the third fixing bracket 45, and the first support plate 43, refer to a connection relationship between the first swing arm 41, the first fixing bracket 32, and the first support plate 43 (refer to FIG. 41 to FIG. 43). Details are not described herein again.

In addition, the rotation end 471 of the third swing arm 47 is rotatably connected to the base 311. For example, the rotation end 471 of the third swing arm 47 is rotatably connected to the base 311 by using the auxiliary damping part 49. Specifically, the following further describes a specific structure of the auxiliary damping part 49. Details are not described herein again.

The sliding end 482 of the fourth swing arm 48 is slidably connected to the fourth fixing bracket 46, and is slidably and rotatably connected to the second support plate 44. It may be understood that, for a connection relationship between the fourth swing arm 48, the fourth fixing bracket 46, and the second support plate 44, refer to a connection relationship between the second swing arm 42, the second fixing bracket 33, and the second support plate 44 (refer to FIG. 41 to FIG. 43). Details are not described herein again.

In addition, the rotation end 481 of the fourth swing arm 48 is rotatably connected to the base 311. For example, the rotation end 481 of the fourth swing arm 48 is rotatably connected to the base 311 by using the auxiliary damping part 49. Specifically, the following further describes a specific structure of the auxiliary damping part 49. Details are not described herein again.

With reference to FIG. 45, FIG. 48 is a schematic exploded view of the auxiliary damping part 49 shown in FIG. 45. The auxiliary damping part 49 includes a first blocker 491, a second blocker 492, an elastic part 493, a first rotatable connecting shaft 494, a second rotatable connecting shaft 495, a plurality of third rotatable connecting shaft 496, and a fixing plate 497. The first blocker 491, the second blocker 492, and the fixing plate 497 are arranged in sequence, and are disposed opposite to each other. The second blocker 492 is located between the first blocker 491 and the fixing plate 497. The elastic part 493 is located between the second blocker 492 and the fixing plate 497.

For example, a side of the first blocker 491 is provided with a plurality of fifth protrusion groups 4911. The first blocker 491 further includes a plurality of first penetrating holes 4912, and the plurality of first penetrating holes 4912 are spaced from each other. Each fifth protrusion group 4911 may include a plurality of fifth protrusions 4913, the plurality of fifth protrusions 4913 are arranged in a ring shape and are spaced away from each other, the plurality of fifth protrusions 4913 are disposed around one first penetrating hole 4912, and a blocking slot is formed between two adjacent fifth protrusions 4913. The first blocker 491 may be an integrally formed mechanical part, to have high structural strength.

For example, a side of the second blocker 492 is provided with a plurality of sixth protrusion groups 4921. The second blocker 492 further includes a plurality of second penetrating holes 4922, and the plurality of second penetrating holes 4922 are spaced from each other. The plurality of sixth protrusion groups 4921 are disposed in a one-to-one correspondence with the plurality of second penetrating holes 4922. Each sixth protrusion group 4921 may include a plurality of sixth protrusions 4923, the plurality of sixth protrusions 4923 are arranged in a ring shape and are spaced away from each other, the plurality of sixth protrusions 4923 are disposed around the second penetrating hole 4922, and a blocking slot is formed between two adjacent sixth protrusions 4923. The second blocker 492 may be an integrally formed mechanical part, to have high structural strength.

For example, the fixing plate 497 may be of a plate body structure. The fixing plate 497 includes a plurality of third penetrating holes 4971, and the plurality of third penetrating holes 4971 are spaced from each other. For example, the plurality of first penetrating holes 4912, the plurality of second penetrating holes 4922, and the plurality of third penetrating holes 4971 may have a same arrangement shape and arrangement spacing.

Refer to FIG. 48 again. With reference to FIG. 45 to FIG. 47, the elastic part 493 includes a plurality of springs 4931. The first rotatable connecting shaft 494 is inserted into the first blocker 491, the rotation end 471 of the third swing arm 47, the second blocker 492, one spring 4931, and the fixing plate 497. In this way, a part of the second blocker 492 is located on a side of the rotation end 471 of the third swing arm 47. A part of the fixing plate 497 is located on a side that is of the second blocker 492 and that is away from the rotation end 481 of the third swing arm 47. The first blocker 491 and the fixing plate 497 are fixedly connected to the first rotatable connecting shaft 494. The rotation end 481 of the third swing arm 47 and the rotation end 471 of the third swing arm 47 are slidably connected to the first rotatable connecting shaft 494.

The first rotatable connecting shaft 494 passes through one first penetrating hole 4912 of the first blocker 491, the first hole 4711 of the third swing arm 47, one second penetrating hole 4922 of the second blocker 492, inner space of one spring 4931, and one third penetrating hole 4971 of the fixing plate 497. The first rotatable connecting shaft 494 includes a first end part and a second end part that are disposed back to back. The first end part of the first rotatable connecting shaft 494 is close to the first blocker 491 and protrudes from the first blocker 491. The second end part of the first rotatable connecting shaft 494 is close to the fixing plate 497 and protrudes from the fixing plate 497. For example, a limiting flange 4941 may be disposed on the first end part of the first rotatable connecting shaft 494, the limiting flange 4941 is located on a side that is of the first blocker 491 and that is away from the second blocker 492, and the limiting flange 4941 may abut against the first blocker 491 for limitation. The second end part of the first rotatable connecting shaft 494 may be fixedly connected to the fixing plate 497 through welding, bonding, or the like. The spring 4931 is in a compressed state.

For example, there are two third rotatable connecting shafts 496. The third rotatable connecting shafts 496 are disposed in a one-to-one correspondence with some springs 4931 in the plurality of springs 4931. The third rotatable connecting shaft 496 is inserted into the first blocker 491, the second blocker 492, another spring 4931, and the fixing plate 497. The first blocker 491 and the fixing plate 497 are fixedly connected to the third rotatable connecting shaft 496. The second blocker 492 is slidably connected to the third rotatable connecting shaft 496. The third rotatable connecting shaft 496 passes through another second penetrating hole 4922 of the first blocker 491, another second penetrating hole 4922 of the second blocker 492, inner space of another spring 4931, and another third penetrating hole 4971 of the fixing plate 497.

The third rotatable connecting shaft 496 includes a first end part and a second end part that are disposed back to back. The first end part of the third rotatable connecting shaft 496 is close to the first blocker 491 and protrudes from the first blocker 491. The second end part of the third rotatable connecting shaft 496 is close to the fixing plate 497 and protrudes from the fixing plate 497. For example, a limiting flange 4961 may be disposed on the first end part of the third rotatable connecting shaft 496, the limiting flange 4961 is located on a side that is of the first blocker 491 and that is away from the second blocker 492, and the limiting flange 4961 may abut against the first blocker 491 for limitation. The second end part of the third rotatable connecting shaft 496 may be fixedly connected to the fixing plate 497 through welding, bonding, or the like. The spring 4931 is in a compressed state.

The second rotatable connecting shaft 495 is inserted into the first blocker 491, the rotation end 481 of the fourth swing arm 48, the second blocker 492, another spring 4931, and the fixing plate 497. In this way, a part of the second blocker 492 is located on a side of the rotation end 481 of the fourth swing arm 48. Apart of the fixing plate 497 is located on a side that is of the second blocker 492 and that is away from the rotation end 481 of the fourth swing arm 48. The first blocker 491 and the fixing plate 497 are fixedly connected to the second rotatable connecting shaft 495. The rotation end 481 of the third swing arm 47 and the second blocker 492 are slidably connected to the second rotatable connecting shaft 495.

The second rotatable connecting shaft 495 passes through another first penetrating hole 4912 of the first blocker 491, t second hole 4811 of the fourth swing arm 48, another second penetrating hole 4922 of the second blocker 492, inner space of another spring 4931, and another third penetrating hole 4971 of the fixing plate 497. The second rotatable connecting shaft 495 includes a first end part and a second end part that are disposed back to back. The first end part of the second rotatable connecting shaft 495 is close to the first blocker 491 and protrudes from the first blocker 491. The second end part of the second rotatable connecting shaft 495 is close to the fixing plate 497 and protrudes from the fixing plate 497. For example, a limiting flange 4951 may be disposed on the first end part of the second rotatable connecting shaft 495, the limiting flange 4951 is located on a side that is of the first blocker 491 and that is away from the second blocker 492, and the limiting flange 4951 may abut against the first blocker 491 for limitation. The second end part of the second rotatable connecting shaft 495 may be fixedly connected to the fixing plate 497 through welding, bonding, or the like. The spring 4931 is in a compressed state.

Refer to FIG. 46 to FIG. 48. A plurality of third protrusions 4712 of the third swing arm 47 and a plurality of fifth protrusions 4913 of one fifth protrusion group 4911 are interleaved to form cam structures. A plurality of fourth protrusions 4713 of the third swing arm 47 and a plurality of sixth protrusions 4723 of one sixth protrusion group 4721 are interleaved to form cam structures.

For a connection relationship between the fourth swing arm 48 and the first blocker 491 and the second blocker 492, refer to a connection relationship between the third swing arm 47 and the first blocker 491 and the second blocker 492. Details are not described herein again. In this way, the rotation end 471 of the third swing arm 47 and the rotation end 481 of the fourth swing arm 48 are located between the first blocker 491 and the second blocker 492.

It may be understood that, both the rotation end 471 of the third swing arm 47 and the rotation end 481 of the fourth swing arm 48 form a cam structure with each of the second blocker 492 and the first blocker 491, so that the third swing arm 47 and the fourth swing arm 48 can stay at some positions.

In addition, the elastic part 493 is in a compressed state, and elastic force generated by the elastic part 493 may abut the second blocker 492 toward the rotation end 471 of the third swing arm 47 and the rotation end 481 of the fourth swing arm 48. In this case, the second blocker 492 cooperates with the first blocker 491 to press the rotation end 471 of the third swing arm 47 and the rotation end 481 of the fourth swing arm 48, so that a cam structure between the rotation end 471 of the third swing arm 47 and the rotation end 481 of the fourth swing arm 48 and each of the second blocker 492, and the first blocker 491 is stable.

When the rotation end 471 of the third swing arm 47 and the rotation end 481 of the fourth swing arm 48 rotate relative to the second blocker 492 and the first blocker 491, relative positions of the plurality of third protrusions 4712 and the plurality of fifth protrusions 4913 can be changed to form different cam structures, and relative positions of the plurality of fourth protrusions 4713 and the plurality of sixth protrusions 4723 can be changed to form different cam structures.

Refer to FIG. 47 again. Two ends of the first rotatable connecting shaft 494 are mounted in a corresponding group of first rotatable connecting slots and second rotatable connecting slots 3119. Two ends of the second rotatable connecting shaft 495 are mounted in another corresponding group of first rotatable connecting slots and second rotatable connecting slots. Two ends of the third rotatable connecting shaft 496 are mounted in another corresponding group of first rotatable connecting slots and second rotatable connecting slots. The first rotatable connecting shaft 494, the second rotatable connecting shaft 495, and the third rotatable connecting shaft 496 may all slide relative to the base 311.

The first blocker 491, the rotation end 471 of the third swing arm 47, the rotation end 481 of the fourth swing arm 48, the second blocker 492, and the fixing plate 497 may all be disposed on the base 311. The rotation end 471 of the third swing arm 47 is rotatably connected to the base 311 by using the first rotatable connecting shaft 494. The rotation end 481 of the fourth swing arm 48 is rotatably connected to the base 311 by using the second rotatable connecting shaft 495. The first blocker 491, the second blocker 492, and the fixing plate 497 may all be slidably connected to the base 311. One end of the elastic part 493 abuts against the fixing plate 497, and the other end of the elastic part 493 abuts against the second blocker 492.

It may be understood that, with reference to FIG. 10d, when the third outer housing 314 is fixedly connected to the middle part 311b of the base 311, the third outer housing 314 and the base 311 may enable each part of the auxiliary damping part 49 to be limited in a Z-axis direction.

It may be understood that the auxiliary damping part 49 in this application may have a plurality of implementation structures. In some other embodiments, the auxiliary damping part 49 may also include a plurality of synchronous gears. A quantity of synchronous gears is the same as that of the third rotatable connecting shafts 496. The plurality of synchronous gears are disposed in a one-to-one correspondence with the plurality of third rotatable connecting shafts 496. Each synchronous gear is inserted into one third rotatable connecting shaft 496 and rotates relative to the third rotatable connecting shaft 496. The rotation end 471 of the third swing arm 47 is engaged with the rotation end 481 of the fourth swing arm 48 by using the synchronous gear. In some other embodiments, a position of the third swing arm 47 and a position of the fourth swing arm 48 are indirectly limited by limiting a position of the synchronous gear. For example, a cam structure is formed between the second blocker 492 and the first blocker 491 and the synchronous gear, and there is no cam structure between the rotation end 471 of the third swing arm 47 and the rotation end 481 of the fourth swing arm 48 and each of the second blocker 492 and the first blocker 491. In some other embodiments, the elastic part 493 may also use another structure, for example, an elastic rubber block. The foregoing embodiment is an example structure of the auxiliary damping part 49. The auxiliary damping part 49 may also have another implementation structure. This is not strictly limited in this application.

The foregoing specifically describes the folding mechanism 301 and the electronic device 100 with reference to related accompanying drawings. The folding mechanism 301 may be applied to the electronic device 100. The folding mechanism 301 can enable the flexible display 2 to be unfolded or folded, so that the electronic device 100 can be switched between an unfolded state and a closed state. In a process of unfolding or folding the folding mechanism 301, a risk of pulling or squeezing the flexible display 2 can be reduced, to protect the flexible display 2, improve reliability of the flexible display 2, and enable the flexible display 2 to have a long service life.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (100), comprising a folding mechanism (301), a first housing (302), and a second housing (303), wherein the folding mechanism (301) is connected between the first housing (302) and the second housing (303);
the folding mechanism (301) comprises a main shaft assembly (31), a first connecting arm (34), a first pin shaft (361), a first gear (363), a first fitting part (365), a second fitting part (366), a third fitting part (367), and a first elastic part (369a), wherein the first connecting arm (34) comprises a sliding end (34a) and a rotation end (34b), the sliding end (34a) of the first connecting arm (34) is slidably connected to the first housing (302), and the rotation end (34b) of the first connecting arm (34) is rotatably connected to the main shaft assembly (31);
the first pin shaft (361) is rotatably connected to the main shaft assembly (31), the first gear (363) and the third fitting part (367) are fixedly connected to the first pin shaft (361) and are spaced from each other, the first gear (363) is engaged with the rotation end (34b) of the first connecting arm (34), the first fitting part (365) and the second fitting part (366) are located between the first gear (363) and the third fitting part (367), and are both slidably connected to the first pin shaft (361), the first fitting part (365) and the first gear (363) form a cam structure, the second fitting part (366) and the third fitting part (367) form a cam structure, one end of the first elastic part (369a) abuts against the first fitting part (365), the other end of the first elastic part (369a) abuts against the second fitting part (366), and the first elastic part (369a) is in a compressed state; and
in a process of folding or unfolding the electronic device (100), the first fitting part (365) and the second fitting part (366) slide relative to the first pin shaft (361), and a sliding direction of the first fitting part (365) is opposite to a sliding direction of the second fitting part (366).

2. The electronic device (100) according to claim 1, wherein the second fitting part (366) comprises a second bump (3664), and the third fitting part (367) comprises a third bump (3674); and
that the second fitting part (366) and the third fitting part (367) form a cam structure comprises: the second fitting part (366) and the third fitting part (367) form the cam structure by using the second bump (3664) and the third bump (3674).

3. The electronic device (100) according to claim 1 or 2, wherein in the process of folding or unfolding the electronic device (100), the rotation end (34b) of the first connecting arm (34), the first gear (363), the third fitting part (367), and the first pin shaft (361) all rotate relative to the main shaft assembly (31).

4. The electronic device (100) according to claim 3, wherein the third fitting part (367) is provided with a third pin shaft hole (3673), the third pin shaft hole (3673) comprises a first wall (3673a) and a second wall (3673b) that are disposed opposite to each other, and a third wall (3673c) and a fourth wall (3673d) that are disposed opposite to each other, wherein the third wall (3673c) and the fourth wall (3673d) are connected between the first wall (3673a) and the second wall (3673b), both the first wall (3673a) and the second wall (3673b) are planes, and both the third wall (3673c) and the fourth wall (3673d) are arc surfaces; and
the first pin shaft (361) is inserted into the third pin shaft hole (3673), and a part of a surface of the first pin shaft (361) fits the first wall (3673a), the second wall (3673b), the third wall (3673c), and the fourth wall (3673d) of the third pin shaft hole (3673).

5. The electronic device (100) according to any one of claims 1 to 4, wherein the folding mechanism (301) further comprises a second connecting arm (35), a second pin shaft (362), a second gear (364), a fourth fitting part (368), and a second elastic part (369b), wherein the second connecting arm (35) comprises a sliding end (35a) and a rotation end (35b), the sliding end (35a) of the second connecting arm (35) is slidably connected to the second housing (303), and the rotation end (35b) of the second connecting arm (35) is rotatably connected to the main shaft assembly (31); and
the second pin shaft (362) is rotatably connected to the main shaft assembly (31), and is located between the first pin shaft (361) and the rotation end (35b) of the second connecting arm (35), the first fitting part (365) and the second fitting part (366) are further slidably connected to the second pin shaft (362), the second gear (364) and the fourth fitting part (368) are fixedly connected to the second pin shaft (362) and are spaced from each other, the second gear (364) is engaged with both the first gear (363) and the rotation end (35b) of the second connecting arm (35), the second gear (364) is located on a side that is of the first fitting part (365) and that is away from the second fitting part (366), the second gear (364) and the first fitting part (365) form a cam structure, the fourth fitting part (368) is located on a side that is of the second fitting part (366) and that is away from the first fitting part (365), the fourth fitting part (368) and the second fitting part (366) form a cam structure, one end of the second elastic part (369b) abuts against the first fitting part (365), the other end of the second elastic part (369b) abuts against the second fitting part (366), and the second elastic part (369b) is in a compressed state.

6. The electronic device (100) according to any one of claims 1 to 5, wherein the main shaft assembly (31) comprises a base (311) and a first outer housing (312), the base (311) is provided with a first hinge groove (3116) and a second hinge groove (3117) that are disposed opposite to each other, one end of the first pin shaft (361) is rotatably connected to the first hinge groove (3116), and the other end is rotatably connected to the second hinge groove (3117); and
accommodating space (312a) is enclosed by the first outer housing (312) and the base (311), and the rotation end (34b) of the first connecting arm (34), the first pin shaft (361), the first gear (363), the first fitting part (365), the second fitting part (366), the third fitting part (367), and the first elastic part (369a) are disposed in the accommodating space (312a).

7. The electronic device (100) according to claim 6, wherein the first pin shaft (361) comprises a first limiting flange (3612), the first gear (363) abuts against the first limiting flange (3612), the first limiting flange (3612) abuts against a first wall surface (310a) of the base (311), the first wall surface (310a) is connected to a groove wall of the first hinge groove (3116), the third fitting part (367) abuts against a second wall surface (3 10b) of the base (311), and the second wall surface (3 10b) is connected to a groove wall of the second hinge groove (3117).

8. The electronic device (100) according to claim 6 or 7, wherein the folding mechanism (301) further comprises a fastener (50), the fastener (50) is fixedly connected between the base (311) and the first outer housing (312), the fastener (50) is provided with a first limiting hole (51), and at least a part of the first pin shaft (361) is inserted into the first limiting hole (51), and rotates relative to the first limiting hole (51).

9. The electronic device (100) according to any one of claims 5 to 8, wherein the folding mechanism (301) further comprises a first fixing bracket (32), a second fixing bracket (33), a first transmission arm (376), a first connecting rod (377), a second transmission arm (378), and a second connecting rod (379), wherein the first fixing bracket (32) is fastened to the first housing (302), and the second fixing bracket (33) is fastened to the second housing (303);
the first transmission arm (376) is rotatably and slidably connected to the main shaft assembly (31), the first transmission arm (376) is connected to the rotation end (34b) of the first connecting arm (34) through a spiral pair structure, one end of the first connecting rod (377) is rotatably connected to the first transmission arm (376), and the other end of the first connecting rod (377) is rotatably connected to the first fixing bracket (32); and
the second transmission arm (378) is rotatably and slidably connected to the main shaft assembly (31), the second transmission arm (378) is connected to the rotation end (35b) of the second connecting arm (35) through a spiral pair structure, one end of the second connecting rod (379) is rotatably connected to the second transmission arm (378), and the other end of the second connecting rod (379) is rotatably connected to the second fixing bracket (33).

10. The electronic device (100) according to claim 9, wherein the folding mechanism (301) further comprises a sliding member (375), a first spiral rod (371), and a second spiral rod (372), wherein
the sliding member (375) is slidably connected to the main shaft assembly (31), the first transmission arm (376) is rotatably connected to the sliding member (375), and the sliding member (375) has a first convex part (3756) and a second convex part (3757) that are disposed back to back;
the first spiral rod (371) is rotatably connected to the main shaft assembly (31), one end of the first spiral rod (371) is fastened to the rotation end (34b) of the first connecting arm (34), the first spiral rod (371) is provided with a first spiral groove (3714), the first spiral groove (3714) spirally extends in an extension direction of the main shaft assembly (31), and at least a part of the first convex part (3756) is slidably mounted in the first spiral groove (3714); and
the second spiral rod (372) is rotatably connected to the main shaft assembly (31), one end of the second spiral rod (372) is fastened to the rotation end (35b) of the second connecting arm (35), the second spiral rod (372) is provided with a second spiral groove (3724), the second spiral groove (3724) spirally extends in the extension direction of the main shaft assembly (31), and at least a part of the second convex part (3757) is slidably connected in the second spiral groove (3724).

11. The electronic device (100) according to claim 9 or 10, wherein the folding mechanism (301) further comprises a first swing arm (41) and a second swing arm (42), wherein
the first swing arm (41) comprises a rotation end (411) and a sliding end (412), the rotation end (411) of the first swing arm (41) is rotatably connected to the main shaft assembly (31), and the sliding end (412) of the first swing arm (41) is slidably connected to the first fixing bracket (32); and the second swing arm (42) comprises a rotation end (421) and a sliding end (422), the rotation end (411) of the second swing arm (42) is rotatably connected to the main shaft assembly (31), and the sliding end (422) of the second swing arm (42) is slidably connected to the second fixing bracket (33).

12. The electronic device (100) according to claim 11, wherein the folding mechanism (301) further comprises a first support plate (43) and a second support plate (44), wherein
the first support plate (43) is slidably and rotatably connected to the sliding end (412) of the first swing arm (41), the first support plate (43) is rotatably connected to the first fixing bracket (32), the second support plate (44) is slidably and rotatably connected to the sliding end (422) of the second swing arm (42), and the second support plate (44) is rotatably connected to the second fixing bracket (33); and
when the electronic device (100) is in an unfolded state, the first support plate (43) and the second support plate (44) are located on two sides of the main shaft assembly (31); and when the electronic device (100) is in a closed state, the first support plate (43) and the second support plate (44) are disposed opposite to each other.

13. The electronic device (100) according to claim 12, wherein the folding mechanism (301) further comprises a third fixing bracket (45), a fourth fixing bracket (46), a third swing arm (47), a fourth swing arm (48), a second blocker (492), a plurality of elastic parts (493), and a fixing plate (497), wherein the third fixing bracket (45) is fastened to the first housing (302), and the fourth fixing bracket (46) is fastened to the second housing (303);
a sliding end (472) of the third swing arm (47) is slidably connected to the third fixing bracket (45), a rotation end (471) of the third swing arm (47) is rotatably connected to the main shaft assembly (31), a sliding end (482) of the fourth swing arm (48) is slidably connected to the fourth fixing bracket (46), and a rotation end (481) of the fourth swing arm (48) is rotatably connected to the main shaft assembly (31);
the second blocker (492) is located on a side of the rotation end (471) of the third swing arm (47) and a side of the rotation end (481) of the fourth swing arm (48), the second blocker (492) is slidably connected to the main shaft assembly (31), and forms a cam structure with each of the rotation end (471) of the third swing arm (47) and the rotation end (481) of the fourth swing arm (48), the fixing plate (497) is located on a side that is of the second blocker (492) and that is away from the rotation end (471) of the third swing arm (47) and the rotation end (481) of the fourth swing arm (48), and the fixing plate (497) is slidably connected to the main shaft assembly (31); and
one end of each of the plurality of elastic parts (493) abuts against the second blocker (492), the other end of each of the plurality of elastic parts (493) abuts against the fixing plate (497), and the elastic part (493) is in a compressed state.

14. The electronic device (100) according to claim 13, wherein the folding mechanism (301) further comprises a first blocker (491), a first rotatable connecting shaft (494), and a second rotatable connecting shaft (495), the rotation end (471) of the third swing arm (47) and the rotation end (481) of the fourth swing arm (48) are located between the first blocker (491) and the second blocker (492), and the first blocker (491) forms a cam structure with each of the rotation end (471) of the third swing arm (47) and the rotation end (481) of the fourth swing arm (48);
the first blocker (491), the first rotatable connecting shaft (494), and the second rotatable connecting shaft (495) are all slidably connected to the main shaft assembly (31), the first rotatable connecting shaft (494) sequentially passes through the first blocker (491), the rotation end (471) of the third swing arm (47), the second blocker (492), one elastic part (493), and the fixing plate (497), the first blocker (491) and the fixing plate (497) are fastened to the first rotatable connecting shaft (494), and the rotation end (471) of the third swing arm (47) and the second blocker (492) are slidably connected to the first rotatable connecting shaft (494); and
the second rotatable connecting shaft (495) sequentially passes through the first blocker (491), the rotation end (481) of the fourth swing arm (48), the second blocker (492), one elastic part (493), and the fixing plate (497), the first blocker (491) and the fixing plate (497) are further fastened to the second rotatable connecting shaft (495), and the rotation end (481) of the fourth swing arm (48) and the second blocker (492) are slidably connected to the second rotatable connecting shaft (495).

15. A folding mechanism (301), comprising a main shaft assembly (31), a first connecting arm (34), a first pin shaft (361), a first gear (363), a first fitting part (365), a second fitting part (366), a third fitting part (367), and a first elastic part (369a), wherein a rotation end (34b) of the first connecting arm (34) is rotatably connected to the main shaft assembly (31);
the first pin shaft (361) is rotatably connected to the main shaft assembly (31), the first gear (363) and the third fitting part (367) are fixedly connected to the first pin shaft (361) and are spaced from each other, the first gear (363) is engaged with the rotation end (34b) of the first connecting arm (34), the first fitting part (365) and the second fitting part (366) are located between the first gear (363) and the third fitting part (367), and are both slidably connected to the first pin shaft (361), the first fitting part (365) and the first gear (363) form a cam structure, the second fitting part (366) and the third fitting part (367) form a cam structure, one end of the first elastic part (369a) abuts against the first fitting part (365), the other end of the first elastic part (369a) abuts against the second fitting part (366), and the first elastic part (369a) is in a compressed state; and
in a process of folding or unfolding the folding mechanism (301), the first fitting part (365) and the second fitting part (366) slide relative to the first pin shaft (361), and a sliding direction of the first fitting part (365) is opposite to a sliding direction of the second fitting part (366).

16. The folding mechanism (301) according to claim 15, wherein the second fitting part (366) comprises a second bump (3664), and the third fitting part (367) comprises a third bump (3674); and
that the second fitting part (366) and the third fitting part (367) form a cam structure comprises: the second fitting part (366) and the third fitting part (367) form the cam structure by using the second bump (3664) and the third bump (3674).

17. The folding mechanism (301) according to claim 15 or 16, wherein in the process of folding or unfolding the electronic device (100), the rotation end (34b) of the first connecting arm (34), the first gear (363), the third fitting part (367), and the first pin shaft (361) rotate relative to the main shaft assembly (31).

18. The folding mechanism (301) according to claim 17, wherein the third fitting part (367) is provided with a third pin shaft hole (3673), the third pin shaft hole (3673) comprises a first wall (3673a) and a second wall (3673b) that are disposed opposite to each other, and a third wall (3673c) and a fourth wall (3673d) that are disposed opposite to each other, wherein the third wall (3673c) and the fourth wall (3673d) are connected between the first wall (3673a) and the second wall (3673b), both the first wall (3673a) and the second wall (3673b) are planes, and both the third wall (3673c) and the fourth wall (3673d) are arc surfaces; and
the first pin shaft (361) is inserted into the third pin shaft hole (3673), and a part of a surface of the first pin shaft (361) fits the first wall (3673a), the second wall (3673b), the third wall (3673c), and the fourth wall (3673d) of the third pin shaft hole (3673).

19. The folding mechanism (301) according to any one of claims 15 to 18, wherein the folding mechanism (301) further comprises a second connecting arm (35), a second pin shaft (362), a second gear (364), a fourth fitting part (368), and a second elastic part (369b), wherein a rotation end (35b) of the second connecting arm (35) is rotatably connected to the main shaft assembly (31); and
the second pin shaft (362) is rotatably connected to the main shaft assembly (31), and is located between the first pin shaft (361) and the rotation end (35b) of the second connecting arm (35), the first fitting part (365) and the second fitting part (366) are further slidably connected to the second pin shaft (362), the second gear (364) and the fourth fitting part (368) are fixedly connected to the second pin shaft (362) and are spaced from each other, the second gear (364) is engaged with both the first gear (363) and the rotation end (35b) of the second connecting arm (35), the second gear (364) is located on a side that is of the first fitting part (365) and that is away from the second fitting part (366), the second gear (364) and the first fitting part (365) form a cam structure, the fourth fitting part (368) is located on a side that is of the second fitting part (366) and that is away from the first fitting part (365), the fourth fitting part (368) and the second fitting part (366) form a cam structure, one end of the second elastic part (369b) abuts against the first fitting part (365), the other end of the second elastic part (369b) abuts against the second fitting part (366), and the second elastic part (369b) is in a compressed state.

20. The folding mechanism (301) according to any one of claims 15 to 19, wherein the main shaft assembly (31) comprises a base (311) and a first outer housing (312), the base (311) is provided with a first hinge groove (3116) and a second hinge groove (3117) that are disposed opposite to each other, one end of the first pin shaft (361) is rotatably connected to the first hinge groove (3116), and the other end is rotatably connected to the second hinge groove (3117); and
accommodating space (312a) is enclosed by the first outer housing (312) and the base (311), and the rotation end (34b) of the first connecting arm (34), the first pin shaft (361), the first gear (363), the first fitting part (365), the second fitting part (366), the third fitting part (367), and the first elastic part (369a) are disposed in the accommodating space (312a).

21. The folding mechanism (301) according to claim 20, wherein the first pin shaft (361) comprises a first limiting flange (3612), the first gear (363) abuts against the first limiting flange (3612), the first limiting flange (3612) abuts against a first wall surface (310a) of the base (311), the first wall surface (310a) is connected to a groove wall of the first hinge groove (3116), the third fitting part (367) abuts against a second wall surface (310b) of the base (311), and the second wall surface (310b) is connected to a groove wall of the second hinge groove (3117).

22. The folding mechanism (301) according to claim 20 or 21, wherein the folding mechanism (301) further comprises a fastener (50), the fastener (50) is fixedly connected between the base (311) and the first outer housing (312), the fastener (50) is provided with a first limiting hole (51), and at least a part of the first pin shaft (361) is inserted into the first limiting hole (51), and rotates relative to the first limiting hole (51).
